# EUROPÄISCHE PATENTANMELDUNG

(11) **EP 3 968 258 A1**
(43) Veröffentlichungstag der Anmeldung: **16.03.2022**
(21) Anmeldenummer: 21196897.9
(22) Anmeldetag: 15.09.2021
(51) Int. Cl.: G06Q 30/02

(54) **VERFAHREN ZUR HYPERLOKALEN AUSGABE VON INFORMATIONEN**

(30) Priorität: 15.09.2020 EP 20196208
(71) Anmelder: Lokalmatador Media Systems GmbH, 68789 St. Leon-Rot (DE)
(72) Erfinder: Schmidt, Michael, 68789 St. Leon-Rot (DE)
(74) Vertreter: Stolmár & Partner Patentanwälte PartG mbB

(57) **Zusammenfassung**

Die Erfindung betrifft ein computerimplementiertes Verfahren zur hyperlokalen Ausgabe von Informationen. In einer Nutzerprofildatenbank werden Nutzerprofile von Nutzern hinterlegt. Das Nutzerprofil umfasst zumindest ein kategorisiertes Nutzerauswahlkriterium, welches Interessen des Nutzers entspricht. Ferner werden in einer Anbieterdatenbank Anbieterprofile hinterlegt. Das Anbieterprofil umfasst eine Information über die Geolokation des Anbieters sowie zumindest ein kategorisiertes Anbieterauswahlkriterium. Das Anbieterkriterium entspricht Interessensgebieten, in welche Informationen, wie beispielsweise Angebote des Anbieters, eingeordnet werden. Mit dem Anbieterprofil ist eine hyperlokale Information verknüpft, beispielsweise ein Angebot des Anbieters. Zunächst wird die Geolokation des Nutzers bestimmt und dann Anbieter ermittelt, welche in einem hyperlokalen Bereich um den Nutzer angeordnet sind. Es erfolgt dann ein Abgleich zwischen kategorisierten Nutzerauswahlkriterien und kategorisierten Anbieterauswahlkriterien. Korrelieren kategorisierte Nutzerauswahlkriterien und kategorisierte Anbieterauswahlkriterien wird die hyperlokale Information an den Nutzer ausgegeben. Da sich der Nutzer während der Ausgabe in unmittelbarer Nähe des Anbieters befindet, kann der Nutzer unmittelbar Kontakt zum Anbieter aufnehmen und das Angebot des Anbieters wahrnehmen.

## Beschreibung

Die Erfindung betrifft ein computerimplementiertes Verfahren zur hyperlokalen Ausgabe von Informationen.

Der Auftritt und das Geschäftsfeld traditioneller Printmedien haben sich mit zunehmender Digitalisierung wesentlich verändert. Waren zum Ende des letzten Jahrhunderts Anzeigen ein Wesentlicher Bestandteil und eine wesentliche Umsatzquelle von Printmedien hat sich dieser Bereich inzwischen zu einem erheblichen Anteil hin zu digitalen Medien verschoben. Neue Alternativangebote, wie spezialisierte Portale, in denen bestimmte Waren, wie Automobile oder Immobilien angeboten werden, stehen zur Verfügung und stehen im Wettbewerb zu klassischen Printmedien um Anzeigenkunden. Dies betrifft nicht nur Printmedien, wie Zeitungen und Zeitschriften sondern auch Anzeigenblätter bis hin zu offiziellen Verlautbarungen, wie Amtsblättern.

Parallel dazu hat sich auch das Verhalten der Nutzer verändert. Mobile Endgeräte, wie Smartphones oder Tablets ermöglichen es, auch von unterwegs Informationen abzurufen oder beispielsweise über soziale Medien mit anderen Marktteilnehmern in Kontakt zu treten. Die Nutzer erwarten, dass Informationen schnell verfügbar sind und ohne Aufwand zielgerichtet eingeholt werden können.

Durch die Verwendung digitaler Medien bietet sich auf der Seite der Anbieter die Möglichkeit, das Warenangebot besser auf die Erwartungen von Nutzern bzw. potentiellen Kunden abzustimmen. Bei Portalen zum Verkauf von Waren, wie Büchern, Musikstücken oder auch Waren des Hausgebrauchs, wie Kleidung, Schuhen, Einrichtungsgegenständen, fallen durch die große Anzahl von Nutzern große Datenmengen an, die das Verhalten des einzelnen Nutzers wiedergeben. Diese Daten können genutzt werden, um die angebotenen Waren besser auf die Erwartungen der Nutzer abzustimmen. So können beispielsweise dem Nutzer neben den von ihm ausgewählten Waren weitere Waren zum Kauf vorgeschlagen werden. Die Information, welche Waren neben der vom Nutzer ausgewählten Ware vorgeschlagen werden, wird dabei aus der Vielzahl von Daten, die bei derartigen Portalen zum Nutzerverhalten vorliegen, ermittelt.

Printmedien mit stark lokalem Bezug, wie Anzeigenblätter, Amtsblätter oder auch stark lokal geprägte Zeitungen haben im Vergleich zu überregionalen Zeitungen und über das Internet zugänglichen Portalen ein relativ geringes Verbreitungsgebiet mit vergleichsweise geringer Auflage bzw. niedrigen Nutzerzahlen. Übliche Auflagen von Anzeigenblättern bewegen sich bei der gedruckten Auflage im Bereich von etwa 100.000 bis etwa 2,5 Millionen Exemplaren. Auch diese Medien sind mit den Herausforderungen und Möglichkeiten konfrontiert, die sich durch die Digitalisierung ergeben. Verlage für Anzeigenblätter haben inzwischen Internetauftritte entwickelt, in welche sich ein deutlicher Anteil des Anzeigengeschäfts verlagert hat. Die täglichen Zugriffszahlen auf derartige Portale liegen meist im Bereich von etwa 0,5 bis 3 Millionen.

Wegen der vergleichsweise niedrigen Nutzerzahlen lassen sich jedoch Verfahren, wie sie beispielsweise für Verkaufsportale mit großen Nutzerzahlen entwickelt wurden, nur schwierig auf Anwendungen in eng begrenzten Gebieten übertragen. Es sind daher alternative Verfahren wünschenswert, die auch bei geringen Nutzerzahlen, wie sie insbesondere bei einem eng umrissenen Verbreitungsgebiet auftreten, eine auf einen Nutzer abgestellte zielgerichtete Bereitstellung von Informationen ermöglichen.

Anzeigenblätter haben traditionell einen stark lokalen Bezug. Sie dienen als Werbemedium für lokale Anbieter, wie örtliche Handwerksbetriebe, Möbelhändler, oder Lebensmittelgeschäfte. Sie dienen als Organ zur Veröffentlichung von Kleinanzeigen mit stark lokalem Bezug. Außerdem werden in Anzeigenblättern oft Nachrichten mit stark lokalem Bezug veröffentlicht, wie Nachrichten aus Vereinen, wie Sportvereinen, Nachrichten aus den Kirchengemeinden, oder auch Veranstaltungshinweise bzw. Berichte über lokale kulturelle Veranstaltungen. Das Verbreitungsgebiet solcher Anzeigenblätter ist meist sehr kleinteilig. So ist es beispielsweise in Großstädten üblich, in einzelnen Stadtvierteln lokale Anzeigenblätter zu veröffentlichen. Auch in Gebieten mit kleineren Städten ist es üblich, für benachbarte Städte oder Gemeinden jeweils ein eigenes Anzeigenblatt zu veröffentlichen.

Anzeigenblätter verfügen also über eine hohe Menge von Informationen mit stark lokalem Bezug. Auch die Kunden sowohl auf der Seite der Anzeigenkunden als auch auf der Seite der Leser, kommen aus einem eng begrenzten Raum, beispielsweise einem Stadtviertel oder einer bestimmten Gemeinde. Bisher fehlt es aber an Verfahren, diese Informationsmenge in der Weise nutzbar zu machen, dass Informationen mit hohem lokalem Bezug möglichst gezielt an einen Empfänger gegeben werden, der sich in diesem engen lokalen Raum aufhält.

Aufgabe der Erfindung ist es daher, ein Verfahren anzugeben, mit dem Informationen gezielt in einem hyperlokalen Raum an einen Interessenten ausgegeben werden können.

Diese Aufgabe wird mit einem Verfahren mit den Merkmalen des Patentanspruchs 1 gelöst. Bevorzugte Ausführungsformen des erfindungsgemäßen Verfahrens sind Gegenstand der abhängigen Ansprüche.

Erfindungsgemäß wird ein computerimplementiertes Verfahren zur hyperlokalen Ausgabe von Informationen bereitgestellt, wobei
- eine Nutzerprofildatenbank bereitgestellt wird, in welcher zumindest ein Nutzerprofil eines Nutzers hinterlegt ist, wobei das Nutzerprofil zumindest ein kategorisiertes Nutzerauswahlkriterium umfasst;
- eine Anbieterdatenbank bereitgestellt wird, in welcher zumindest ein Anbieterprofil zumindest eines Anbieters hinterlegt ist, wobei das Anbieterprofil zumindest eine Information über die Geolokation des Anbieters sowie zumindest ein kategorisiertes Anbieterauswahlkriterium umfasst;
- dem Anbieterprofil zumindest eine abrufbare hyperlokale Information zugeordnet ist welche mit dem zumindest einen kategorisierten Anbieterkriterium verknüpft ist;
- eine Vorrichtung zur Ermittlung einer Geolokation des Nutzers bereitgestellt wird und die Geolokalisation des Nutzers festgestellt wird;
- das Nutzerprofil des Nutzers aus der Nutzerprofildatenbank ausgewählt wird,
- aus der Anbieterdatenbank eine Menge an zumindest einem geolokalen Anbieter bestimmt wird, wobei der zumindest eine geolokale Anbieter eine Geolokalisation innerhalb eines geolokalen Bereichs aufweist, der durch einen bestimmten Abstand zur Geolokalisation des Nutzers bestimmt ist,
- das Anbieterprofil des zumindest einen bestimmten geolokalen Anbieters mit dem Nutzerprofil des Nutzers verglichen wird,
- in dem Vergleich bestimmt wird, ob in der Menge an geolokalen Anbieterprofilen ein kategorisiertes Anbieterauswahlkriterium umfasst ist, welches mit einem kategorisierten Nutzerauswahlkriterium des Nutzers korreliert,
- bei Korrelation eines kategorisierten Anbieterauswahlkriterium das kategorisierte Anbieterauswahlkriterium ausgewählt wird, das einem geolokalen Anbieter zugeordnet ist;
- die mit dem ausgewählten Anbieterkriterium verbundene hyperlokale Information an ein Ausgabegerät des Nutzers übermittelt wird, und
- die hyperlokale Information auf dem Ausgabegerät des Nutzers ausgegeben wird.

Das erfindungsgemäße Verfahren ermöglicht eine auf die Interessen eines Nutzers abgestimmte Ausgabe von hyperlokalen Informationen. Dabei können vorteilhaft Arbeitsabläufe und Daten genutzt werden, wie sie bei der Herausgabe von Anzeigenblättern seit vielen Jahren genutzt werden. Über die Online-Ausgabe solcher Anzeigenblätter werden eine Vielzahl von Informationen angeboten, die von den Nutzern aufgerufen werden können. Beim Aufrufen von Informationen können Erkenntnisse über die Vorlieben des Nutzers gewonnen werden, die wiederum bei der gezielten Ausgabe von hyperlokalen Informationen an den Nutzer genutzt werden können.

Beim erfindungsgemäßen Verfahren werden Kategorien genutzt, die zuvor definiert werden und in welche alle Informationen, die bei dem Verfahren verwendet werden oder die aus anderen Quellen gewonnen werden, eingeordnet werden. Durch die Kategorisierung von Information wird kategorisierte Information erhalten. Die Kategorien können für alle Teilnehmer des Verfahrens gleich gewählt werden. Es ist aber auch möglich, die Kategorien für verschiedene Teilnehmer des Verfahrens unterschiedlich zu wählen und dann Korrelationen zwischen Kategorien, die für verschiedene Teilnehmer des Verfahrens genutzt werden, aufzustellen. Beispielsweise können die Kategorien, die auf Seite der Nutzer definiert werden, gleich oder verschieden sein zu den Kategorien, die auf Seiten der Anbieter definiert sind.

Die Kategorien werden gemäß einer Ausführungsform technisch als Datensätze dargestellt. Jeder Kategorie ist also ein bestimmter Datensatz zugeordnet. Datensätze unterschiedlicher Kategorien sind dabei unterschiedlich, während Datensätze der gleichen Kategorie gleich sind bzw. im Wesentlichen gleich sind.

Unter einer Information wird eine Einheit verstanden, die sich als strukturierter Datensatz wiedergeben lässt. Die Information kann an sich beliebig sein. Eine solche Information kann beispielsweise eine Anzeige sein oder auch eine touristische Information. Die Information wird jeweils in elektronischer Form bereitgestellt.

Die Information wird einer bestimmten Kategorie zugeordnet. Gemäß einer Ausführungsform wird die Information mehreren Kategorien zugeordnet, beispielsweise 2, 3, 4 oder mehr Kategorien. Gemäß einer Ausführungsform wird die Information weniger als 1000 Kategorien, gemäß einer weiteren Ausführungsform weniger als 100 Kategorien und gemäß noch einer weiteren Ausführungsform weniger als 10 Kategorien zugeordnet. Durch die Zuordnung der Information zu einer bestimmten Kategorie oder mehreren Kategorien wird eine kategorisierte Information erhalten. Die kategorisierte Information kann beispielsweise dargestellt werden, indem der Datensatz, in welchem die Information enthalten ist, mit dem Datensatz der Kategorie welchem die Information zugeordnet ist, verknüpft ist. Ist die Information mehreren Kategorien zugeordnet, ist deren Datensatz entsprechend mit mehreren Datensätzen verknüpft, welche die Kategorien darstellen.

Gemäß einer Ausführungsform ist eine Hierarchie mit zumindest zwei Ebenen vorgesehen und die zumindest eine Kategorie einer Hierarchieebene zugeordnet, wobei eine erste Hierarchieebene vorgegeben ist, welche erste Kategorien umfasst, zumindest eine weitere Subhierarchieebene vorgesehen ist, welche zumindest eine Subkategorie umfasst, und die zumindest eine Subkategorie zumindest einer ersten Kategorie der ersten Hierarchieebene zugeordnet ist.

Bei der Zuordnung einer Information zu einer Kategorie wird die Information zunächst in eine Kategorie der ersten Hierarchieebne zugeordnet. Die Zuordnung kann beispielsweise erfolgen, indem die Information auf bestimmte Merkmale analysiert wird. In einem weiteren Schritt wird dann die einer bestimmten Kategorie der ersten Hierarchieebene zugordnete Information weiter anaysiert, um eine Zuordnung zu Subkategorien der ersten Kategorie durchzuführen. Dabei wird die Information bevorzugt auf andere Merkmale hin analysiert, als bei der Zuordnung zu ersten Hierarchieebene.

Gemäß einer Ausführungsform sind mehr als zwei Hierarchieebenen vorgesehen, beispielsweise 3 bis 10, gemäß einer weiteren Ausführungsform 3 bis 8. Die in einer Hierarchieebene enthaltenen Kategorien sind jeweils zumindest einer weiteren Kategorie zugeordnet, welche einer Hierarchieebene zugeordnet ist, die eine höhere bzw. niedrigere Hierarchieebene darstellt.

Unter einem Teilnehmer des Verfahrens werden alle Teilnehmer des Verfahrens verstanden, die kategorisierte Informationen bereitstellen, abrufen, zugestellt bekommen oder kategorisierte Informationen im Verfahren in anderer Weise verarbeiten oder nutzen. Teilnehmer des Verfahrens sind insbesondere Anbieter und Nutzer. Die Anbieter stellen kategorisierte Informationen, insbesondere hyperlokale Informationen bereit, die in geeigneten Kategorien eingeordnet sind. Unter einer hyperlokalen Information wird eine Information, insbesondere kategorisierte Information verstanden, die mit einem bestimmten Ort verknüpft ist. Dazu kann der Datensatz der Information mit einem Datensatz verbunden werden, der einen bestimmten Ort angibt, beispielsweise durch Angabe der Ortskoordinaten. Diese lassen sich beispielsweise durch GPS ermitteln.

Die Nutzer fragen diese kategorisierte Informationen nach, beispielsweise indem sie die Homepage eines Anbieters besuchen und dort kategorisierte Information abfragen, bzw. werden die hyperlokalen Informationen an einen Nutzer ausgegeben. Die an den Nutzer ausgegebenen hyperlokalen Informationen werden entsprechend von Kategorien gewählt, die auf der Seite der Nutzer den Interessen des Nutzers entsprechen. Diese Kategorien sind im Nutzerprofil des Nutzers abgelegt. Die Verwendung von Kategorien ermöglicht bereits bei einer vergleichsweise geringen Nutzerzahl bzw. einer geringen Zugriffszahl eine zielgerichtete Ausgabe von Informationen, die auf die Interessen eines Nutzers abgestimmt sind.

Das Verfahren eignet sich insbesondere zur Ausgabe von hyperlokalen Information. Unter einer hyperlokalen Information wird eine Information verstanden, welche einen eng gezogenen lokalen Bezug zum Anbieter aufweist und in einem hyperlokalen Bereich ausgegeben wird, welcher um den Ort des Anbieters angeordnet ist. Gemäß einer Ausführungsform kann der hyperlokale Bereich auch um einen Nutzer angeordnet sein.

Unter einem hyperlokalen Bereich wird beispielsweise eine Fläche, beispielsweise eine kreisförmige Fläche, mit einem Durchmesser von weniger als 500 m, gemäß einer weiteren Ausführungsform von weniger als 300 m, gemäß einer weiteren Ausführungsform von weniger als 100 m und gemäß noch einer weiteren Ausführungsform von weniger als 50 m verstanden. Im Zentrum der Fläche ist er Anbieter bzw. der Nutzer angeordnet bzw. Vorrichtungen, welche den Standort des Anbieters bzw. Nutzers anzeigen und ggf. auch bestimmen.

An sich besteht für den Durchmesser des hyperlokalen Bereichs keine Untergrenze. Die Untergrenze kann aber so gewählt werden, dass je nach Konstellation von Nutzer und Anbietern eine ausreichende bzw. sinnvolle Menge an Information ermittelt werden kann. Gemäß einer Ausführungsform wird der Durchmesser des hyperlokalen Bereichs größer als 5 m, gemäß einer weiteren Ausführungsform größer als 10 m gewählt.

Der hyperlokale Bereich wird bevorzugt so gewählt, dass die bereitgestellte Information leicht vom Nutzer auf die unmittelbare Umgebung übertragen werden kann. Der hyperlokale Bereich kann also auf den Standort des Nutzers beschränkt und dann so erweitert werden, dass die auszugebene Information einen lokalen Bezug zum Standort des Nutzers hat. Eine hyperlokale Information ist also eine Information welche von einem Anbieter für die Ausgabe an einen Nutzer bereitgestellt wird, wenn der Nutzer in einen um den Ort des Anbieters angeordneten hyperlokalen Bereich eintritt bzw. mit anderen Worten ein um den Nutzer angeordneter hyperlokaler Bereich mit dem um den Anbieter angeordneten hyperlokalen Bereich eine Schnittmenge bildet.

Gemäß einer bevorzugten Ausführungsform wird zusätzlich zur hyperlokalen Information auch die Geolokation des Anbieters an den Nutzer ausgegeben.

Bei dem erfindungsgemäßen Verfahren werden allgemein Informationen bereitgestellt, eingegeben, ausgegeben und verarbeitet. Die Informationen werden als strukturierte Datensätze vorgehalten, die sich elektronisch verarbeiten lassen. Derartige strukturierte Datensätze bilden beispielsweise Nutzer- und Anbieterprofil, kategorisiertes Nutzerauswahlkriterium bzw. kategorisiertes Anbieterauswahlkriterium, Information über die Geolokation des Anbieters bzw. des Nutzers, hyperlokale Information, etc.

Bei dem erfindungsgemäßen Verfahren wird zunächst eine Nutzerprofildatenbank verwendet, in welcher Nutzerprofile der Nutzer hinterlegt sind.

Die Nutzerprofildatenbank wird auf einem geeigneten Computer bereitgestellt, der mit einem geeigneten Speicher verbunden ist, sodass in die Nutzerprofildatenbank Daten eingestellt bzw. ausgelesen werden können. Als Computer kann beispielsweise ein Server verwendet werden, der am Ort eines Dienstleisters, beispielsweise einem Verlag, bereitgestellt ist, welcher das erfindungsgemäße Verfahren durchführt. Es sind aber auch andere Lösungen möglich. Beispielsweise kann auch eine cloudbasierte Bereitstellung der Datenbank verwendet werden. Es wird dann beispielsweise eine Serverfarm bereitgestellt, in welcher die Nutzerprofildatenbank abgelegt ist. Es sind auch dezentral organisierte Lösungen möglich, in welchen die Nutzerdatenbank auf mehreren dezentral angeordneten und miteinander vernetzten Servern abgelegt ist.

Die Nutzerprofildatenbank ist auf einem geeigneten Speichermedium abgelegt und es ist Software vorgesehen, mit welcher Informationen, die in Form von Dateien bzw. als strukturierte Datensätze bereitgestellt sind, in die Nutzerprofildatenbank geschrieben bzw. ausgelesen werden können. Die Software wird auf dem Computer ausgeführt sodass Informationen bzw. die entsprechenden Dateien in entsprechende Speicher bzw. die Datenbank geschrieben bzw. ausgelesen werden können.

In der Nutzerprofildatenbank werden Nutzungshandlungen eines Nutzers registriert und in einem Nutzerprofil hinterlegt. Das Nutzerprofil umfasst vorgegebene Kategorien. Nutzungshandlungen des Nutzers führen jeweils zu Einträgen in den entsprechenden Kategorien. Die Nutzungshandlungen des Nutzers, beispielsweise das Abrufen einer kategorisierten Information, sind bestimmten Kategorien zugeordnet, denen dann entsprechende Kategorien im Nutzerprofil entsprechen. Eine Kategorie, in welcher der Nutzer Nutzungshandlungen ausübt, bildet dann ein kategorisiertes Nutzerauswahlkriterium.In der Nutzerprofildatenbank ist zumindest ein Nutzerprofil eines Nutzers hinterlegt. An sich kann eine beliebige Anzahl an Nutzerprofilen in der Nutzerprofildatenbank hinterlegt werden, wobei jedes Nutzerprofil einem bestimmten Nutzer zugeordnet ist.

Ein Nutzerprofil umfasst verschiedene Kategorien, welche kategorisierten Nutzerauswahlkriterien entsprechen, wenn der Nutzer in der betreffenden Kategorie Aktivitäten ausübt.

Gemäß einer Ausführungsform umfasst das Nutzerprofil aus der Gesamtheit der Kategorien diejenigen Kategorien, in welchen der Nutzer eine Aktivität ausgeübt hat. Die ausgewählten Kategorien bilden dann jeweils ein kategorisiertes Nutzerauswahlkriterium. Wie bereits bei der Erläuterung der Kategorien ausgeführt, werden die Nutzerauswahlkriterien durch entsprechende Datensätze dargestellt. Diese Datensätze sind jeweils mit dem Datensatz des Nutzers verbunden. Der Datensatz des Nutzers kann neben den Datensätzen der kategorisierten Nutzerauswahlkriterien noch weitere Datensätze umfassen, in denen beispielsweise der Name oder die Kontaktdaten des Nutzers bzw. eine Identifikationsnummer des Nutzers hinterlegt sind.

Ein Nutzerprofil kann gemäß einer Ausführungsform in der Weise erstellt werden, indem in der Gesamtheit der Kategorien diejenigen Kategorien, in welchen der Nutzer keine Aktivität zeigt, beispielsweise ein Wert "0" zugeordnet wird. Kategorien, in denen der Nutzer eine Aktivität zeigt, wird entsprechend beispielsweise ein Wert "1" zugeordnet. Kategorien, welche den Wert "1" aufweisen, bilden dann jeweils ein kategorisiertes Nutzerauswahlkriterium.

Gemäß einer weiteren Ausführungsform werden die Kategorien, in welchen der Nutzer eine Aktivität zeigt, gemäß dem Grad der Aktivität gewichtet. Beispielsweise kann der Wert, welcher in der Kategorie eingetragen wird, in welcher der Nutzer eine Aktivität zeigt, bei jeder Aktivität um einen bestimmten Wert erhöht werden, beispielsweise um den Wert "1". Den Kategorien, in welchen der Nutzer eine höhere Aktivität zeigt, kann dann eine höhere Gewichtung zugeordnet werden.

Die Aktivität des Nutzers ist insbesondere eine Aktivität, die elektronisch erfasst werden kann. Geeignete beispielhafte Aktivitäten sind das Aufrufen einer Homepage, das Anklicken einer Anzeige, das Kaufen von Waren, etc. Die Aktivitäten sind jeweils mit einer bestimmten Kategorie verbunden. Die Kategorien werden durch die Aktivität ausgewählt. Die ausgewählten Kategorien bzw. kategorisierten Nutzerauswahlkriterien ergeben in ihrer Gesamtheit das Nutzerprofil und geben beispielsweise Vorlieben oder Interessen des Nutzers wieder.

Unter einem Nutzer wird ein Teilnehmer des Verfahrens verstanden, an welchen hyperlokale Informationen ausgegeben werden, die vorzugsweise auf Interessen des Nutzers abgestimmt sind. Die Interessen des Nutzers werden durch entsprechende Kategorien abgebildet, welche kategorisierte Nutzerauswahlkriterien bilden und im Nutzerprofil abgebildet sind. Informationen können beispielsweise Nachrichten oder Anzeigen sein, die an den Nutzer entsprechend seinen Interessen ausgegeben werden. Die Informationen sind bestimmten Kategorien zugeordnet. Korreliert die Kategorie der Information mit einer Kategorie des Nutzers, also einem Nutzerauswahlkriterium, wird die Information an den Nutzer ausgegeben, sofern sich der Nutzer im hyperlokalen Bereich aufhält. Die Ausgabe kann über ein geeignetes Ausgabegerät erfolgen, beispielsweise ein Smartphone. Das Ausgabegerät umfasst eine Schnittstelle für die Kommunikation mit dem Nutzer, beispielsweise einen berührungsempfindlichen Bildschirm. Ferner umfasst das Ausgabegerät Mikroprozessoren und Speicher, die ein Betriebssystem umfassen und ausführen und Anwendungen zum Steuern und Kommunizieren mit einem entfernten Server. Die Datenübertragung zwischen Ausgabegerät und entferntem Server erfolgt bevorzugt drahtlos. Ferner enthält das Ausgabegerät Software, wie beispielsweise Apps, um Daten auf dem Ausgabegerät zu verarbeiten und anzuzeigen.

Mit Hilfe des erfindungsgemäßen Verfahrens werden insbesondere geolokal hyperlokale Informationen bereitgestellt. Unter einer geolokalen Bereitstellung von Informationen wird eine Bereitstellung von Information verstanden, die einen Bezug zu einem bestimmten Ort hat. Der Ort kann beispielsweise der Ort sein, an dem sich der Nutzer aufhält.

Dem Nutzer ist gemäß einer Ausführungsform eine Kennung zugeordnet, mit welcher der Nutzer identifiziert werden kann. Bei der Durchführung des Verfahrens kann die Kennung des Nutzers als Stellvertreter für den Nutzer verwendet werden.

Unter einer Nutzungshandlung wird eine Handlung bzw. eine Aktivität eines Nutzers verstanden, die elektronisch erfasst und als Wert in der Nutzerprofildatenbank abgelegt werden kann. Eine Nutzungshandlung ist insbesondere ein Abrufen kategorisierter Information durch den Nutzer, beispielsweise das Aufrufen eine Homepage, die einer oder mehreren bestimmten Kategorien zugeordnet ist. Auf der aufgerufenen Homepage kann beispielsweise ein Artikel oder eine Anzeige bereitgestellt sein, durch welche die Kategorisierung der Homepage definiert werden kann. Es ist aber auch möglich, den Artikel oder die Anzeige selbst in kategorisierter Form bereitzustellen. Die Nutzungshandlung kann aber auch das Aufrufen eine Kurznachricht sein, die vom Nutzer dann gelesen werden kann. Die Kurznachricht kann wiederum einer bestimmten Kategorie zugeordnet sein. Diese Kategorie kann dann im Nutzerprofil als kategorisiertes Nutzerauswahlkriterium erfasst werden.

Unter einem Nutzerprofil wird eine Menge an kategorisierten Nutzerauswahlkriterien verstanden, die einem bestimmten Nutzer zugeordnet ist. Die Nutzerauswahlkriterien können gemäß einer Ausführungsform gewichtet sein. Nutzerauswahlkriterien mit einer höheren Gewichtung können dann bei der Auswahl von Informationen, die an den Nutzer ausgegeben werden, stärker berücksichtigt werden.

Eine Gewichtung kann beispielsweise erreicht werden, indem jeder Abruf einer kategorisierten Information, beispielsweise einer Information, die mit einem bestimmten kategorisierten Anbieterauswahlkriterium verbunden ist, zu einem Eintrag beim entsprechenden kategorisierten Nutzerauswahlkriterium führt. Kategorien, die vom Nutzer öfters besucht werden, führen dann zu einer höheren Gewichtung der entsprechenden Kategorie auf der Seite des Nutzers, also des korrelierenden kategorisierten Nutzerauswahlkriteriums.

Eine Nutzungshandlung kann gemäß einer weiteren Ausführungsform jeweils individuell gewichtet werden. Gemäß dieser Ausführungsform sind bestimmten Nutzungshandlungen dann bestimmte Gewichtungen zugeordnet. Beispielsweise kann ein Abrufen einer kategorisierten Information, beispielsweise das Anklicken einer kategorisierten Anzeige, mit einem ersten Wert bewertet werden, während eine Nutzungshandlung, die zum Kauf einer Ware führt, mit einem zweiten Wert bewertet wird, der beispielsweise höher gewählt ist als der erste Wert.

Unter einem kategorisierten Nutzerauswahlkriterium wird eine Kategorie verstanden, in welcher der Nutzer zumindest eine Nutzungshandlung ausgeführt hat. Die Kategorie wird dann im Nutzerprofil als kategorisiertes Nutzerauswahlkriterium erfasst.

Bei dem erfindungsgemäßen Verfahren werden daher Handlungen des Nutzers kategorisiert, d.h. in verschiedene Kategorien eingeordnet. Die Kategorien sind vorgegeben, d.h. unabhängig von der konkreten Durchführung des Verfahrens definiert. Dadurch wird eine Standardisierung der Handlungen des Nutzers erreicht. Verschiedene Handlungen des Nutzers können dabei in derselben Kategorie zugeordnet sein, wenn sie ähnliche oder gleiche Felder oder Themen betreffen. Eine typische Nutzungshandlung des Nutzers ist die Auswahl einer kategorisierten Information, die online angezeigt bzw. angeboten wird. Eine solche kategorisierte Information ist beispielsweise eine Anzeige, ein Artikel zu einem bestimmten Thema oder auch eine Ware, die Online angesehen oder gekauft wird. Die kategorisierte Information ist also einer bestimmten Kategorie zugeordnet.

Die Kategorien sind vorher festgelegt, sodass eine Standardisierung von Handlungen des Nutzers vorgenommen werden kann. Die von einem Nutzer beanspruchten oder angewählten bzw. genutzten Kategorien bilden dann ein kategorisiertes Nutzerauswahlkriterium, welches dem Nutzerprofil des Nutzers zugeordnet werden kann. Führt also ein Nutzer eine Handlung aus, die einer bestimmten Kategorie zugeordnet ist, bildet diese Kategorie ein kategorisiertes Nutzerauswahlkriterium, welches in das Nutzerprofil aufgenommen wird.

Unter einer Kategorie wird eine Klassifikationseinheit verstanden, in welche Informationen eingeordnet werden können, wobei die Informationen derselben Kategorie durch zumindest ein gemeinsames Merkmal verbunden sind. Die Merkmale können abstrakt definiert werden.

Unter einer Kategorie werden also bestimmte Eigenschaften verstanden, die beispielsweise Interessen, Meinungen, aber auch bestimmte Verhaltensweisen, Vorlieben etc. sein können. An sich können Kategorien beliebig definiert werden. Sie sollten bevorzugt wiederkehrenden Handlungen, wiederkehrenden Eigenschaften oder wiederkehrenden Interessen entsprechen, sodass Eigenschaften oder Verhaltensweisen der Nutzer standardisiert erfasst werden können. Die Kategorien sind vorgegeben, sodass Handlungen des Nutzers verschiedenen Kategorien zugeordnet werden können.

Zur Definition der Kategorien kann beispielsweise eine Menge an bekannten Informationen nach gemeinsamen Merkmalen durchsucht und geordnet werden. Als solche Informationsmenge können beispielsweise bereits erschienene Anzeigenblätter verwendet werden, deren Inhalt dann nach gemeinsamen Merkmalen geordnet wird. Jeder Gruppe von Informationen, die durch zumindest ein gemeinsames Merkmal verbunden ist, kann dann eine Kategorie zugeordnet werden. Dadurch wird eine bestimmte Menge an Kategorien definiert und bereitgestellt.

Beim erfindungsgemäßen Verfahren wird also eine bestimmte Menge an Kategorien definiert, in welche Information eingeordnet werden. Die in Kategorien eingeordneten Informationen bilden dann kategorisierte Informationen.

Zum Aufbau eines Nutzerprofils wird gemäß einer Ausführungsform einer Kategorie eine Wertungseinheit zugeordnet, wenn der Nutzer in der Kategorie eine Nutzungshandlung ausführt.

Unter einer Wertungseinheit wird ein Wert verstanden, der in eine Kategorie eingeordnet wird, wenn der Nutzer in der Kategorie eine Nutzungshandlung ausführt.

Gemäß einer Ausführungsform kann eine Kategorie eine Wertungseinheit, beispielsweise der Wert 1 zugeordnet werden, wenn der Nutzer eine Nutzungshandlung in der Kategorie ausführt. Beispiel für eine Nutzungshandlung ist das Anklicken einer Online Anzeige, das Abrufen eines Artikels, der Kauf einer Ware etc. Die Online-Anzeige, der Artikel oder die Ware sind einer bestimmten Kategorie zugeordnet und bilden damit eine kategorisierte Information. Das Anklicken einer Online Anzeige, das Abrufen eines Artikels, der Kauf einer Ware etc. würde dann auf der Seite des Nutzers zu einem Eintrag eines Werts in die entsprechend korrelierende Kategorie führen, die damit ein kategorisiertes Nutzerauswahlkriterium bildet. Das kategorisierte Nutzerauswahlkriterium bildet dann einen Teil des Nutzerprofils. Die Kategorie würde damit als für den Nutzer von Interesse eingeordnet.

Die im Nutzerprofil enthaltenen kategorisierten Nutzerauswahlkriterien werden im erfindungsgemäßen Verfahren dazu genutzt hyperlokale Informationen an einen Nutzer auszugeben. Bietet ein Anbieter hyperlokale Informationen in einer Kategorie an, die gleich ist zum kategorisierten Nutzerauswahlkriterium bzw. mit diesem korreliert, sind die hyperlokalen Informationen also einem kategorisierten Anbieterauswahlkriterium zugeordnet, das mit dem kategorisierten Nutzerauswahlkriterium korreliert, kann diese hyperlokale Information dann an den Nutzer ausgegeben werden.

Gemäß einer Ausführungsform wird eine Kategorie als kategorisiertes Nutzerauswahlkriterium in das Nutzerprofil eines Nutzers aufgenommen, wenn der Nutzer zumindest eine Nutzungshandlung ausführt, welche mit der Kategorie verknüpft ist.

Bei dieser Ausführungsform wird also eine Kategorie als kategorisiertes Nutzerauswahlkriterium in das Nutzerprofil aufgenommen, sobald der Nutzer einmalig eine Nutzungshandlung in der betreffenden Kategorie ausgeführt hat. Eine weitere Gewichtung der kategorisierten Nutzerauswahlkriterien findet bevorzugt nicht statt.

Gemäß einer weiteren Ausführungsform wird eine Kategorie als kategorisiertes Nutzerauswahlkriterium in das Nutzerprofil aufgenommen, wenn der Nutzer mehrfach Nutzungshandlungen in der betreffenden Kategorie ausgeführt hat, beispielsweise mehr als 5 Nutzungshandlungen.

Gemäß einer weiteren Ausführungsform des Verfahrens können die kategorisierten Nutzerauswahlkriterien, also die im Nutzerprofil enthaltenen Kategorien, gewichtet werden. So kann jedes Mal, wenn ein Nutzer Information einer bestimmten Kategorie aufruft, dem entsprechenden kategorisierten Nutzerauswahlkriterium im Nutzerprofil ein bestimmter Wert hinzugefügt werden, beispielsweise hinzuaddiert werden. Je nach dem Verhalten des Nutzers ergibt sich durch den höheren Wert im Nutzerprofil eine Gewichtung der Kategorie innerhalb des Nutzerprofils. Führt ein Nutzer also beispielsweise bestimmte Handlungen wiederholt aus, ergibt jede Handlung einen Wert, der dem Nutzerprofil hinzugefügt wird, sodass sich ein gewichtetes kategorisiertes Nutzerauswahlkriterium ergibt. Unter einem Nutzerauswahlkriterium wird also eine Kategorie verstanden, in welcher der Nutzer Handlungen ausgeführt hat, sodass der Kategorie ein Wert zugeordnet wurde, die Kategorie also in das Nutzerprofil des Nutzers aufgenommen wurde.

Als weitere Teilnehmer des Verfahrens treten Anbieter auf. Unter einem Anbieter wird ein Teilnehmer des Verfahrens verstanden, der eine Information, insbesondere eine kategorisierte Information bereitstellt, die einem Nutzer zugänglich gemacht werden kann.

Dem Anbieter kann eine Kennung zugeordnet werden, welche beim erfindungsgemäßen Verfahren als Stellvertreter für den Anbieter genutzt wird.

Unter einem Anbieter wird insbesondere ein Marktteilnehmer verstanden, der an dem erfindungsgemäßen Verfahren teilnimmt und ein Angebot in Form einer kategorisierten Information anbietet und Nutzer des Verfahrens sucht, die an diesem Angebot interessiert sind. Das Angebot kann an sich beliebig gestaltet sein. Ein solches Angebot kann körperlich sein, also beispielsweise eine gegenständliche Ware, wie ein Bekleidungsstück, ein Sportartikel etc. sein. Das Angebot kann aber auch nicht körperlich sein und beispielsweise eine Information darstellen. Eine solche Information kann beispielsweise eine Information über eine lokale Sehenswürdigkeit oder ein Veranstaltungshinweis sein. Weiter kann das Angebot beispielsweise eine Dienstleistung sein, wie zum Beispiel ein Personentransport. Die Angebote werden jeweils in digitaler Form in Form eines strukturierten Datensatzes bereitgestellt, beispielsweise als Datei, die auf einem Computer in einem geeigneten Speichermedium abgelegt ist. Die Angebote sind jeweils einer bestimmten Kategorie zugeordnet. Die Angebote stellen damit eine kategorisierte Information dar, die als strukturierter Datensatz online verarbeitet und angezeigt werden kann. Die Dateien können dann vom Nutzer aufgerufen werden, um dem Nutzer die in der Datei hinterlegte kategorisierte Information zugänglich zu machen.

Die Anbieter sind in einer Anbieterdatenbank erfasst. Analog zur Nutzerprofildatenbank ist die Anbieterdatenbank auf einem geeigneten Speichermedium abgelegt und es ist Software vorgesehen, mit welcher Informationen in die Anbieterdatenbank geschrieben bzw. aus dieser ausgelesen werden können. Es ist dazu ein Computer vorgesehen, auf welchem die entsprechende Software ausgeführt werden kann bzw. mit dem Informationen in entsprechende Speicher geschrieben bzw. ausgelesen werden können.

In der Anbieterdatenbank ist zumindest ein Anbieterprofil eines Anbieters hinterlegt. Das Anbieterprofil ist jeweils einem bestimmten Anbieter zugeordnet und umfasst zumindest eine Information über die Geolokation des Anbieters und zumindest ein kategorisiertes Anbieterauswahlkriterium.

Unter einer Information über die Geolokation des Anbieters wird allgemein ein Ort verstanden, über welchen der Nutzer mit dem Anbieter in Kontakt treten kann, insbesondere physisch in Kontakt treten kann.

Unter der Geolokation des Anbieters wird gemäß einer Ausführungsform die Adresse bzw. der Ort des Anbieters verstanden, unter welcher er seine Geschäftstätigkeit ausübt. Eine solche Adresse kann beispielsweise die Adresse eines Ladenlokals sein, in welchem der Anbieter seine Geschäftstätigkeit ausübt. Die Adresse kann auch die Adresse einer Filiale des Anbieters sein oder beispielsweise auch die Adresse eines Ladenlokals einer dritten Partei sein, in welchem Waren des Anbieters angeboten werden. Die Geolokation des Anbieters kann aber beispielsweise auch eine Abteilung innerhalb des Ladenlokals des Anbieters sein.

Die Geolokation kann in an sich beliebiger Weise bestimmt sein. Gemäß einer Ausführungsform ist die Geolokation des Anbieters über die Angabe des Breiten- und Längengrads angegeben.

Weiter umfasst das Anbieterprofil zumindest ein kategorisiertes Anbieterauswahlkriterium. Unter einem kategorisierten Anbieterauswahlkriterium wird eine Kategorie verstanden, in welche ein Angebot des Anbieters oder eine Eigenschaft eines solchen Angebots eingeordnet ist. Unter einer Kategorie wird ein in einem Regelwerk angeordnete Gruppe verstanden die durch gemeinsame Eigenschaften verbunden sind. Wie beim Nutzerprofil sind die Kategorien vorab definiert, sodass vergleichbare Angebote in der gleichen Kategorie eingeordnet werden können.

Die Kategorien des Anbieterprofils können gleich gewählt werden, wie die Kategorien des Nutzerprofils. Es ist aber auch möglich, die Kategorien des Nutzerprofils und des Anbieterprofils unterschiedlich zu wählen.

Unter einem kategorisierten Anbieterauswahlkriterium wird allgemein eine Kategorie verstanden, in welcher der Anbieter aktiv ist, insbesondere kategorisierte Information bereitstellt. Ein Anbieter ist in einer Kategorie aktiv, wenn die Kategorie Aktivitäten erfasst, welche von der Geschäftstätigkeit des Anbieters umfasst werden. Insbesondere ist ein Anbieter in einer Kategorie aktiv, wenn die Kategorie Aktivitäten umfasst, die auf eine Interaktion mit Nutzern ausgerichtet sind. Gemäß einer Ausführungsform bildet eine Kategorie ein kategorisiertes Anbieterauswahlkriterium, wenn die Kategorie die Geschäftstätigkeit des Anbieters erfasst. Insbesondere bildet eine Kategorie ein kategorisiertes Anbieterauswahlkriterium, wenn der Anbieter eine kategorisierte Information online bereitstellt, wie eine Online-Anzeige oder eine sonstige kategorisierte Information, zur Verfügung stellt, die dieser Kategorie zugeordnet ist.

Allgemein sind mit dem Anbieterprofil Informationen verknüpft, die einer bestimmten Kategorie zugeordnet sind. Eine solche kategorisierte Information kann beispielsweise eine Anzeige oder eine Homepage des Anbieters sein, die auf dem Bildschirm eines Smartphones angezeigt werden kann. Diese kategorisierte Information wird als strukturierter Datensatz in Form einer entsprechenden Datei auf einem Computer bereitgestellt. Die Information ist einer bestimmten Kategorie zugeordnet. Eine Kategorie, in welcher der Anbieter kategorisierte Informationen zur Verfügung stellt, bildet dann ein kategorisiertes Anbieterauswahlkriterium. Dieses kategorisierte Anbieterauswahlkriterium bzw. die entsprechende Kategorie kann der Datei, in welcher die Information abgelegt ist, beispielsweise in Form eines Tags angefügt werden.

Die vom Anbieter zur Verfügung gestellte kategorisierte Information kann auf verschiedene Weise genutzt werden.

Beim erfindungsgemäßen Verfahren kann die kategorisierte Information als hyperlokale Information an einen Nutzer ausgegeben werden, wenn sich der Nutzer beispielsweise in der Nähe des Ladenlokals des Anbieters befindet.

Die kategorisierte Information kann aber auch zum Aufbau eines Nutzerprofils genutzt werden. Ruft ein Nutzer als Beispiel für eine kategorisierte Information die Homepage des Anbieters auf und klickt dort auf eine Anzeige die einer bestimmten Kategorie zugeordnet ist, also eine kategorisierte Information darstellt, führt das Anklicken zu einem entsprechenden Eintrag in der korrelierenden Kategorie im Nutzerprofil, d.h. dem entsprechenden kategorisierten Nutzerauswahlkriterium.

Unter einer Kategorie im Anbieterprofil zur Erstellung von kategorisierten Anbieterauswahlkriterien wird analog zu den kategorisierten Nutzerauswahlkriterien eine Klassifikationseinheit verstanden, in welche Informationen, insbesondere hyperlokale Informationen eingeordnet werden können, die durch mindestens ein gemeinsames Merkmal verbunden sind.

Die Kategorien für die Aufstellung der kategorisierten Anbieterauswahlkriterien können deckungsgleich gewählt sein zu den Kategorien für die Aufstellung der kategorisierten Nutzerauswahlkriterien. Die Kategorie des kategorisierten Anbieterauswahlkriteriums kann dann mit der gleichen Kategorie eines Nutzerauswahlkriteriums korrelieren.

Die Kategorien, in welchen ein Anbieter aktiv ist, also die kategorisierten Anbieterauswahlkriterien, die einem bestimmten Anbieter zugeordnet sind, werden vorab definiert.

Gemäß einer Ausführungsform kann aber auch eine Kategorie auf der Seite der kategorisierten Anbieterkriterien mit mehreren Kategorien, beispielsweise 2 oder 3 Kategorien, auf der Seite der kategorisierten Nutzerauswahlkriterien korrelieren. Ebenso kann eine Kategorie auf Seiten der kategorisierten Nutzerauswahlkriterien mit mehreren Kategorien, z.B. 2 oder 3 Kategorien, auf Seite der kategorisierten Anbieterauswahlkriterien korrelieren.

Gemäß einer Ausführungsform können die Kategorien für die Erstellung von kategorisierten Anbieterauswahlkriterien und für die Erstellung von kategorisierten Nutzerauswahlkriterien auch unterschiedlich definiert werden. Bei dieser Ausführungsform werden also erste Kategorien für die Anbieterseite definiert und zweite, von den ersten Kategorien unterschiedliche Kategorien für die Nutzerseite.

Bei dieser Ausführungsform werden dann Korrelationen zwischen kategorisierten Nutzerauswahlkriterien und kategorisierten Anbieterauswahlkriterien aufgestellt.

Ein kategorisiertes Nutzerauswahlkriterium kann dabei mit einem oder mit mehreren kategorisierten Anbieterauswahlkriterien korrelieren, wobei die Korrelationen gemäß einer Ausführungsform auch mit einer Gewichtung versehen sein können, wobei die Gewichtung für jede Korrelation individuell gewählt werden kann.

Ebenso kann ein kategorisiertes Anbieterauswahlkriterium mit einem oder mehreren kategorisierten Nutzerauswahlkriterien korrelieren. Auch hier können gemäß einer Ausführungsform die Korrelationen mit einer Gewichtung versehen sein, wobei die Gewichtung für jede Korrelation individuell gewählt werden kann.

Weiter ist beim erfindungsgemäßen Verfahren dem Anbieterprofil zumindest eine abrufbare hyperlokale Information zugeordnet, welche mit dem zumindest einen kategorisierten Anbieterkriterium verknüpft ist.

Unter einer abrufbaren hyperlokalen Information wird eine kategorisierte Information verstanden, welche an einen Nutzer ausgegeben werden kann, wenn dieser in den hyperlokalen Raum an der Geolokation des Anbieters eintritt. Durch die Kategorisierung kann die hyperlokale Information auf die Interessen des Nutzers abgestimmt werden, d.h. die hyperlokale Information wird nur dann an den Nutzer ausgegeben, wenn sie mit den Interessen des Nutzers übereinstimmt, d.h. eine Korrelation zwischen kategorisiertem Anbieterauswahlkriterium und kategorisiertem Nutzerauswahlkriterium besteht. Dazu kann ein entsprechendes Programm vorgesehen sein, das die Kategorien auf Nutzerseite mit den Kategorien auf der Anbieterseite vergleicht. Korrelieren kategorisiertes Anbieterauswahlkriterium und kategorisiertes Nutzerauswahlkriterium bzw. sind diese gleich, wird die kategorisierte Information an den Nutzer ausgegeben, d.h. ein entsprechender Datensatz an das Ausgabegerät des Nutzers übertragen.

Die hyperlokale Information wird geeignet strukturierter Datensatz in elektronischer Form bereitgestellt, sodass sie elektronisch an einen Nutzer übermittelt und auf dessen Empfangsgerät, beispielsweise einem Smartphone, ausgegeben werden kann.

Eine hyperlokale Information kann beispielsweise eine Anzeige des Anbieters sein, die auf eine Verkaufsaktion in seinem Ladenlokal hinweist. Eine solche hyperlokale Information hat für einen Nutzer einen bevorzugten Wert, wenn sie in unmittelbarer Nähe des Ladenlokals bereitgestellt wird, da der Nutzer dann die Gelegenheit hat, das Ladenlokal aufzusuchen und an der Verkaufsaktion teilzunehmen. Mit dem erfindungsgemäßen Verfahren kann die hyperlokale Information dem Nutzer zur Verfügung gestellt, also auf seinem Empfangsgerät ausgegeben werden, wenn er sich im hyperlokalen Bereich um das Ladenlokal befindet.

Die hyperlokale Information ist mit dem zumindest einen kategorisierten Anbieterkriterium verknüpft.

Die Verknüpfung kann in der Weise erfolgen, dass die hyperlokale Information direkt mit dem zumindest einen kategorisierten Anbieterauswahlkriterium verknüpft ist. Die hyperlokale Information ist in einer entsprechenden Datei enthalten, welche die hyperlokale Information enthält. Die Datei kann dann beispielsweise mit einem entsprechenden Tag versehen sein, welche das kategorisierte Anbieterauswahlkriterium kodiert.

Gemäß einer anderen Ausführungsform wird die Verknüpfung von hyperlokaler Information mit dem kategorisierten Anbieterauswahlkriterium erstellt indem das Anbieterprofil das kategorisierte Anbieterauswahlkriterium umfasst. Bei dieser Ausführungsform wird dann jede hyperlokale Information des Anbieters ausgegeben, falls der Anbieter den Interessen des Nutzers entspricht, also eine Korrelation zu zumindest einem kategorisierten Nutzerauswahlkriterium hergestellt werden kann.

Ferner wird beim erfindungsgemäßen Verfahren eine Vorrichtung zur Ermittlung der Geolokation des Nutzers bereitgestellt und die Geolokation des Nutzers festgestellt.

Gemäß einer Ausführungsform ist die Geolokation des Nutzers durch die physische Geolokation des Nutzers bestimmt. Bei dieser Ausführungsform kann also die Geolokation des Nutzers direkt aus seinem Aufenthaltsort bestimmt werden.

Gemäß einer ersten Ausführungsform wird die Vorrichtung zur Ermittlung der Geolokation des Nutzers vom Nutzer mitgeführt. Die Vorrichtung zur Ermittlung der Geolokation des Nutzers ist also mobil ausgeführt, sodass sie vom Nutzer mitgeführt werden kann. Die Geolokation der Vorrichtung stimmt bei dieser Ausführungsform mit der Geolokation des Nutzers überein.

Bei dieser Ausführungsform wird also beispielsweise die Geolokation des Nutzers kontinuierlich oder in zeitlichen Abständen oder auch in Abhängigkeit von einem Ereignis bestimmt und dann weiter verarbeitet. Die Daten zur Geolokation des Nutzers können an einen Server übertragen werden auf welchem dann die weiteren Schritte des erfindungsgemäßen Verfahrens ausgeführt werden.

Allgemein kann eine geeignete mobile Vorrichtung ein mobiles Datenverarbeitungssystem sein, welches mit einer Vorrichtung zum Feststellen der Geolokation ausgestattet ist. Ein geeignetes mobiles Datenverarbeitungssystem ist beispielsweise ein Smartphone oder ein Tablet-Computer, welche jeweils mit einer Vorrichtung zum Empfang beispielsweise eines GPS Signals ausgestattet sind, sodass die Ortskoordinaten der Geolokation des Nutzers, bzw. die Ortskoordinaten des Orts der Vorrichtung zur Feststellung der Geolokation, ermittelt werden können.

Gemäß dieser Ausführungsform des Verfahrens werden durch das mobile Datenverarbeitungssystem direkt der Ort, insbesondere die Ortskoordinaten des Orts bestimmt, an dem der Nutzer bzw. das von ihm mitgeführte mobile Datenverarbeitungssystem lokalisiert sind.

Die Information über den Ort, beispielsweise die Ortskoordinaten, können dann gemäß einer Ausführungsform an einen Computer, z.B. einen zentralen Server übermittelt werden, auf welchem dann die weiteren Schritte des Verfahrens durchgeführt werden.

Gemäß einer weiteren Ausführungsform können die weiteren Schritte des Verfahrens auch ganz oder teilweise auf dem mobilen Datenverarbeitungssystem durchgeführt werden. Dazu können beispielsweise Anbieterprofile, die eine bestimmte Geolokation aufweisen, in Abhängigkeit von der Geolokation des mobilen Datenverarbeitungssystems auf das mobile Datenverarbeitungssystem des Nutzers übertragen werden. Es können auch das Nutzerprofil oder Teile des Nutzerprofils auf dem mobilen Datenverarbeitungssystem vorgehalten werden. Auf diese Weise kann beispielsweise erreicht werden, dass nur dem Nutzer alle Daten zu seinem Nutzerprofil zur Verfügung stehen. Dritten stehen entsprechend die Daten des Nutzerprofils nicht oder nur teilweise zur Verfügung. Bei einer Ausführungsform, bei welcher die Daten des Nutzerprofils nur teilweise zur Verfügung stehen sind die Daten bevorzugt so ausgeführt, dass jeweils ein Anteil des Nutzerprofils keine lesbare Information ergibt. Nur wenn alle Teile des Nutzerprofils verfügbar sind, können also die im Nutzerprofil enthaltenen Informationen genutzt bzw. verarbeitet werden.

Gemäß einer weiteren Ausführungsform kann die Vorrichtung zur Ermittlung der Geolokation des Nutzers mehrteilig ausgeführt sein, wobei zumindest ein Teil an einem festen Ort vorgesehen ist und zumindest ein weiterer Teil mobil ausgeführt ist. Ein solcher fester Ort kann beispielsweise das Ladenlokal eines Anbieters sein. Gemäß einer Ausführungsform setzt sich die Vorrichtung zur Ermittlung der Geolokation des Nutzers aus einem ortsfesten Teil und einem mobilen Teil zusammen. Der ortsfeste Teil kann beim Anbieter bzw. an der Geolokation des Anbieters angeordnet sein, während der mobile Teil vom Nutzer mitgeführt wird.

Die Geolokation des Nutzers wird durch Interaktion einer mobilen Vorrichtung, welche der Nutzer mit sich führt, mit dem ortsfesten Teil der Vorrichtung zur Ermittlung der Geolokation des Nutzers ermittelt, welcher an der Geolokation des Anbieters angeordnet ist.

Gemäß einer Ausführungsform ist die Vorrichtung zur Ermittlung der Geolokation des Nutzers in der Weise ausgebildet, dass Ortsmarkierungen vorgesehen sind, die den Ort eines Anbieters angeben. Bewegt sich der Nutzer mit dem von ihm mitgeführten mobilen Datenverarbeitungssystem in den von den Ortsmarkierungen gekennzeichneten Bereich, kann damit die Geolokation des Nutzers durch die Ermittlung der Geolokation des von ihm mitgeführten mobilen Datenverarbeitungssystems ermittelt werden.

Gemäß einer Ausführungsform sind die Ortsmarkierungen als passive Ortsmarkierungen ausgeführt. Unter einer passiven Ortsmarkierung wird eine Ortsmarkierung verstanden, welche lediglich Informationen sendet. Die gesendeten Informationen umfassen mindestens eine Information über die Geolokation des Anbieters. Gemäß einer weiteren Ausführungsform umfasst die gesendete Information eine Information über die Identität des Anbieters. Unter einer Identität des Anbieters wird dabei die Identität des Anbieters selbst oder auch die Identität einer Untergruppe des Anbieters verstanden. Eine Untergruppe bilden beispielsweise Abteilungen, in welchen der Anbieter verschiedene Waren anbietet. Beispielhafte Abteilungen sind eine Sportabteilung oder eine Abteilung für Bekleidung.

Gemäß einer Ausführungsform können ein oder mehrere Sender als Ortsmarkierungen vorgesehen werden, die beispielsweise mit einem Smartphone oder einem vergleichbaren Datenverarbeitungsgerät in Kontakt treten können, die als mobiles Empfangsgerät wirken. Eine solche Technologie ist beispielsweise als Beacon-Technologie bekannt. Gemäß einer weiteren Ausführungsform kann die Kommunikation zwischen der Ortsmarkierung am Ort des Anbieters und dem Empfangsgerät, welches beim Nutzer angeordnet ist, beispielsweise ein Smartphone, auch nach dem Bluetooth-Standard erfolgen.

Bei dieser Ausführungsform wird eine weitere Datenverbindung aufgebaut, über welche die weiteren Schritte des erfindungsgemäßen Verfahrens auf einem dafür vorgesehenen Computer ausgeführt werden.

Gemäß einer weiteren Ausführungsform sind die Ortsmarkierungen als aktive Ortsmarkierungen ausgeführt. Unter einer aktiven Ortsmarkierung wird eine Ortsmarkierung verstanden, welche Informationen sendet und Informationen empfängt. Bei einer derartigen Ausführungsform kann die Ortsmarkierung auch dazu genutzt werden, eine Verbindung zu einem Computer herzustellen, auf welchem dann die weiteren Schritte des erfindungsgemäßen Verfahrens ausgeführt werden.

Gemäß einer Ausführungsform kann die Ortmarkierung beispielsweise ein WLAN mit einem Router sein der eine bestimmte Adresse hat, die bekannt ist. Das mobile Datenverarbeitungssystem kann sich in das WLAN-Netzwerk einloggen, wodurch festgestellt werden kann, dass der Nutzer sich am Ort des Anbieters befindet.

Die Ortsmarkierung kann aber gemäß einer weiteren Ausführungsform auch virtuell ausgeführt sein, indem beispielsweise die Ortskoordinaten eines Anbieters auf dem mobilen Datenverarbeitungssystem hinterlegt sind, welches der Nutzer mit sich führt. Dazu kann eine entsprechende App auf dem mobilen Datenverarbeitungssystem, beispielsweise einem Smartphone, installiert sein. Die Geolokation des Nutzers kann dann mit Hilfe des mobilen Datenverarbeitungssystems festgestellt und mit den auf dem mobilen Datenverarbeitungssystem hinterlegten Daten zur Geolokation des Anbieters verglichen werden.

An sich kann die Vorrichtung zur Ermittlung der Geolokation des Nutzers auch so gestaltet sein, dass die Geolokation des Nutzers unabhängig vom aktuellen Aufenthaltsort des Nutzers festgelegt werden kann. Dazu kann der Nutzer beispielsweise eine bestimmte Adresse oder einen bestimmten Ort angeben, zu dem dann geolokale Informationen ermittelt werden, die auf das Nutzerprofil abgestimmt sind. Auf diese Weise kann ein Nutzer beispielsweise vor Antritt einer Reise bereits Informationen am Ort des Ziels der Reise einholen.

Bevorzugt wird das Verfahren in der Weise durchgeführt, dass vom Nutzer ein mobiles Datenverarbeitungsgerät, wie ein Smartphone, mitgeführt wird und die Bestimmung der Geolokation des Nutzers mit Hilfe des mobilen Datenverarbeitungsgeräts durchgeführt wird.

Mit der Vorrichtung zur Ermittlung einer Geolokation des Nutzers wird beim erfindungsgemäßen Verfahren also zunächst die Geolokation des Nutzers festgestellt.

Nachdem die Geolokation des Nutzers bestimmt ist, werden aus der Anbieterdatenbank geolokale Anbieter bestimmt, die eine Geolokation innerhalb eines Bereichs aufweisen, der durch einen bestimmten Abstand zur Geolokation des Nutzers bestimmt ist.

Der bestimmte Abstand zur Geolokation des Nutzers, durch welchen der Bereich bestimmt ist, innerhalb dessen geolokale Anbieter bestimmt werden, kann zunächst beliebig gewählt werden. Der Abstand wird dabei so bestimmt, dass eine für den Nutzer sinnvolle Anzahl an Anbietern ermittelt werden kann, die auf die Interessen des Nutzers abgestimmt sind. Die Anzahl der ausgewählten Anbieter soll bevorzugt so gewählt sein, dass der Nutzer auf dem Ausgabegerät eine einfache und übersichtliche Auswahl an Anbietern angezeigt bekommt. Gemäß einer Ausführungsform wird der geolokale Bereich und damit der Abstand zur Geolokation des Anbieters so gewählt, dass die Anzahl der dem Nutzer angezeigten Treffer kleiner ist als 20 Treffer, gemäß einer weiteren Ausführungsform kleiner als 10 Treffer und gemäß einer weiteren Ausführungsform kleiner als 5 ist.

Ziel des Verfahrens ist, Informationen mit einem relativ engen Bezug zum Aufenthaltsort des Nutzers zur Verfügung zu stellen. Bevorzugt wird der Bereich, innerhalb dessen die geolokalen Anbieter bestimmt werden, als hyperlokaler Bereich gewählt.

Der Abstand zwischen der Geolokation des Anbieters und der Geolokation des Nutzers wird daher bevorzugt klein gewählt, sodass der Nutzer, nachdem er die Information über die Geolokation des Anbieters erhalten hat, relativ rasch zur Geolokation des Anbieters wechseln kann.

Gemäß einer Ausführungsform wird der bestimmte Abstand zur Geolokation des Anbieters zur Bestimmung des Bereichs, innerhalb dessen geolokale Anbieter bestimmt werden so gewählt, dass der bestimmte Abstand geringer als 500 m, gemäß einer weiteren Ausführungsform geringer als 400 m, gemäß einer weiteren Ausführungsform geringer als 300 m, gemäß einer weiteren Ausführungsform geringer als 100 m und gemäß noch einer weiteren Ausführungsform geringer als 50 m gewählt ist. Gemäß einer weiteren Ausführungsform wird der Abstand größer als 10 m gewählt. An sich kann der Abstand aber auch kleiner oder größer als die angegebenen bevorzugten Bereiche gewählt werden.

Der Abstand kann als fester Wert gewählt werden und damit auf alle Anbieter angewandt werden.

Gemäß einer weiteren Ausführungsform ist es aber auch möglich, den Abstand variabel zu wählen. So kann es sinnvoll sein, den Abstand relativ klein zu wählen, wenn der Anbieter sich in einem Umfeld befindet, in welchem beispielsweise relativ viele Ladenlokale angeordnet sind, also eine hohe Dichte von Anbietern vorliegt. Die Dichte der Anbieter in einer bestimmten Umgebung lässt sich beispielsweise aus der Anbieterdatenbank ermitteln. Beispiele für ein Umfeld mit einer hohen Dichte an Anbietern wäre eine Fußgängerzone oder ein Einkaufszentrum.

Der bestimmte Abstand kann gemäß einer weiteren Ausführungsform in Abhängigkeit von der Geschwindigkeit gewählt werden, mit welcher sich der Nutzer vorwärtsbewegt. In einem Umfeld wie einer Fußgängerzone oder einem Einkaufszentrum bewegt sich der Nutzer gewöhnlich zu Fuß, d.h. er hat nur eine geringe Geschwindigkeit der Fortbewegung. Der bestimmte Abstand zwischen der Geolokation des Nutzers und der Geolokation des Anbieters wird in einem solchen Fall eher gering gewählt. Ein geeigneter Abstand ist beispielsweise im Bereich von 5 bis 100 Metern, gemäß einer weiteren Ausführungsform im Bereich von 10 bis 50 m gewählt. In einem Umfeld, in welchem sich der Nutzer beispielsweise vorwiegend mit einem Kraftfahrzug vorwärtsbewegt, kann der Abstand zwischen der Geolokation des Anbieters und der Geolokation des Nutzers größer gewählt werden, um dem Nutzer in geeigneter Weise Informationen, insbesondere hyperlokale Information, zur Verfügung zu stellen.

Es kann auch vorgesehen sein, den Abstand veränderlich einzustellen. Auf diese Weise kann der Nutzer die Ausgabe der Informationen beeinflussen, indem er durch einen größeren Abstand die Anzahl der relevanten Treffer erhöht.

Aus der Anbieterdatenbank wird beim erfindungsgemäßen Verfahren also eine Menge an zumindest einem geolokalen Anbieter bestimmt, wobei der zumindest eine geolokale Anbieter eine Geolokation innerhalb eines geolokalen Bereichs aufweist, der durch einen bestimmten Abstand zur Geolokation des Nutzers bestimmt ist.

Die Bestimmung der geolokalen Anbieter wird mit einer Software durchgeführt, die auf einem Computer ausgeführt wird. Die Software greift dabei auf die Daten zurück, die in der Anbieterdatenbank hinterlegt sind und vergleicht sie mit der Geolokation des Nutzers.

Nachdem geolokale Anbieter ermittelt wurden, die ihre Geolokation innerhalb eines bestimmten Bereichs um die Geolokation des Nutzers haben, vorzugsweise innerhalb eines hyperlokalen Bereichs, wird das Anbieterprofil der geolokalen Anbieter mit dem Nutzerprofil des Nutzers verglichen, das in der Nutzerprofildatenbank hinterlegt ist.

Dazu wird das Nutzerprofil des Nutzers aus der Nutzerprofildatenbank ausgewählt.

Die Kategorien, die in der Nutzerdatenbank mit Einträgen versehen sind, also das zumindest eine kategorisierte Nutzerauswahlkriterium, werden mit den Kategorien des Anbieterprofils, also dem zumindest einen kategorisierten Anbieterauswahlkriterium, verglichen und bestimmt, ob Übereinstimmungen bzw. Korrelationen vorliegen.

Durch den Vergleich wird beim erfindungsgemäßen Verfahren also bestimmt, ob in der Menge an geolokalen Anbieterprofilen ein Anbieterauswahlkriterium umfasst ist, welches mit einem Nutzerauswahlkriterium korreliert.

Eine Korrelation liegt gemäß einer Ausführungsform vor, wenn eine Kategorie in der Nutzerprofildatenbank, also ein kategorisiertes Nutzerauswahlkriterium, mit einer Kategorie in der Anbieterdatenbank, also einem kategorisierten Anbieterauswahlkriterium übereinstimmt. Bei dieser Ausführungsform sind die Kategorien, die für die Kategorisierung der Anbieterauswahlkriterien bzw. der Nutzerauswahlkriterien angewandt werden, gleich. Auf Seiten der Anbieter und auf Seiten der Nutzer werden also dieselben Kategorien für die Kategorisierung von Informationen verwendet.

Eine Korrelation kann gemäß einer weiteren Ausführungsform vorliegen, wenn eine regelbasierte Verbindung zwischen Kategorien auf der Anbieterseite und Kategorien auf der Nutzerseite vorliegt.

Die regelbasierte Verbindung zwischen Kategorien auf der Anbieterseite und Kategorien auf der Nutzerseite kann gemäß einer Ausführungsform in der Weise ausgeführt werden, dass Kategorien auf der Anbieterseite bestimmten Kategorien auf der Nutzerseite zugeordnet werden bzw. Kategorien auf der Nutzerseite bestimmten Kategorien auf der Anbieterseite zugeordnet werden. Die Zuordnung kann in der Weise erfolgen, dass eine Kategorie auf der einen Seite einer bestimmten Kategorie auf der anderen Seite zugeordnet ist. Es ist aber auch möglich, dass eine Kategorie auf der einen Seite mehreren Kategorien auf der anderen Seite zugeordnet ist.

Eine solche Ausführungsform ist vorteilhaft, wenn auf Seite der Nutzer die Kategorien breiter gefasst werden, um die Interessen des Nutzers abzudecken. Den breiter gefassten Kategorien auf der Nutzerseite können dann mehrere Kategorien auf der Anbieterseite zugeordnet sein, die jeweils der breiter gefassten Kategorie auf der Nutzerseite untergeordnet werden können.

Beispielsweise kann auf der Seite des Nutzers eine Kategorie "Sport" besetzt sein. Eine Kategorie "Sportgeräte" auf der Anbieterseite würde dann mit der Kategorie "Sport" auf der Nutzerseite korrelieren, da "Sportgeräte" bei der Ausübung von "Sport" eingesetzt werden. Der Kategorie "Sport" auf der Nutzerseite könnt auf der Anbieterseite parallel dazu auch die Kategorien "Sportvereine", "Fitnessclubs" und "Sportstätten" zugeordnet sein.

Sofern zumindest ein Anbieterauswahlkriterium eines Anbieters mit einem Nutzerauswahlkriterium des Nutzers korreliert, wird dieses zumindest eine Anbieterauswahlkriterium ausgewählt, das einem geolokalen Anbieter zugeordnet ist.

Dem Anbieterprofil ist zumindest eine hyperlokale Information zugeordnet, welche mit dem zumindest einen kategorisierten Anbieterkriterium verknüpft ist.

Eine hyperlokale Information ist eine Informationseinheit, die vom Anbieter angeboten und von einem Nutzer abgerufen bzw. diesem beispielsweise als Push-Nachricht übermittelt werden kann. Die hyperlokale Information wird als Datei beispielsweise auf einem Server abgelegt und kann im Zuge des erfindungsgemäßen Verfahrens dem Nutzer zugänglich gemacht werden. Eine hyperlokale Information kann beispielsweise eine Anzeige, ein Angebot oder ein Hinweis auf eine Aktion sein, die im Zuge des erfindungsgemäßen Verfahrens auf das Smartphone eines Nutzers aufgespielt wird. Die hyperlokale Information kann aber beispielsweise auch eine Angabe über einen Sportverein sein.

Die abrufbare hyperlokale Information ist mit dem zumindest einen kategorisierten Anbieterauswahlkriterium verknüpft. Durch die Verknüpfung kann die hyperlokale Information gezielt an einen Nutzer ausgegeben werden, sofern das kategorisierte Anbieterauswahlkriterium mit dem kategorisierten Nutzerauswahlkriterium des Nutzers korreliert.

Die mit dem ausgewählten Anbieterkriterium verbundene hyperlokale Information wird an ein Ausgabegerät des Nutzers übermittelt.

Die hyperlokale Information wird dann auf dem Ausgabegerät des Nutzers ausgegeben.

Als Ausgabegerät kann an sich jede Vorrichtung verwendet werden, die sich zur Ausgabe von Informationen eignet. Das Ausgabegerät kann beispielsweise einen Bildschirm aufweisen, über welchen die hyperlokale Information dann angezeigt wird. Bevorzugt ist der Bildschirm berührungsempfindlich ausgeführt, sodass er als Schnittstelle für die Eingabe von Informationen genutzt werden kann. Bevorzugt wird als Ausgabegerät ein Smartphone oder ein Tablet-Computer verwendet. Es ist aber beispielsweise auch möglich, eine Datenbrille als Ausgabegerät zu verwenden, bei welcher die hyperlokale Information in das Sichtfeld des Nutzers eingespiegelt wird. Die hyperlokale Information muss nicht visuell dargestellt werden. Es ist beispielsweise auch möglich, die hyperlokale Information als Sprach- oder Textnachricht auszugeben.

Mit dem Ausgeben einer hyperlokalen Information kann ein Hinweis verbunden sein, der den Nutzer auf das Vorliegen einer neuen hyperlokalen Information hinweist. Dieser Hinweis kann beispielsweise ein Ton oder eine kurze Melodie oder auch ein kurzes Summen des Ausgabegeräts sein.

Das Ausgabegerät kann in das mobile Datenverarbeitungssystem integriert sein. Bei einer solchen Ausführungsform kann beispielsweise ein Smartphone als mobiles Datenverarbeitungssystem genutzt werden, über welches die Geolokation des Nutzers festgestellt wird. Die Ausgabe der hyperlokalen Information erfolgt dann ebenfalls über das Smartphone.

Beim erfindungsgemäßen Verfahren werden zur zielgerichteten hyperlokalen Bereitstellung von Informationen an einen Nutzer Nutzerprofile verwendet, die beispielsweise aus Nutzungshandlungen des Nutzers erstellt werden. Dadurch ist das Nutzerprofil an den einzelnen Nutzer gebunden. Es ist nicht notwendig, große Datenmengen zu einer möglichst großen Menge an Nutzern zur Verfügung zu haben um damit Vorhersagen zum Verhalten des Nutzers treffen zu können. Das Nutzerprofil baut sich über die Zeit aus den Handlungen des Nutzers auf, die jeweils als Werte in der Nutzerprofildatenbank abgelegt werden. Die Handlungen des Nutzers können auf an sich beliebigen Gebieten erfolgen. Die Handlungen des Nutzers werden dabei in Kategorien eingeordnet, sodass durch die Handlungen des Nutzers kategorisierte Nutzerauswahlkriterien ermittelt werden können. Die Handlungen des Nutzers erfolgen bevorzugt online, sodass die Handlungen elektronisch erfasst und verarbeitet werden können. Als Handlungen des Nutzers werden also nicht nur das Anklicken einer Anzeige oder der Kauf einer Ware herangezogen, sondern auch Handlungen des Nutzers, die in anderen Bereichen ausgeführt werden, beispielsweise wenn der Nutzer sich über ein bestimmtes Gebiet informiert, das beispielsweise in einem online zur Verfügung gestellten Artikel besprochen wird. Der Artikel ist dann einer bestimmten Kategorie zugeordnet und kann zur Aufstellung von kategorisierten Nutzerauswahlkriterien verwendet werden.

Dadurch kann das Nutzerprofil feiner aufgeschlüsselt werden und ergibt daher ein genaueres Bild des Verhaltens und der Vorlieben des Nutzers. Ferner ist es möglich, Handlungen des Nutzers in verschiedenen Gebieten oder Anwendungen miteinander zu korrelieren, sodass zielgerichtet solche Informationen an den Nutzer ausgegeben werden, die mit den Interessen des Nutzers korrelieren.

Das Verfahren eignet sich daher insbesondere für solche Anwendungen, bei denen die Anzahl der Teilnehmer beschränkt ist. Ähnlich wie bei gedruckten Zeitungen oder Zeitschriften, die, wie Anzeigenblätter, mit einer relativ geringen Auflage erscheinen, wird das Angebot an Informationen, die einem Nutzer mit dem erfindungsgemäßen Verfahren zur Verfügung gestellt werden, sehr stark individualisiert, indem ein starker lokaler Bezug hergestellt wird.

Das Verfahren eignet sich insbesondere für Anwendungen im Bereich digitaler Angebote von Anzeigenblättern, Amtsblättern oder auch für Zeitungen mit einem eng begrenzten Verbreitungsgebiet. Da in das Nutzerprofil Informationen aus verschiedenen Bereichen einfließen können, die sich aus den Interessen des Nutzers ergeben, kann die Information, die an den Nutzer ausgegeben wird, sehr differenziert gestaltet werden. Informationen, die einem Nutzer über verschiedene Kanäle angeboten werden, werden durch die Kategorisierung standardisiert. Da auch die Interessen des Nutzers in Kategorien eingeordnet sind, können angebotene Informationen auf die Interessen des Nutzers abgestimmt ausgegeben werden.

Gemäß einer Ausführungsform beträgt die Anzahl an Nutzer, die an dem erfindungsgemäßen Verfahren teilnimmt, weniger als 2.000.000 Teilnehmer, gemäß einer weiteren Ausführungsform weniger als 500.000 Teilnehmer, gemäß einer weiteren Ausführungsform weniger als 250.000, gemäß noch einer weiteren Ausführungsform weniger als 100.000 und gemäß noch einer weiteren Ausführungsform weniger als 50.000 Teilnehmer. Gemäß einer weiteren Ausführungsform beträgt die Anzahl der Nutzer des erfindungsgemäßen Verfahrens mehr als 1.000 Nutzer, gemäß einer weiteren Ausführungsform mehr als 5.000 Nutzer und gemäß noch einer weiteren Ausführungsform mehr als 10.000 Nutzer. Die Anzahl der Nutzer entspricht dabei der Anzahl der Nutzerprofile, die in der Nutzerprofildatenbank hinterlegt sind.

Gemäß einer Ausführungsform ist vorgesehen, dass ein abgeschlossener Datenraum vorgesehen ist und Handlungen eines Teilnehmers des Verfahrens innerhalb des Datenraums stattfinden.

Unter einem abgeschlossenen Datenraum wird ein Zusammenschluss von Teilnehmern verstanden, bei welchem sich die Teilnehmer innerhalb des abgeschlossenen Datenraums bewegen. Der abgeschlossene Datenraum kann von den Teilnehmern über ein Portal betreten werden, indem sich der Teilnehmer beispielsweise über das Portal im abgeschlossenen Datenraum anmeldet. Ein solches Portal kann beispielsweise genutzt werden, um einem Teilnehmer bestimmte Rechte zu verleihen oder bestimmte Attribute zuzuordnen. Weiter kann gemäß einer Ausführungsform vorgesehen sein, bestimmte Daten zu erheben. Solche Daten können beispielsweise die Zutrittszeit zum Datenraum oder die Aufenthaltsdauer im Datenraum sein. Derartige Daten können dann beispielsweise bei der Gestaltung von Anzeigenpreisen verwendet werden.

Ferner können über ein solches Portal beim Eintritt in den abgeschlossenen Datenraum auch Zustimmungen eingeholt werden, die beispielsweise aus Gründen des Datenschutzes erforderlich sind.

Solche abgeschlossenen Datenräume sind an sich bekannt und werden beispielsweise in sozialen Netzwerken oder auch in Pattformen verwirklicht, in denen z.B. kostenpflichtige Inhalte angeboten werden. Eine solche Plattform kann beispielsweise der online-Auftritt einer Zeitung sein, in welcher bestimmte Artikel nur gegen Bezahlung zugänglich sind.

Bei einer solchen Ausführungsform kann auch vorgesehen sein, das Verhalten eines Teilnehmers zu erfassen. Beispielsweise kann auf diese Weise ein Nutzerprofil erstellt werden, indem die Kategorien von Informationen erfasst werden, welcher der Nutzer während seines Aufenthalts im abgeschlossenen Datenraum abgerufen hat. Insbesondere wenn der Nutzer über einen längeren Zeitraum im abgeschlossenen Datenraum angemeldet verbleibt und sich wiederholt im abgeschlossenen Datenraum bewegt um dabei beispielsweise kategorisierte Informationen abzurufen, kann sich über den Zeitraum hinweg ein Nutzerprofil aufbauen, das auf den jeweiligen Nutzer abgestimmt ist, sodass dem Nutzer Informationen übermittelt werden können, die seinen Interessen entsprechen.

Teilnehmer des Verfahrens sind insbesondere Nutzer, Anbieter sowie ggf. dritte Parteien.

Dritte Parteien sind Teilnehmer des Verfahrens, welche kategorisierte Informationen bereitstellen, die von einem Nutzer abgerufen und damit zum Aufbau eines Nutzerprofils verwendet werden können. Diese dritten Parteien stellen aber nicht notwendigerweise hyperlokale Informationen zur Verfügung und es ist auch nicht unbedingt erforderlich, dass die Geolokation der dritten Parteien angegeben ist.

Bei der beschriebenen Ausführungsform gehen die im Nutzerprofil gesammelten Informationen verloren, wenn der Nutzer den abgeschlossenen Datenraum wieder verlässt. Bei einer erneuten Anmeldung muss das Nutzerprofil dann wieder neu aufgebaut werden.

Gemäß einer bevorzugten Ausführungsform ist eine Zulassungsschranke zum abgeschlossenen Datenraum vorgesehen, wobei dem Teilnehmer eine Zugangsberechtigung zugeordnet ist durch welche der Teilnehmer mit der Zugangsberechtigung in den abgeschlossenen Datenraum eintreten kann.

Um die Zulassungsschranke zu überwinden, kann sich der Teilnehmer mit seiner Zugangsberechtigung im abgeschlossenen Datenraum anmelden und diesen dann betreten. Dazu ist eine entsprechende Software vorgesehen.

Bei einer solchen Ausführungsform sind die Teilnehmer des Verfahrens identifizierbar. Damit ist es möglich, den Teilnehmern bestimmte Rechte zuzuordnen. So können Anbieter oder dritte Parteien beispielsweise das Recht haben, Informationen, insbesondere kategorisierte Informationen, im Datenraum hochzuladen.

Der Teilnehmer benötigt zunächst eine Registrierung. Diese Registrierung kann beispielsweise beim erstmaligen Anmelden des Teilnehmers im Datenraum vergeben werden. Bei dieser Anmeldung können beispielsweise der Klarname und andere persönliche Daten abgefragt werden, die eine Identifikation des Teilnehmers ermöglichen. Ferner können ggf. verschiedene Erklärungen vom Teilnehmer abgegeben werden. Die Daten und Erklärungen können in einer Datenbank abgelegt werden. Es ist dann nicht mehr notwendig, die Daten und Erklärungen erneut abzufragen, wenn sich der Teilnehmer erneut im abgeschlossenen Datenraum anmeldet. Nach abgeschlossener Registrierung erhält der Teilnehmer eine Identifikation, welche speziell ihm zugeordnet ist.

Mit der Identifikation meldet sich der Teilnehmer bei einem erneuten Besuch des Datenraums an.

Ist der Teilnehmer ein Nutzer, kann dem Nutzer mit der Anmeldung das zugehörige Nutzerprofil zugeordnet werden. Dies ermöglicht zum einen, dass das Nutzerprofil des Nutzers während seines Aufenthalts im abgeschlossenen Datenraum weiter modifiziert wird und dass zum anderen dem Nutzer mit dem erfindungsgemäßen Verfahren hyperlokale Information übermittelt wird, die mit zunehmender Ergänzung des Nutzerprofils immer genauer auf die Interessen des Nutzers abgestimmt ist.

Auf der Nutzerseite kann also das Nutzerprofil abgelegt werden. Auf diese Weise steht das Nutzerprofil weiterhin zur Verfügung, wenn der Nutzer den abgeschlossenen Datenraum verlässt. Betritt der Nutzer den Datenraum erneut, kann durch die Identifikation des Nutzers das zugehörige Nutzerprofil erneut aufgerufen werden. Bei weiteren Handlungen des Nutzers kann dann das Nutzerprofil weiter ergänzt und damit präzisiert werden. Die an den Nutzer ausgegebene Information kann damit präziser auf die Interessen des Nutzers abgestimmt werden.

Ist der Teilnehmer ein Anbieter, können dem Anbieter bestimmte Rechte zugeordnet werden. Ein solches Recht wäre beispielsweise das Recht, Informationen, insbesondere hyperlokale Informationen, in den abgeschlossenen Datenraum hochzuladen.

Der Anbieter kann beispielsweise im abgeschlossenen Datenraum eine eigene Homepage installieren, auf welcher er kategorisierte Informationen zur Verfügung stellt. Insbesondere kann der Anbieter abrufbare hyperlokale Informationen im abgeschlossenen Datenraum hochladen, die im Zuge des erfindungsgemäßen Verfahrens an einen Nutzer ausgegeben werden kann.

Gemäß einer Ausführungsform sind dem Anbieter ein oder mehrere kategorisierte Anbieterkriterien zugeordnet. Beim Hochladen der Information können diese kategorisierten Anbieterauswahlkriterien dann automatisch mit der Information verknüpft werden, wodurch kategorisierte Information erhalten wird. Dadurch kann die Bereitstellung von kategorisierter Information durch den Anbieter vereinfacht werden. Bei dieser Ausführungsform wird einem Anbieter also zumindest ein kategorisiertes Anbieterauswahlkriterium zugeordnet. Es werden Informationen bereitgestellt und die Informationen mit dem zumindest einen Anbieterauswahlkriterium verknüpft, wobei kategorisierte Information erhalten wird. Wie weiter oben beschrieben, wird das Anbieterauswahlkriterium, also die Kategorie, als Datensatz dargestellt. Die Information wird ebenfalls als Datensatz dargestellt. Durch Zuordnung des Datensatzes der Kategorie zum Datensatz der Information wird kategorisierte Information erhalten, also ein strukturierter Datensatz. Die kategorisierte Information wird im Datenraum hochgeladen und dem Anbieter zugeordnet.

Gemäß einer Ausführungsform werden die kategorisierten Informationen vom Anbieter selbst erstellt bzw. in den Datenraum hochgeladen. Dazu kann ein entsprechendes Portal vorgesehen sein, durch welches der Anbieter nach Anmeldung den Datenraum betritt. Auf diese Weise kann beispielsweise ein Einzelhändler im Datenraum eine Homepage erstellen, auf welcher er sein Unternehmen präsentiert und Aktionen bewirbt. Dazu können entsprechende Computerprogramme vorgehalten werden. Durch die Voreinstellung des zumindest einen kategorisierten Anbieterauswahlkriteriums wird die Homepage und die in ihr enthaltene Information automatisch den richtigen Kategorien zugeordnet, sodass die Homepage beispielsweise auch dazu genutzt werden kann, ein Nutzerprofil zu modifizieren, wenn ein Nutzer die Homepage besucht.

Gemäß einer weiteren Ausführungsform kann die kategorisierte Information auch von Dritten, beispielsweise entsprechend geschulten Dienstleistern, erstellt und im Datenraum hochgeladen werden.

Neben Nutzern und Anbieter können noch weitere Bereitsteller von Informationen am erfindungsgemäßen Verfahren vorgesehen sein. Diese weiteren Bereitsteller von Informationen stellen Informationen zur Verfügung, die für einen Nutzer von Interesse sein können. Im Gegensatz zu Anbietern nutzen die weiteren Bereitsteller von Informationen jedoch nicht das Verfahren um hyperlokale Information an einen Nutzer auszugeben. Solche weiteren Teilnehmer können beispielsweise Sportvereine, Tourismusbüros, Ämter, Experten etc. sein. Die Informationsangebote dieser weiteren Teilnehmer können genutzt werden, um das Nutzerprofil aufzubauen. Dazu wird die von den weiteren Teilnehmern bereitgestellte Information in der oben beschriebenen Weise kategorisiert, sodass kategorisierte Informationen bereitgestellt werden. Ein Bereitsteller von Informationen kann auch die Rolle eines Anbieters einnehmen. Beispielsweise kann ein Tourismusbüro Informationen auf seiner Homepage zur Verfügung stellen, also als Bereitsteller von Informationen auftreten. Es kann aber auch als Anbieter auftreten, beispielsweise wenn es hyperlokale Informationen zur Verfügung stellt, die einem Nutzer zugestellt werden, wenn sich dieser an einem bestimmten Ort aufhält, beispielsweise einer Sehenswürdigkeit.

Für die Kategorisierung der von weiteren Parteien zur Verfügung gestellten Informationen können gemäß einer Ausführungsform die gleichen Kategorien verwendet werden, wie sie auch für die Kategorisierung von Informationen verwendet wird, die von Anbietern zur Verfügung gestellt werden. Gemäß einer weiteren Ausführungsform werden für die Kategorisierung die gleichen Kategorien verwendet, wie für die Erstellung der kategorisierten Nutzerauswahlkriterien.

Gemäß einer Ausführungsform des Verfahrens wird eine Taxonomie bereitgestellt, und die kategorisierte Information durch Anwendung der Taxonomie auf eine Information erhalten.

Durch die Taxonomie kann eine standardisierte Zuweisung von Kategorien zu Informationen erreicht werden. In Informationen, die bestimmten Themengebieten zugeordnet sind, werden unter derselben Kategorie zusammengefasst.

Die Anwendung der Taxonomie kann durch eine entsprechend ausgestaltete Software erfolgen.

Dabei können gemäß einer ersten Ausführungsform Elemente definiert werden, die einer bestimmten Kategorie zugeordnet werden. Solche Elemente können beispielsweise bestimmte Begriffe oder Bildelemente sein. Durch Kombination mehrerer Elemente, beispielsweise Begriffe bzw. Bildelemente, kann eine genauere Zuordnung der Information zu bestimmten Kategorien erreicht werden. Die Software durchsucht die Information dann auf das Vorhandensein der Elemente. Findet die Software Elemente oder Kombinationen von Elementen, wird die Information der entsprechenden Kategorie zugeordnet.

Gemäß einer zweiten Ausführungsform kann für die Kategorisierung auch eine künstliche Intelligenz eingesetzt werden. Dabei wird in einem ersten Schritt ein Datensatz zur Verfügung gestellt, welcher Informationen enthält, die bestimmten Kategorien zugeordnet sind. Mit diesem Datensatz kann dann eine künstliche Intelligenz trainiert werden. Nach dem Training kann die künstliche Intelligenz dann auf Informationen angewandt werden, die von Anbietern oder sonstigen Teilnehmern in den Datenraum hochgeladen werden, wobei eine kategorisierte Information erhalten wird.

Das Verfahren wendet Text-Mining an, um Informationen aus dem Datensatz zu extrahieren und diese bestimmten Kategorien zuzuordnen.

Sowohl für die erste Ausführungsform, bei der eine Taxonomie erstellt wird, die dann auf Informationen angewandt werden kann, als auch bei der zweiten Ausführungsform, bei welcher die Taxonomie mit Hilfe einer künstlichen Intelligenz erstellt wird, kann vorteilhaft auf Daten zurückgegriffen werden, wie sie bei Verlagen, beispielsweise Verlagen für Anzeigenblätter, in großer Menge aus deren Tätigkeit in der Vergangenheit vorhanden sind.

Beim erfindungsgemäßen Verfahren wird also zunächst eine Information bereitgestellt. Diese Information kann an sich beliebig sein. Mithilfe der Taxonomie wird dann die Information in eine oder mehrere Kategorien eingeordnet, sodass kategorisierte Information erhalten wird. Wie oben beschrieben, werden dadurch strukturierte Datensätze erhalten.

Gemäß einer Ausführungsform wird die Taxonomie auf Informationen angewandt, die vom Anbieter bereitgestellt wird. Die Information wird vom Anbieter in elektronischer Form bereitgestellt sodass diese mittels einer Software durchsucht und kategorisiert wird, sodass kategorisierte Information erhalten wird. Dazu kann beispielsweise Text-Mining angewandt werden.

Gemäß einer weiteren Ausführungsform wird die Taxonomie auf Informationen angewandt, die von weiteren Bereitstellern von Information bereitgestellt werden, sodass kategorisierte Information erhalten wird.

Gemäß einer weiteren Ausführungsform wird die Taxonomie auf alle Informationen angewandt, die im Datenraum, insbesondere dem abgeschlossenen Datenraum bereitgestellt werden, wobei kategorisierte Information erhalten wird.

Gemäß einer weiteren Ausführungsform wird die Taxonomie auf das Nutzerprofil angewandt. Bei dieser Ausführungsform sind die kategorisierten Nutzerauswahlkriterien entsprechend zur Taxonomie definiert. Die kategorisierten Nutzerauswahlkriterien stimmen mit den Kategorien überein, die von der Taxonomie vergeben werden, wobei diejenigen Kategorien einem kategorisierten Nutzerauswahlkriterium entsprechen, in welchen der Nutzer eine Aktivität entfaltet, also kategorisierte Information auswählt, beispielsweise die kategorisierte Information anklickt, wenn diese auf einem Display angezeigt wird.

Durch Anwenden der Taxonomie auf alle Information, die in den im Verfahren verwendeten Profilen kategorisiert vorliegen, wird ein Abgleich von Nutzerprofilen und Anbieterprofilen wesentlich vereinfacht.

Gemäß einer Ausführungsform weist die Taxonomie mehr als eine Bewertungsebene auf. Eine höhere Bewertungsebene bildet dabei gemäß einer weiteren Ausführungsform eine Untergruppe der niedrigeren Bewertungsebene. Über die Taxonomieebenen kann innerhalb einer Kategorie eine genauere Beurteilung der Information erfolgen, da diese auch den höheren Taxonomieebenen zugeordnet ist. Zur technischen Umsetzung kann eine entsprechende Information in einem Tag enthalten sein, das der zu kategorisierenden Information angefügt wird,.

Die Einteilung in verschiedene Taxonomieebenen kann genutzt werden, um Angebote genauer auf die Interessen des Nutzers abzustimmen.

Gemäß einer ersten Ausführungsform kann zur Bereitstellung der Taxonomie ein Baumdiagramm aus Kategorien erstellt werden, welches mehrere Bewertungsebenen umfasst. Die zu kategorisierende Information wird dann in die Kategorien eingeordnet.

Gemäß einer Ausführungsform umfasst das Baumdiagramm zumindest zwei Bewertungsebenen. Gemäß einer weiteren Ausführungsform umfasst das Baumdiagramm zumindest drei Bewertungsebenen. Gemäß einer weiteren Ausführungsform umfasst das Baumdiagramm weniger als acht Bewertungsebene, gemäß einer weiteren Ausführungsform weniger als sechs Bewertungsebenen.

Bei einem Baumdiagramm bilden die Kategorien einer höheren Ebene jeweils Unterkategorien einer niedrigeren Ebene. Jede Kategorie ist demnach mit der nächsthöheren bzw., nächst niedrigeren Kategorie verbunden und bildet eine Unter- bzw. Übergruppe. Dabei kann eine Kategorie der höheren Ebene auch mehreren Kategorien, beispielsweise ein bis drei Kategorien, der niedrigeren Kategorie zugeordnet sein, bzw. eine Kategorie der niedrigeren Kategorie auch mehreren Kategorien der höheren Kategorie zugeordnet sein.

Beispielsweise kann eine niedrigere Kategoire "Ballspiele" den höheren Kategorien "Handball", "Fußball", "Basketball" zugeordnet sein. Die höheren Kategorien "Handball", "Fußball", "Basketball" können aber neben der niedrigeren Kategorie "Ballspiele" auch der niedrigeren Kategorie "Sportverein" oder "Gaststätten", "Einzelhandel Sport" zugeordnet sein.

Ein solches Baumdiagramm kann auf der Grundlage einer bekannten Informationsmenge einmalig erstellt werden. Eine solche Informationsmenge kann beispielsweise durch Auswertung von bereits erschienenen Zeitungen, Zeitschriften oder Anzeigenblättern erstellt werden, indem beispielsweise Artikel, Anzeigen oder sonstige Bekanntmachungen in einzelnen Kategorien zusammengefasst werden.

Gemäß einer Ausführungsform umfasst die Taxonomie zumindest drei Bewertungsebenen, wobei eine höhere Bewertungsebene eine Untergruppe einer niedrigeren Bewertungsebene ist.

Die Taxonomie weist also in dieser Ausführungsform mehrere Ebenen auf, wobei niedrigere Bewertungsebenen Begriffe mit einem breiteren Bedeutungsumfang enthalten. Diesen Begriffen sind dann in der nächsthöheren Bewertungsebene Begriffe mit einem geringeren Bedeutungsumfang zugeordnet, die jedoch von dem Begriff in der niedrigeren Bewertungsebene erfasst werden.

Die Auswahl der Tags, welche die entsprechende Information über die Ebene enthalten, erfolgt dann über ein Verfahren, bei dem die verschiedenen Kategorien und Ebenen durch geprüft werden. Ergibt sich, dass die zu kategorisierende Information zu einer bestimmten Ebene und dort zu einer bestimmten Kategorie zugehörig ist, wird der entsprechende Tag der Information beigefügt.

Beispielsweise können in einer Taxonomie mit drei Bewertungsebenen der niedrigsten Kategorie "Freizeit und Unterhaltung" in der nächst höheren Bewertungskategorie die Kategorien "Freizeitaktivität", "Verein", "Essen, Trinken, Genuss" zugeordnet sein. Der Kategorie "Essen, Trinken, Genuss" können dann in der höchsten Bewertungsebene die Kategorien "Bar", "Café", "Restaurant", "Rezepte", "regionale Spezialitäten" zugeordnet werden.

Auf Anbieterseite werden alle Angebote in die entsprechenden Kategorien eingeordnet. So wird beispielsweise die Homepage eines Restaurants in die Kategorien "Freizeit und Unterhaltung" - "Essen, Trinken, Genuss" - "Restaurant" eingeordnet.

Ebenso werden auf der Seite des Nutzer Kategorien angelegt und bewertet. Besucht der Nutzer beispielsweise eine Homepage mit Kochrezepten, werden im Nutzerprofil die Kategorien "Freizeit und Unterhaltung" - "Essen, Trinken, Genuss" und "Rezepte" angelegt bzw. bewertet.

Hält sich ein Nutzer nun in der Nähe des oben erwähnten Restaurants auf, d.h. seine Geolokation stimmt mit dem vorbestimmten Abstand mit der Geolokation des Anbieters überein, so wird eine hyperlokale Information des Anbieters, beispielsweise ein Hinweis auf das Restaurant oder ein spezifischer Hinweis des Restaurants, z.B. ein Hinweis auf eine Aktionswoche, auf dem Ausgabegerät des Nutzers ausgegeben.

Gemäß einer Ausführungsform des Verfahrens umfasst eine Bewertungsebene in der Taxonomie zumindest eine Kategorie. Gemäß einer Ausführungsform können Kategorien verschiedener Bewertungsebenen gleich gewählt werden.

Beispielsweise kann in der niedrigsten Bewertungsebene die Kategorie "Sport" vorgesehen sein.

In der nächst höheren (mittleren) Bewertungsebene können dann beispielsweise die Kategorien "Sportbekleidung und Zubehör", "Mannschaftssportarten" und "Individualsportarten" vorgesehen sein.

In der höchsten Bewertungsebene können der mittleren Kategorie "Sportbekleidung und Zubehör" dann beispielsweise die Kategorien "Sportbekleidung", "Sportgeräte" und "Sportschuhe" zugeordnet sein.

Der Kategorie "Mannschaftssportarten" können dann in der höchsten Bewertungsebene beispielsweise die Kategorien "Fußball", "Handball", "Hockey" zugeordnet sein.

Gemäß einer Ausführungsform kann vorgesehen sein, dass eine höhere Bewertungsebene nicht weiter ausdifferenziert wird, also keine Kategorie in der nächst höheren Kategorie vorgesehen ist oder in der nächst höheren Bewertungsebene keine weiteren Unterkategorien vorgesehen sind. Beispielsweise kann die Taxonomie auch so gefasst sein, dass die Kategorie einer mittleren Bewertungsebene mit der Kategorie einer höchsten Bewertungsebene übereinstimmt.

Gemäß einem Beispiel kann der untersten Kategorie "Sport" in der mittleren Bewertungsebene die Kategorie "Angelsport" zugeordnet sein. Wird keine weitere Differenzierung vorgenommen, ist in der höchsten Kategorie dann ebenfalls die Kategorie "Angelsport" vorgesehen, die der mittleren Kategorie "Angelsport" zugeordnet ist. Gemäß einer anderen Ausführungsform kann die Taxonomie auch so gefasst sein, dass der untersten Bewertungsebene "Sport" in der mittleren Bewertungsebene die Kategorie "Angelsport" zugeordnet ist. Eine weitere Kategorisierung in höheren Bewertungsebenen erfolgt nicht.

Beim Abgleich von Anbieterprofil und Nutzerprofil in Abhängigkeit von der Geolokation des Nutzers wird bei diesem Beispiel dann die mittlere Bewertungsebene für die Ausgabe von geolokaler Information herangezogen.

Neben einer Taxonomie mit drei Bewertungsebene, wie vorstehend beschrieben, kann auch eine Taxonomie verwendet werden, die mehr als drei Bewertungsebenen umfasst, beispielsweise vier oder fünf Bewertungsebenen.

An sich kann die Zahl der Bewertungsebenen beliebig groß gewählt werden. Gemäß einer Ausführungsform wird die Anzahl der Bewertungsebenen kleiner als 10, gemäß einer weiteren Ausführungsform kleiner als 8 und gemäß einer weiteren Ausführungsform kleiner als 6 gewählt.

Gemäß einer anderen Ausführungsform wird eine Taxonomie verwendet, bei der Kategorien miteinander verknüpft sind, vorzugsweise sämtliche Kategorien miteinander verknüpft sind, wobei den Verknüpfungen Gewichtungen zugeordnet sind. Die Gewichtungen können Werte zwischen 0 und 1 annehmen. Bei einer Verknüpfung mit der Gewichtung "0" besteht kein Zusammenhang zwischen den beiden Kategorien. Bei einer Gewichtung "1" besteht ein unbedingter Zusammenhang zwischen den beiden Kategorien.

Werden zwei Kategorien betrachtet, die mit einander verknüpft sind, so erfolgt bei einem Eintrag "1" in der ersten Kategorie bei einer Gewichtung "0" der Verknüpfung ein Eintrag "0" in der zweiten Kategorie. Bei einer Gewichtung "1" der Verknüpfung erfolgt entsprechend ein Eintrag "1" in der zweiten Kategorie. Zwischenwerte sind bei der Gewichtung ebenfalls möglich. Entsprechend erfolgt bei einem Eintrag "1" in der ersten Kategorie ein Eintrag entsprechend des Zwischenwertes in der zweiten Kategorie.

Die Gewichtungen für die Verknüpfungen der Kategorien kann auf der Grundlage eines bestehenden Datensatzes ermittelt werden. Dazu können beispielsweise statistische Verfahren herangezogen werden. Es ist gemäß einer Ausführungsform auch möglich, die Gewichtungen während einer länger währenden Ausführung des Verfahrens zu verändern bzw. zu modifizieren, wobei Daten aus dem laufenden Betrieb dazu verwendet werden, die Gewichtungen der Verbindungen zwischen den Kategorien zu modifizieren oder anders ausgedrückt, nachzujustieren.

Bei einem Aufbau eines Nutzerprofils bewirkt bei der betrachteten Ausführungsform also ein Eintrag in einer Kategorie einen Eintrag in anderen Kategorien. Dadurch kann ein relativ genaues Nutzerprofil erstellt werden, welches dann einen entsprechend zielgerichteten Abgleich mit den Anbieterprofilen ermöglicht.

Wie erläutert, kann eine Kategorisierung von Information durchgeführt werden, indem Elemente, wie Worte, Wortkombinationen oder beispielsweise auch Bildelemente in einer Information identifiziert werden und dann dazu verwendet werden, um Informationen bestimmten Kategorien zuzuordnen um auf diese Weise kategorisierte Informationen bereitzustellen.

Werden beispielsweise Online-Auftritte, Zeitungsartikel, Anzeigen etc. als kategorisierte Information zur Erzeugung eines Nutzerprofils eingesetzt, werden nicht notwendigerweise nur bestimmte Taxonomiebegriffe verwendet, die dann eine Zuordnung zu einer bestimmten Kategorie ermöglichen. Vielmehr werden regelmäßig synonyme Begriffe oder Unterbegriffe eines Taxonomiebegriffes verwendet. Unter einem Taxonomiebegriff werden in diesem Zusammenhang Worte oder Wortkombinationen verstanden, die als Elemente verwendet werden um einer Information eine bestimmte Kategorie zuzuordnen.

Da für einen bestimmten Begriff in der Sprache mehrere äquivalente Begriffe üblich sein können kann gemäß einer ersten Ausführungsform so verfahren werden, dass alle diese Begriffe einer bestimmten Kategorie zugeordnet werden. Bei der Anwendung der Taxonomie auf eine Information wird dann bevorzugt durch eine Software in der Information, welche in elektronischer Form bereitgestellt wird, nach den Begriffen gesucht und bei Auffinden der Begriffe die Information einer bestimmten Kategorie zugeordnet um auf diese Weise kategorisierte Information zu erhalten.

Um eine effiziente Kategorisierung von Informationen zu ermöglichen ist gemäß einer weiteren Ausführungsform vorgesehen, dass ein Thesaurus bereitgestellt wird und mit Hilfe des Thesaurus Begriffe, wie Synonyme oder Unterbegriffe, einer bestimmten Kategorie zugeordnet werden. Auf diese Weise kann eine größere Menge an bereitstehenden Informationen zum Erstellen von kategorisierter Information und damit zum Aufbau eines Nutzerprofils genutzt werden, wobei die Informationen mithilfe des Thesaurus in eine begrenzte Anzahl an Kategorien eingeordnet werden können.

Der Thesaurus kann beispielsweise erstellt werden, indem bestimmten Begriffen, die bestimmten Kategorien zugeordnet sind, Synonyme zugeordnet werden. Auf diese Weise lassen sich beispielsweise Begriffe, die nur lokal verwendet werden, einer bestimmten Kategorie zuordnen. Ein Beispiel für lokal übliche Begriffe sind die Bezeichnungen "Brötchen", "Semmel", "Schrippe", "Rundstück", "Weck", "Weckli", "Weckerl" für eine Backware. Sämtliche Bezeichnungen würden mit Hilfe des Thesaurus beispielsweise in eine Kategorie "Backwaren" oder "Bäckerei" eingeordnet.

Über den Thesaurus lassen sich aber beispielsweise auch Unterbegriffe einem bestimmten Oberbegriff zuordnen, der dann einer bestimmten Kategorie zugeordnet ist. So können die Begriffe "Kaisersemmel", "Lemgoer Stohsemmel", "Riemische", "Maurer", "Baguette-Brötchen" der Kategorie "Backwaren" bzw. "Bäckerei" zugeordnet werden.

Auf diese Weise lässt sich die Anwendung des Verfahrens auf eine größere Gruppe von Nutzern anwenden, da beispielsweise regionale Spracheigenheiten berücksichtigt werden. Interessant ist diese Ausführungsform beispielsweise im Hinblick auf Tourismus, da auch dann das Nutzerprofil eines Nutzers, der sich als Tourist in einem Feriengebiet aufhält, auf die Anbieterprofile aus dem Feriengebiet anwenden lässt.

Neben Nutzern und Anbietern können auch dritte Parteien am erfindungsgemäßen Verfahren beteiligt sein. Eine solche Dritte Partei kann beispielsweise ein Bereitsteller von Informationen sein. Die Dritten Parteien stellen bei dieser Ausführungsform kategorisierte Informationen zur Verfügung. Sie treten jedoch nicht als Anbieter auf, welcher eine hyperlokale Information an einen Nutzer ausgibt.

Derartigen Dritten Parteien können bestimmte Rechte zugeordnet werden. So kann einer dritten Partei beispielsweise das Recht zugeordnet werden, Information, insbesondere kategorisierte Information, im abgeschlossenen Datenraum bereitzustellen.

Ebenso ist es möglich, dritten Parteien Merkmale zuzuordnen. Ein solches Merkmal ist insbesondere eine Kategorie, die einer von der dritten Partei bereitgestellten Information zugeordnet wird, sodass kategorisierte Information erhalten wird.

Eine solche dritte Partei kann beispielsweise ein Experte sein, der Fachartikel online bereitstellt. Solche Fachartikel können sich beispielsweise auf Gesundheitsthemen, Gartenbau, Reisen etc. beziehen. Gemäß einer weiteren Ausführungsform werden der dritten Partei bestimmte Kategorien zugeordnet. Wird von der dritten Partei, beispielsweise einem Experten, Information hochgeladen, so wird die Information mit der der dritten Partei zugeordneten Kategorie verbunden, sodass kategorisierte Information erhalten wird. Ruft ein Nutzer die kategorisierte Information auf, so kann die der kategorisierten Information zugeordnete Kategorie für die Modifikation des Nutzerprofils genutzt werden. Ein weiteres Beispiel für eine derartige dritte Partei kann ein Veranstalter sein, der im vorzugsweise abgeschlossenen Datenraum Veranstaltungshinweise als kategorisierte Information anbietet oder beispielsweise als kategorisierte Information Karten für diese Veranstaltungen anbietet bzw. verkauft. Klickt der Nutzer auf einen Veranstaltungshinweis, führt dies zu einem entsprechenden Eintrag in seinem Nutzerprofil. Ebenso kann der Kauf der Karte, welcher bevorzugt online erfolgt, als kategorisierte Information angesehen werden. Beim Kauf der Karte durch einen Nutzer wird dann kategorisierte Information verarbeitet. Die der kategorisierten Information zugeordnete Kategorie kann dann wiederum zur Modifikation des Nutzerprofils genutzt werden.

Gemäß einer weiteren Ausführungsform kann als dritte Partei eine Freigabeinstanz vorgesehen sein. Eine Freigabeinstanz ist beispielsweise eine Software, die eine kategorisierte Information, beispielsweise einen Artikel, unter einer bestimmten Bedingung freigibt, insbesondere zur Veröffentlichung freigibt. Eine solche Bedingung kann beispielsweise ein Termin sein, zu welchem der Artikel online gestellt wird.

Als Freigabeinstanz kann aber auch eine Prüfungsinstanz vorgesehen sein, die nach Prüfung einer Information, beispielsweise eines Artikels, diesen für die Veröffentlichung freigibt.

Bei dieser Ausführungsform wird also zunächst von einer dritten Partei, beispielsweise einem Experten, eine Information bereitgestellt. Diese Information kann beispielsweise ein Artikel zu einem bestimmten Themengebiet sein. Diese Information kann gemäß einer Ausführungsform bereits einer oder mehreren Kategorien zugeordnet sein, also als kategorisierte Information bereitgestellt sein. Als Freigabeinstanz kann dann beispielsweise eine Redaktion vorgesehen sein, beispielsweise eine Redaktion eines Anzeigenblatts, welche den Artikel prüft und dann zur Veröffentlichung freigibt. Der Artikel, also die kategorisierte Information, kann dann veröffentlicht werden, vorzugsweise im abgeschlossenen Datenraum.

Anzeigenblätter haben traditionell gute Beziehungen zu Organisationen und Institutionen, welche vor Ort angesiedelt sind. Diese Organisationen und Institutionen liefern beispielsweise auch Inhalte, welche dann im Anzeigenblatt veröffentlicht werden. Eine solche Organisation ist beispielsweise ein Verein, wie ein Sportverein, ein Gartenverein, ein Heimatverein, ein Chor etc. oder auch eine Kirchengemeinde. Diese Organisationen veröffentlichen traditionell beispielsweise Termine im Anzeigenblatt oder auch Berichte über Veranstaltungen. Diese Inhalte werden in einer Redaktion des Anzeigenblatts bearbeitet und dann veröffentlicht. Als Institution kann beispielsweise eine Gemeinde auftreten. Die Anzeigenblätter erfüllen dann beispielsweise auch die Aufgaben eines Amtsblatts, in welchem beispielsweise Beschlüsse des Gemeinderats und weitere Bekanntmachungen veröffentlicht werden.

Ein solches Netzwerk aus Organisationen und Institutionen lässt sich auch mit dem erfindungsgemäßen Verfahren verwirklichen. Die von den Organisationen und Institutionen bereitgestellten Informationen können kategorisiert und dazu genutzt werden, das Nutzerprofil eines Nutzers zu erstellen oder zu modifizieren.

Gemäß einer Ausführungsform des Verfahrens ist vorgesehen, dass ein Redaktionssystem bereitgestellt ist, mit welchem Informationen, wie Artikel, insbesondere kategorisierte Informationen online erstellt und bereitgestellt werden.

Ein solches Redaktionssystem ist zur Bereitstellung von Inhalten für Online-Publikationen, wie Artikeln, sowie von Anzeigen, Bekanntmachungen, wie auch amtlichen Bekanntmachungen ausgebildet. Die Inhalte stellen jeweils kategorisierte Informationen dar. Dazu werden den mit dem Redaktionssystem erstellten Inhalten eine oder mehrere Kategorien zugeordnet, welche dann kategorisierte Information darstellen. Ruft ein Nutzer dann beispielsweise einen Artikel, wie einen Artikel über ein Sportereignis auf, können die mit dem Artikel verbundenen Kategorien zu entsprechenden Einträgen bzw. Bewertungen in den Kategorien des Nutzerprofils führen, also kategorisierte Nutzerauswahlkriterien bilden. Da derartige Online-Publikationen sehr abwechslungsreich gestaltet werden können und einen Vielzahl von Themen abdecken, werden sie von den Nutzern öfters aufgerufen und ermöglichen so eine relativ rasche und detaillierte Aufstellung eines Nutzerprofils einer vergleichsweise großen Zahl an Nutzern.

Das Redaktionssystem umfasst bevorzugt zumindest einen Zugangsbereich, einen Eingabebereich, sowie einen Freigabebereich.

Im Zugangsbereich erfolgt eine Anmeldung eines Teilnehmers im Redaktionssystem. Dabei ist bevorzugt vorgesehen, dass sich der Teilnehmer über eine Zugangsberechtigung im Zugangsbereich anmeldet. Die Zugangsberechtigung kann beispielsweise über ein Passwort vergeben werden. Es sind aber auch andere Verfahren möglich, über welche eine Zugangsberechtigung geregelt wird, beispielsweise über eine mit einem Code versehene Chipkarte, die in ein entsprechendes Lesegerät eingesteckt wird und an eine zentrale Instanz den Code übermittelt.

Vorzugsweise ist im Zugangsbereich eine Registriereinheit vorgesehen, in welcher Angaben zum Teilnehmer registriert sind. Neben dem Namen des Teilnehmers können gemäß einer Ausführungsform weitere Daten hinterlegt sein. Beispielhafte Daten sind Zugangsberechtigungen, mit welchen zum Beispiel Berechtigungen hinterlegt sind, Veröffentlichungen in bestimmten Bereichen des abgeschlossenen Datenraums einzustellen. Gemäß einer bevorzugten Ausführungsform sind Kategorien hinterlegt, die dem Teilnehmer zugeordnet sind. Wird vom Teilnehmer Information erstellt, wie ein Artikel, kann der Information die Kategorie zugeordnet werden, sodass kategorisierte Information erhalten wird. Die Zuordnung der Kategorien wird bevorzugt mit einer entsprechend gestalteten Software durchgeführt.

Beispielsweise kann ein Teilnehmer des Redaktionssystems ein Schriftwart eines bestimmten Sportvereins sein. Dieser Schriftwart veröffentlicht Mitteilungen aus seinem Sportverein, beispielsweise einen Bericht über ein Fußballspiel. Der Bericht stellt eine Information dar, die im erfindungsgemäßen Verfahren als kategorisierte Information genutzt werden kann. Dem Schriftführer wird eine Zugangsberechtigung zugewiesen, mit welcher er Artikel in bestimmte Bereiche des Online-Auftritts einstellen kann. Ein solcher bestimmter Bereich ist beispielsweise der online-Auftritt eines Anzeigenblatts für ein bestimmtes Gebiet, beispielsweise eine bestimmte Gemeinde. Mit der Zugangsberechtigung könnte er weiter in dem online Auftritt des bestimmten Anzeigenblatts Artikel in der Rubrik "Sport" veröffentlichen und dort wiederum in einer Unterrubrik, die sich auf ein bestimmtes geographisches Gebiet oder z.B. auch auf eine bestimmte Liga bezieht. Mit diesen Berechtigungen lässt sich die Erstellung des Online-Auftritts des Anzeigenblatts beispielsweise hochgradig automatisieren.

Weiter können dem Schriftführer bestimmte Kategorien zugeordnet sein, wie "Sport", "Fußball". Die zugeordneten Kategorien können in unmittelbaren Zusammenhang mit dem von dem Schriftführer bearbeitetem Bereich und den dazu verfassten Artikeln stehen. Es können dem Schriftführer, als Teilnehmer des Redaktionssystems, aber auch Kategorien zugeordnet sein, die nur einen weiter entfernten Bezug zu den von ihm verfassten Artikeln haben. Beispielsweise könnte dem Schriftführer auch die Kategorie "Tourismus" zugeordnet sein, wenn er Artikel verfasst, die einen Bezug beispielsweise zu einem touristisch interessanten Gebiet aufweisen.

Sämtlichen Artikeln, die von dem Schriftführer in das Redaktionsnetzwerk eingestellt werden, werden dann die entsprechenden Kategorien zugewiesen. Diese bilden damit kategorisierte Information, die im erfindungsgemäßen Verfahren genutzt werden kann, insbesondere zur Erstellung oder Modifikation eines Nutzerprofils.

Ruft ein Nutzer den Artikel des Schriftführers auf, werden im Nutzerprofil entsprechende Kategorien angesprochen, d.h. im Nutzerprofil werden Einträge in den entsprechenden Kategorien hinterlegt, sodass sich Interessensschwerpunkte des Nutzers herausbilden, indem entsprechende kategorisierte Nutzerauswahlkriterien im Nutzerprofil angelegt oder modifiziert werden.

Gemäß einer Ausführungsform des Verfahrens ist ein System zum Rechtemanagement vorgesehen. Über das System zum Rechtemanagement kann beispielsweise der Zugang zum Redaktionssystem wie oben beschrieben geregelt werden.

Die Erstellung und Bereitstellung kategorisierter Information, wie einem kategorisierten Artikel, erfolgt im Eingabebereich des Redaktionssystems.

Im Eingabebereich wird eine Eingabemaske bereitgestellt, über welche der Schriftführer als beispielhafte dritte Person Informationen, beispielsweise einen Text oder Bilder eingeben bzw. im abgeschlossenen Datenraum hochladen kann. Die Informationen sind in elektronischer Form bereitgestellt und können daher mittels einer entsprechenden Software verarbeitet werden, beispielsweise um das Lay-out des Online-Auftritts in welchem der Artikel erscheint zu erstellen.

Die eingegebene Information wird bevorzugt den vorgegebenen Kategorien zugeordnet. Dazu kann beispielsweise die Datei mit einem entsprechenden Tag versehen werden.

Die, vorzugsweise bereits kategorisierte, Information wird gemäß einer Ausführungsform des Verfahrens dann in einen Freigabebereich hochgeladen.

Der Freigabebereich ist ein Bereich des abgeschlossenen Datenraums, in welchen die im Eingabebereich erstellten Informationen in elektronischer Form bereitgestellt werden.

Der Freigabebereich ist nur einem dazu berechtigten Kreis von Teilnehmern zugänglich. Es sind entsprechende Portale bzw. Rechte vorgesehen, über welche der Kreis der Berechtigten Zugang zum Freigabebereich erhält. Ein solcher Kreis von Teilnehmern kann beispielsweise die Redaktion eines Anzeigenblattes sein. Wird das Anzeigenblatt bzw. der entsprechende online-Auftritt als Amtsblatt genutzt, kann die Freigabeinstanz beispielsweise die Gemeinde sein, welche die entsprechenden Bekanntmachungen herausgibt.

Im Freigabebereich kann eine Überprüfung, ggf. Bearbeitung und eine anschließende Freigabe der im Eingabebereich erstellten Information erfolgen. Im Freigabebereich kann ein Artikel welcher im Eingabebereich von einem Schriftführer eines Vereins erstellt wurde beispielsweise redigiert werden. Es ist entsprechende Software vorgesehen, die eine Bearbeitung des Artikels ermöglicht. Der Artikel kann formatiert werden, um in das Lay-out des online-Auftritts eingefügt zu werden.

Gemäß einer Ausführungsform des Verfahrens kann die Kategorisierung der Information auch erst im Freigabebereich erfolgen.

Die Überprüfung und Bearbeitung kann gemäß einer Ausführungsform mittels einer Software erfolgen. Dadurch ist eine weitgehende Automatisierung der Erstellung des Online-Auftritts möglich.

Gemäß einer Ausführungsform kann das Redaktionssystem mehrere Prozessabschnitte umfassen, beispielsweise mehr als 2 Prozessabschnitte, insbesondere 2 bis 30 Prozessabschnitte. Ein Prozessabschnitt bezeichnet dabei einen Abschnitt bei der Erstellung des Onlineauftritts aus dem Redaktionssystem. Beispielsweise kann in einem ersten Prozessbereich von einem Teilnehmer, beispielsweise einem Schriftführer eines Sportvereins, ein Artikel in das Redaktionssystem eingestellt werden.

In einem weiteren Prozessabschnitt werden dann verschiedene Artikel zusammengestellt, beispielsweise Anzeigen eingefügt, und beispielsweise ein geeignetes Lay-out erstellt. In einem weiteren Prozessbereich kann dann eine Kontrolle und Freigabe erfolgen, ehe ein Artikel online gestellt wird. Dazu kann das Redaktionssystem eine Freigabeinstitution umfassen, welche die online eingestellten Artikel freigibt.

Wie erläutert, wird das erfindungsgemäße Verfahren gemäß einer Ausführungsform bevorzugt in einem abgeschlossenen Datenraum durchgeführt. Der Zugang zum Datenraum kann durch ein oder mehrere Portale erfolgen, in welchen eine Anmeldung der Teilnehmer erfolgt.

Gemäß einer Ausführungsform sind im abgeschlossenen Datenraum mehrere Subplattformen vorgesehen. Die Subplattformen stellen jeweils Datenräume innerhalb des abgeschlossenen Datenraums dar. Die Subplattformen können beispielsweise speziellen Themenbereichen gewidmet sein oder verschiedenen Aufgabenbereichen innerhalb des abgeschlossenen Datenraums zugeordnet sein.

Gemäß einer Ausführungsform kann beispielsweise im Internetauftritt eines Verlags für Anzeigenblätter jeder Gemeinde eine eigene Subplattform zugeordnet sein.

Gemäß einer Ausführungsform ist einer Subplattform jeweils ein eigenes Portal zugeordnet, über welche der Teilnehmer in die Subplattform eintreten kann.

Die Portale können individuell ausgestaltet werden und beispielsweise einen Hinweis auf bestimmte Themenbereiche oder Schwerpunkte geben. So kann gemäß einer Ausführungsform beispielsweise für bestimmte Gemeinden, die zueinander in einer nachbarschaftlichen Beziehung stehen, jeweils ein eigenes Portal bereitgestellt werden, wobei das Portal einen Hinweis auf die jeweilige Gemeinde bereitstellt. Gemäß einer Ausführungsform sind die einzelnen Portale und die zugehörigen Subplattformen jeweils bestimmten Aufgabenbereichen zugeordnet. So kann beispielsweise eine erste Subplattform auf die Bereitstellung von Artikeln, also von kategorisierter Information, ausgerichtet sein, während eine zweite Subplattform auf Anzeigen spezialisiert ist. In beiden Subplattformen wird kategorisierte Information bereitgestellt, hier Nachrichten und Anzeigen, die jeweils genutzt werden können um ein Nutzerprofil eines Nutzers aufzubauen und zu modifizieren.

Gemäß einer ersten Ausführungsform kann vorgesehen sein, dass sich ein Teilnehmer bei der Anmeldung in einer Subplattform identifizieren muss, sich also mit seiner Kennung, beispielsweise einem Nutzernamen und einem Passwort, anmelden muss.

Eine solche Ausführungsform ist beispielsweise vorteilhaft, wenn die Plattform, also der abgeschlossene Datenraum, von mehreren Plattformbetreibern betrieben wird, die ggf. wirtschaftlich voneinander unabhängig sind. Jeder Plattformbetreiber kann dann unabhängig die jeweils ihm zugeordnete Subplattform gestalten. Die Nutzung kategorisierter Information zum Aufbau eines Nutzerprofils kann dann gemeinsam durch alle Plattformbetreiber erfolgen.

Gemäß einer anderen Ausführungsform ist vorgesehen, dass sich der Teilnehmer beim abgeschlossenen Datenraum anmeldet und identifiziert. Nach dem Betreten des abgeschlossenen Datenraums kann der Teilnehmer dann die Subplattformen betreten, ohne dass eine weitere Anmeldung oder Identifikation erfolgen muss. Dies erleichtert die Navigation im abgeschlossenen Datenraum erheblich.

Gemäß einer Ausführungsform ist vorgesehen, dass in mehr als einer der Subplattformen kategorisierte Information bereitgestellt wird und die kategorisierte Information aus mehr als einer Subplattform zur Aufstellung oder Modifikation des Nutzerprofils eines Nutzers genutzt wird.

Bei dem erfindungsgemäßen Verfahren wird an einen Nutzer kategorisierte Information ausgegeben, die mit seinen Interessen, also den kategorisierten Nutzerauswahlkriterien korreliert. Die an den Nutzer übermittelte kategorisierte Information entspricht dabei der mit dem ausgewählten Anbieterkriterium verbundenen hyperlokalen Information.

Gemäß einer Ausführungsform wird neben der mit dem ausgewählten Anbieterkriterium verbundenen hyperlokalen Information nicht korrelierende Information an das Ausgabegerät des Nutzers übermittelt. Auf diese Weise kann das Nutzerprofil des Nutzers weiter verbessert werden. Sofern der Nutzer die nicht korrelierende Information auswählt, indem er diese beispielsweise anklickt, kann diese Information, die als kategorisierte Information bereitgestellt wird, genutzt werden, um das Nutzerprofil zu ergänzen bzw. zu modifizieren. Auf diese Weise lassen sich ggf. dem Nutzerprofil Kategorien beifügen, die bisher nicht im Nutzerprofil erfasst waren, da der Nutzer in diesen Kategorien keine Aktivität gezeigt hat.

Die Auswahl der nicht korrelierenden Information kann zufällig erfolgen. Es ist aber auch möglich, die nicht korrelierende Information basierend auf Daten vorzunehmen, die bei der Durchführung des Verfahrens ermittelt werden. So kann gemäß einer Ausführungsform die Information einer bestimmten ersten Kategorie zugeordet sein. Aus der vorhergenden Durchführung des Verfahres kann sich ergeben haben, dass Nutzer, welche Information der bestimmten ersten Kategorie abrufen, also ein Nutzerprofil aufweisen, dass diese bestimmte erste Kategorie umfasst, bevorzugt Informationen einer bestimmten weiteren Kategorien abrufen. Einem Nutzer, welcher Information der bestimmten ersten Kategorie abruft kann dann auch Information übermittelt werden, welche der weiteren Kategorie zugeordnet ist.

Die nicht korrelierende Information kann ausgewählt werden, indem beispielsweise hyperlokale Information von Anbietern an den Nutzer übermittelt wird, die zwar im hyperlokalen Bereich um den Nutzer angeordnet sind, aber keine mit den Nutzerauswahlkriterien des Nutzers korrelierende Anbieterkriterien aufweisen. Bei der Auswahl der nicht-korrelierenden Informationen kann auch auf Daten anderer Nutzer zurückgegriffen werden, die sich in gleichen oder ähnlichen Kategorien bewegen wie der Nutzer, die also gleiche oder ähnliche Nutzerauswahlkriterien in ihrem Nutzerprofil aufweisen, wie der Nutzer.

Bevorzugt wird der Anteil der nicht-korrelierenden kategorisierten Informationen, die an den Nutzer übermittelt werden nicht zu hoch gewählt um zu verhindern, dass einerseits die Anzahl der Übermittlungen von hyperlokaler Information nicht zu stark ansteigt und andererseits der Nutzer nicht durch hyperlokale Informationen in Anspruch genommen wird, die ihn nicht interessiert.

Gemäß einer Ausführungsform wird der Anteil der nicht korrelierenden Information an der Gesamtheit der ausgegebenen Information geringer als 15 %, gemäß einer weiteren Ausführungsform geringer als 10 % und gemäß noch einer weiteren Ausführungsform geringer als 5% gewählt. Der prozentuale Anteil bezieht sich dabei auf die Anzahl der Übermittlungen von hyperlokaler Information.

Das erfindungsgemäße Verfahren wird im Weiteren unter Bezugnahme auf die beigefügte Zeichnung näher erläutert. Die Figuren der Zeichnung zeigen:
- Fig. 1:: eine schematische Darstellung des erfindungsgemäßen Verfahrens;
- Fig. 2:: eine schematische Darstellung der Kategorisierung von Information;
- Fig. 3:: eine Darstellung der Kategorisierung von Informationen, die von Anbietern erzeugt werden;
- Fig.4:: eine schematische Darstellung der Erstellung eines Nutzerprofils beim erstmaligen Nutzen des Verfahrens;
- Fig. 5:: eine schematische Darstellung der Ausgabe kategorisierter Information in Abhängigkeit eines bestehenden Nutzerprofils;
- Fig. 6:: eine schematische Darstellung eines Nutzerprofils;
- Fig. 7:: eine schematische Darstellung eines Redaktionssystems, wie es im erfindungsgemäßen Verfahren verwendet werden kann;
- Fig. 8:: eine schematische Darstellung eines Freigabeprozesses im Redaktionssystem;
- Fig. 9:: ein Ökosystem aus themenorientierten Subplattformen, welche in einem abgeschlossenen Datenraum angeordnet sind;
- Fig. 10:: eine schematische Darstellung der Komponenten eines Systems, mit welchem das erfindungsgemäße Verfahren durchgeführt werden kann;
- Fig. 11:: eine schematische Darstellung des Ablaufs der Infromationsverarbeitung im erfindungsgemäßen System.

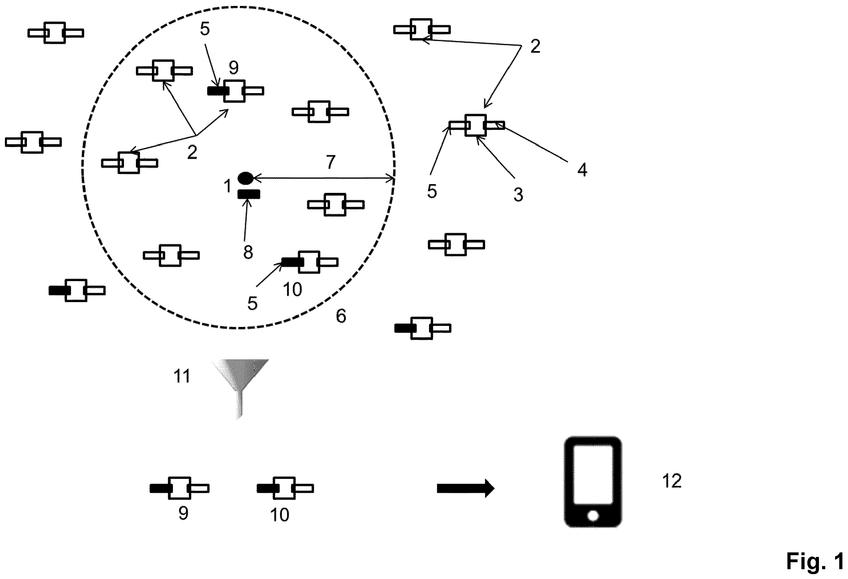

In Figur 1 ist schematisch der Ablauf des erfindungsgemäßen Verfahrens dargestellt. Ein Nutzer 1, welcher eine Vorrichtung zur Ermittlung seiner Geolokation mit sich führt, beispielsweise ein mit einer GPS Funktion ausgerüstetes Smartphone, bewegt sich in einer Fläche, z.B. einer Stadt. Die Geolokation des Nutzers 1 stimmt dabei mit der Geolokation des Smartphones überein. In der Fläche sind mehrere Anbieter 2 angeordnet. Jedem Anbieter ist eine hyperlokale Information 3 zugeordnet. Die hyperlokale Information 3 wird als Datei bereitgestellt, die in einer Anbieterdatenbank abgelegt ist. Die hyperlokale Information 3 kann beispielsweise eine Anzeige sein oder eine beliebige andere Information, die mit dem Anbieter verbunden ist und welche an einen Nutzer ausgegeben werden soll, wenn sich dieser im hyperlokalen Raum um den Anbieter aufhält. Die hyperlokale Information 3 ist jeweils mit einer Information über die Geolokation 4 des Anbieters versehen. Dies kann beispielswiese eine kleine Datei oder ein Tag sein, welcher der Datei über die hyperlokale Information 3 zugeordnet ist. Ferner ist die hyperlokale Information in eine Kategorie eingeordnet. Dazu ist die hyperlokale Information 3 mit einem kategorisierten Anbieterauswahlkriterium 5 versehen. Das kategorisierte Anbieterauswahlkriterium 5 entspricht einer Kategorie, welcher die hyperlokale Information zugeordnet ist. Das kategorisierte Anbieterauswahlkriterium 5 kann beispielswiese in einer kleinen Datei oder einem Tag enthalten sein, welcher der Datei über die hyperlokale Information 3 zugeordnet ist.

Um den Nutzer 1 ist ein hyperlokaler Raum 6 angeordnet. Im Beispielfall befindet sich der Nutzer 1 im Zentrum des hyperlokalen Raums, der durch einen Radius 7 und einen kreisförmigen Umfang definiert ist. Es versteht sich, dass der hyperlokale Raum 6 auch andere Umfangsformen aufweisen kann.

Ein Teil der Anbieter 2 ist innerhalb des hyperlokalen Raums 6 um den Nutzer 1 angeordnet. Zur Auswahl der Anbieter 2 wird die Information über die Geolokation des Anbieters 4 mit dem hyperlokalen Raum 3 verglichen, der um den Nutzer 1 angeordnet ist. Es werden dann die Anbieter 2 ausgewählt, die Ihre Geolokation innerhalb des hyperlokalen Raum 6 haben. Die Auswahl wird mit Hilfe einer geeigneten Software durchgeführt, mit welcher die Geodaten des Nutzers 1 mit den Geodaten der Anbieter 2 abgeglichen werden und diejenigen Anbieter 2 ausgewählt werden, die innerhalb des um den Nutzer 1 angeordneten hyperlokalen Raums 6 angeordnet sind.

Ferner ist dem Nutzer 1 ein kategorisiertes Nutzerauswahlkriterium 8 zugeordnet. Ein kategorisiertes Nutzerauswahlkriterium 8 entspricht dabei einer Kategorie, die mit den Interessen des Nutzers übereinstimmt.

Innerhalb des hyperlokalen Raums 6 sind Anbieter 9, 10 angeordnet, deren kategorisiertes Anbieterauswahlkriterium 5 einer Kategorie entspricht, die mit der Kategorie des Nutzerauswahlkriteriums 8 korreliert bzw. übereinstimmt.

Über einen Filter 11, mit welchem das kategorisierte Nutzerauswahlkriterium 8 mit dem kategorisierten Anbieterkriterium 5 verglichen wird, werden die Anbieter 9, 10 ausgewählt und die hyperlokale Information 3 auf dem Ausgabegerät 12, beispielsweise einem Smartphone, ausgegeben.

Als Filter ist eine entsprechende Software vorgesehen, welche überprüft, ob ein kategorisiertes Anbieterauswahlkriterium mit einem kategorisierten Nutzerauswahlkriterium übereinstimmt.

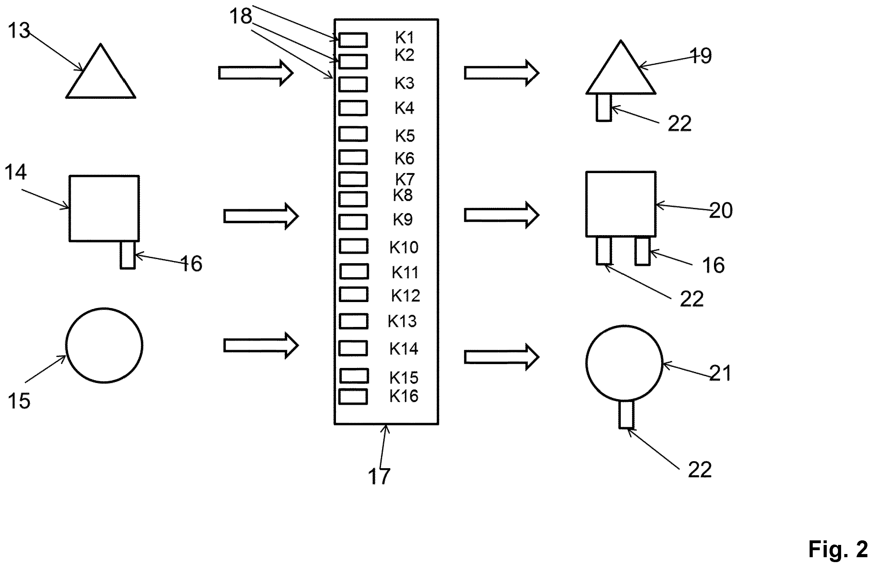

Fig. 2 zeigt eine schematische Darstellung der Kategorisierung von Informationen, wie sie im erfindungsgemäßen Verfahren angewandt wird.

Zunächst werden Informationen 13, 14, 15 bereitgestellt. Die Informationen werden in Form von strukturierten Datensätzen bereitgestellt, sodass sie elektronisch prozessiert werden können. Die Informationen können einen an sich beliebigen Inhalt darstellen. Beispielhaft kann eine erste Information 13 ein Artikel sein, wie er beispielsweise in einem Anzeigenblatt veröffentlich wird. Eine zweite Information 14 kann ein Angebot eines Anbieters sein, beispielsweise ein Angebot zu einer Sonderverkaufsaktion. Eine dritte Information 15 kann beispielsweise eine Anzeige sein, wie sie herkömmlich in einem Anzeigenblatt veröffentlicht wird. Die zweite Information 14 soll einem bestimmten Anbieter zugeordnet sein und ist daher mit einem Tag 16 versehen, welcher Angaben zur Geolokation des Anbieters beinhaltet. Eine solche zweite Information 14 kann beispielsweise eine Information sein, die mit dem erfindungsgemäßen Verfahren auf dem Ausgabegerät eines Nutzers ausgegeben wird, wie dies mit Bezug auf Figur 1 beschrieben wurde.

Zur Kategorisierung der Informationen 13, 14, 15 ist eine Taxonomie 17 vorgesehen. Die Taxonomie 17 umfasst Kategorien 18, die durch bestimmte Merkmale definiert sind. Im Beispiel ist eine abgeschlossene Menge an Kategorien K1 bis K16 vorgegeben, die jeweils durch bestimmte Merkmale oder Merkmalskombinationen gekennzeichnet sind. Beim dargestellten Beispiel ist der Übersichtlichkeit halber die Anzahl der Kategorien auf 16 beschränkt. Die Anzahl kann aber auch höher oder niedriger gewählt werden. Weiter umfasst die Taxonomie der Einfachheit halber nur eine Hierarchieebene an Kategorien K. Es können aber auch mehrere Hierarchieebenen vorgesehen sein, d.h. jeder Kategorie K können eine oder mehrere Unterkategorien zugeordnet sein, wobei mehrere Hierarchieebenen der Unterkategorien vorgesehen sein können.

Die Taxonomie 17 wird dann auf die Informationen 13, 14, 15 angewandt, wodurch kategorisierte Informationen 19, 20, 21 erhalten werden. Die kategorisierten Informationen 19, 20 und 21 umfassen jeweils eine Information 22 über die Kategorie K, welcher die Informationen 13, 14, 15 zugeordnet wurden. Information 22 kann als kategorisiertes Auswahlkriterium im erfindungsgemäßen Verfahren genutzt werden. Die Information 22 ist in einer kleinen Datei bzw. einem Tag enthalten, welche mit der Datei der Informationen 13, 14 bzw. 15 verbunden ist.

Die Zuordnung der Informationen 13, 14, 15 zu bestimmten Kategorien K kann beispielsweise mit Hilfe einer Software durchgeführt werden, welche die Informationen 13, 14 und 15 nach bestimmten Merkmalen durchsucht. Solche Merkmale können beispielsweise Schlagworte oder Bildelemente sein, die in den Informationen 13, 14, 15 enthalten sind. Die Informationen 13, 14, 15 werden also von der Software auf bestimmte Merkmale untersucht. Werden die Merkmale aufgefunden, wird die Information 13, 14, 15 einer bestimmten Kategorie zugeordnet.

Die Zuordnung der Informationen zu bestimmten Kategorien kann auch in der Weise erfolgen, dass entsprechende Voreinstellungen vorgenommen werden. In diesem Fall können z.B. einem bestimmten Nutzer bestimmte Kategorien fest zugeordnet werden. Im Beispiel der Fig. 2 wäre dann die Anzahl der Kategorien 18 entsprechend auf eine geringe Anzahl oder auch auf nur eine bestimmte Kategorie beschränkt. Jede Information 13, 14, 15 wird dann der ausgewählten Kategorie zugeordnet.

Die Anwendung der Taxonomie auf die Informationen 13, 14 und 15 kann auch mit Hilfe künstlicher Intelligenz erfolgen. Dabei wird von einem Trainingsdatensatz ausgegangen, bei dem die Kategorisierung der Informationen bereits durchgeführt ist. Dieser Datensatz kann dann zum Training der künstlichen Intelligenz herangezogen werden. Nach dem Training können dann nicht kategorisierte Informationen mit Hilfe der künstlichen Intelligenz kategorisiert werden.

Der Trainingsdatensatz kann beispielsweise erstellt werden, indem die Informationen 13, 14, 15 mit Hilfe einer zuvor definierten Taxonomie 17 kategorisiert werden. Ein solcher Trainingsdatensatz kann beispielsweise aus Daten erstellt werden, bei denen die Kategorisierung bereits von Hand, d.h. durch Menschen vorgenommen wurde. Ein solcher Trainingsdatensatz kann beispielsweise aus dem Datenbestand erstellt werden, der bei einem Anzeigenblatt in der Vergangenheit während der Herstellung des Anzeigenblattes bereits erhalten wurde. Die trainierte künstliche Intelligenz kann dann verwendet, um neue, nicht kategorisierte Information zu kategorisieren, also mit einem Tag 22 zu versehen.

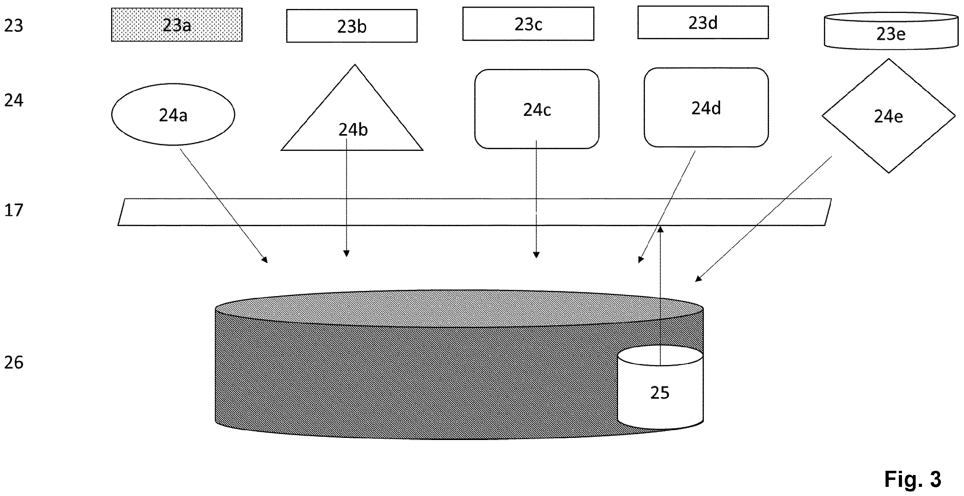

In Figur 3 wird die Kategorisierung von Informationen anhand eines Ausführungsbeispiels näher erläutert.

Verschiedenen Datenquellen 23 a-e stellen auf der Anbieterseite Informationen als Datenprofile 24 a-e bereit. Die Datenprofile sind als Dateien, die den gewünschten Inhalt enthalten, auf einem Server abgelegt. Beispielhaft Datenquellen 23 sind Verwaltungen 23a, beispielsweise kommunale Verwaltungen, wie Rathäuser, Vereine 23b, wie Sportvereine, Experten 23c, wie Gesundheitsratgeber, Foren 23d, oder auch Online-Shops 23e. Diese Datenquellen 23 erstellen Informationen, die in Form von Datenprofilen 24 elektronisch zur Verfügung gestellt werden. Die Datenquellen 23 verfügen dazu jeweils über einen Zugang zum System, über den sie Dateien in das System hochladen können. Diese Informationen bzw. Datenprofile/strukturierten Datensätze 24 können beispielsweise Artikel 24c,d sein, die z.B. in Foren 23d oder von Schriftführern von Vereinen 23c erstellt und online gestellt werden. Die Informationen 23 können auch Bekanntmachungen 24a sein, die beispielsweise von Verwaltungen 23a, wie kommunalen Verwaltungen, erstellt werden. Die Informationen 23 können aber auch die Form von Veranstaltungshinweisen 24b annehmen, die beispielsweise von Vereinen 23b oder sonstigen Veranstaltern als Datenquelle 23 bereitgestellt werden. So kann ein Verein 23c beispielsweise auf ein Ligaspiel hinweisen, eine kommunale Verwaltung 23a auf amtliche Verlautbarungen, eine Volkshochschule als Verwaltung auf Kurse oder auch professionelle Anbieter, wie Konzertveranstalter, auf Konzerte, Theateraufführungen etc. hinweisen. Es können von Experten, wie beispielsweise Apothekern, Medizinern oder anderen Fachleuten, Texte zu bestimmten Fragestellungen bereitgestellt werden. Unternehmen, wie beispielsweise Geschäfte des Einzelhandels, Handwerker oder andere Dienstleister, können als Datenquelle 23 ihr Anbieterprofil als Information 24 bereitstellen. Als Datenquelle 23 können aber auch Online-Anbieter 23e, die in ihren Online-Shops Produkte anbieten, die in entsprechenden Produktdatenbanken 24e hinterlegt sind, herangezogen werden.

Die Informationen bzw. Datenprofile 24 werden zunächst unstrukturiert bereitgestellt. In einem weiteren Schritt werden den Informationen 24 Kategorien zugeordnet. Dazu wird, wie in Figur 2 bereits erläutert, eine Taxonomie 17 auf die Informationen bzw. Datenprofile 24 angewandt. Durch die Anwendung der Taxonomie wird eine Kategorisierung durchgeführt. Die Informationen 24 werden also einer oder mehreren Kategorien zugeordnet. Da die Informationen bzw. Datenprofile 24 in elektronischer Form bereitgestellt sind, können die dazugehörigen Dateien mit entsprechenden Tags versehen werden, um eine Verbindung zwischen Information und Kategorie herzustellen.

Zur Anwendung der Taxonomie 17 auf die Informationen 24 ist eine entsprechende Taxonomie-Software 25 vorgesehen, die den Informationen 24 eine entsprechende Kategorie zuordnet, sodass kategorisierte Informationen erhalten werden. Wie bereits mit Bezug auf Figur 2 erläutert, stehen verschiedene Möglichkeiten zur Verfügung, um einer bestimmten Information eine bestimmte Kategorie zuzuordnen. So kann die zur Information gehörende Datei beispielsweise auf bestimmte Merkmale untersucht werden, beispielsweise Schlagworte oder bestimmte Bildmerkmale. Dies kann erfolgen, indem Kategorien und die zugehörigen Schlagworte vorgegeben werden. Es ist aber auch möglich, die Merkmale, welche zur Zuordnung einer Information zu einer bestimmten Kategorie führen, über eine künstliche Intelligenz zu ermitteln. Ferner kann einer bestimmten Datenquelle standardisiert eine oder mehrere Kategorien zugeordnet werden, sodass alle Informationen bzw. Dateien, die von dieser Datenquelle erstellt werden, mit den gleichen Kategorien versehen bzw. gleich getaggt werden.

Die kategorisierten Informationen werden dann in einem Data-Warehouse 26, also einer entsprechenden Datenbank, in welcher die kategorisierte Information abgelegt bzw. weiter verarbeitet werden kann, abgelegt.

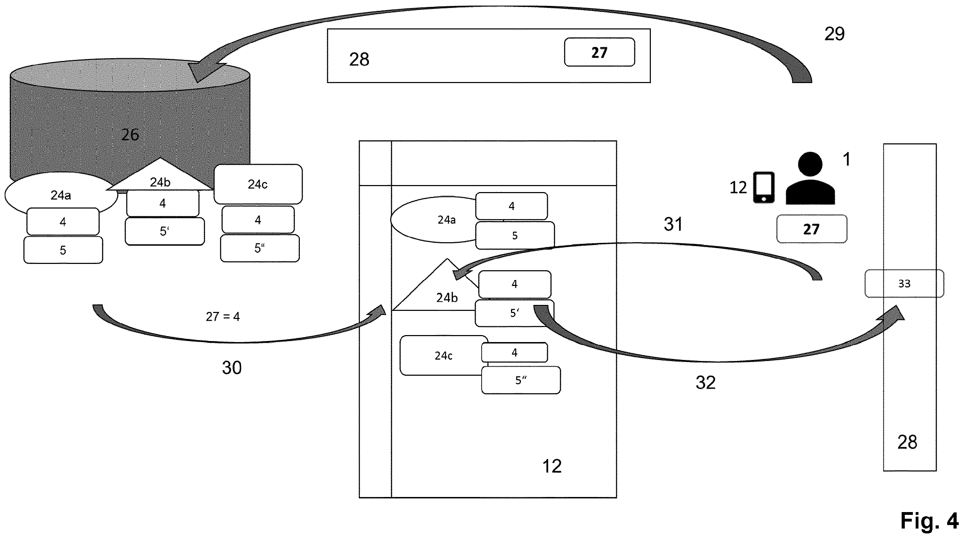

Figur 4 zeigt schematisch die Erstellung eines Nutzerprofils bei der Verwendung des erfindungsgemäßen Verfahrens, wobei der Nutzer erstmalig an dem Verfahren teilnimmt.

Ein Nutzer 1 hält sich an einem bestimmten Ort auf, der durch eine Geolokation 27 gekennzeichnet ist. Die Geolokation 27 lässt sich mit einem Ausgabegerät 12 ermitteln, beispielsweise einem GPS-fähigen Smartphone, welches der Nutzer 1 mit sich führt. Da der Nutzer bisher am erfindungsgemäßen Verfahren nicht teilgenommen hat, ist sein Nutzerprofil 28 leer, d.h. seinem Nutzerprofil 28 sind keine kategorisierten Nutzerauswahlkriterien zugeordnet.

An das Datawarehouse 26, in welchem die Nutzerdatenbank und die Anbieterdatenbank hinterlegt sind und in welchem die Daten verarbeitet werden, wird die Geolokation 27 des Nutzer 1 über Übermittlungsweg 29 übermittelt. Die Geolokation 27 wird dann mit dem im Datawarehouse 26 in der Nutzerdatenbank hinterlegten Nutzerprofil 28 kombiniert. Da der Nutzer 1 bisher am erfindungsgemäßen Verfahren nicht teilgenommen hat, sind dem Nutzerprofil 28 keine kategorisierten Nutzerauswahlkriterien zugeordnet.

Da noch keine Informationen zu den Interessen des Nutzers 1 vorliegen werden aus dem Datawarehouse 26 nach zufälliger Auswahl Informationen 24a, 24b und 24c auf dem Übertragungsweg 30 auf das Ausgabegerät 12 des Nutzers 1 ausgespielt. Die Informationen 24a, 24b, 24c entsprechen Datenprofilen, die von Anbietern in das Datawarehouse 24 eingebracht wurden. Die Information 24a, 24b, 24c ist jeweils mit der Information über die Geolokation 4 des Anbieters verbunden. Wie mit Bezug auf Figur 1 erläutert, liegt die Geolokation 4 der verschiedenen Anbieter in einem um den Nutzer 1 angeordneten hyperlokalem Raum. Die Angebote 24a, 24b, 24c sind jeweils kategorisiert, d.h. mit einem kategorisierten Anbieterkriterium 5, 5', 5" verknüpft.

Auf der Anzeigefläche des Ausgabegeräts 12 des Nutzers 1 werden dann die Informationen 24a, 24b und 24c angezeigt. Der Nutzer 1 wählt eine dieser Informationen durch Auswahl 31 aus, im Beispiel die Information 24b. Die Auswahl 31 kann beispielsweise erfolgen, indem das Ausgabegerät 12 über einen berührungsempfindlichen Bildschirm verfügt und der Nutzer 1 die angezeigte Information 24b antippt. Als Folge der Auswahl kann die Information 24b beispielsweise vergrößert werden und die Fläche des Bildschirms einnehmen. Als Folge der Auswahl durch den Nutzer 1 wird die der Information 24b zugeordnete Kategorie 5', also das Anbieterkriterium, über Übertragungsweg 32 dem Nutzerprofil 28 als Nutzerauswahlkriterium 33 zugeordnet.

Durch Wiederholung der Schritte werden weitere Nutzerauswahlkriterien 33 dem Nutzerprofil 28 zugeordnet.

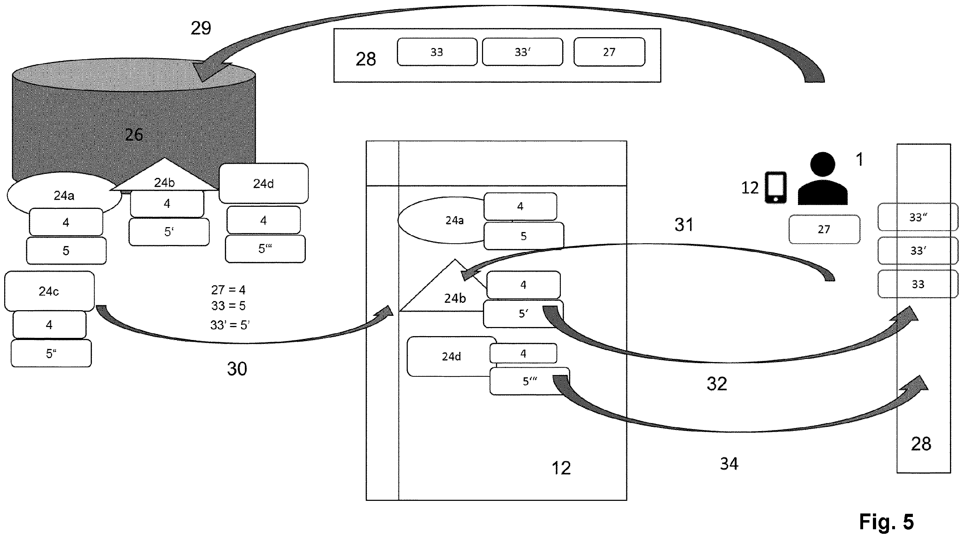

Fig. 5 zeigt schematisch das erfindungsgemäße Verfahren wobei das Nutzerprofil Nutzerauswahlkriterien enthält, sodass eine Auswahl angezeigter Informationen auf der Grundlage der Interessen des Nutzers ermittelt werden kann.

Wie bereits bei Fig. 4 erläutert befindet sich Nutzer 1 an einer bestimmten Geolokation 27. Die Geolokation 27 wird mit Hilfe des Anzeigegerätes 12, einem mit einer GPS-Funktion ausgestatteten Smartphone, an das Datawarehouse 26 übertragen (Übertragungsweg 29). Im Datawarehouse 26 wird das dem Nutzer 1 zugeordnete Nutzerprofil 28 identifiziert und aufgerufen. Im Nutzerprofil 28 sind Nutzerauswahlkriterien 33, 33' hinterlegt. Die Nutzerauswahlkriterien entsprechen Kategorien, die als für den Nutzer 1 von Interesse identifiziert wurden. Im Datawarehouse 26 sind ferner Anbieterprofile hinterlegt, die von den Anbietern in das Datawarehouse 26 eingestellt wurden. Die Anbieterprofile sind jeweils mit einer Information über die Geolokation 4 des Anbieters verbunden. Unter den im Datawarehouse in der Anbieterdatenbank vorgehaltenen Anbieterprofilen werden von einer Software diejenigen identifiziert, die mit der Geolokation des Nutzers korrelieren ("27 = 4").

Die Anbieterprofile umfassen ferner Informationen 24a, 24b, 24c und 24d. Diese Informationen können beispielsweise Nachrichten bzw. ein Artikel (24a) zu einem bestimmten Thema sein, ein Veranstaltungshinweis zu einer bestimmten Art einer Kulturveranstaltung (24b), oder auch Angebote für Produkte aus verschiedenen Bereichen (24c, 24d). Je nach Art der Informationen sind die Informationen 24a, 24b, 24c und 24d daher mit bestimmten Kategorien verbunden, welche die Anbieterauswahlkriterien 5, 5', 5", 5'" bilden.

Unter den durch ihre relative Geolokation 4 zur Geolokation 27 des Nutzers 1 ausgewählten Anbieterprofilen werden diejenigen Anbieterprofile ausgewählt, deren Anbieterauswahlkriterium (5, 5') mit den Nutzerauswahlkriterien (33, 33') korreliert. Im Beispielfall korrelieren die Nutzerauswahlkriterien 33, 33' mit den Anbieterauswahlkriterien 5, 5' ("33 = 5; 33' = 5'). Die mit den Anbieterauswahlkriterien 5, 5' markierten Informationen 24a und 24b werden daher über den Übertragungsweg 30 auf das Ausgabegerät 12 des Nutzers übertragen. Angebot 24c, welches mit einem Anbieterauswahlkriterium 5" verbunden ist, wird nicht auf das Ausgabegerät 12 des Nutzers übertragen, da das Anbieterauswahlkriterium 5" nicht mit dem Nutzerauswahlkriterium 33, 33' korreliert.

Neben den Informationen 24a, 24b, die mit den Nutzerauswahlkriterien 33, 33' des Nutzers 1 korrelieren, wird auch Information 24d, beispielsweise ein Artikel oder eine Nachricht, auf dem Ausgabegerät 12 des Nutzers 1 angezeigt, wobei diese nicht mit den Nutzerauswahlkriterien 33 des Nutzers übereinstimmt. Der Anteil der Informationen 24, die auf dem Ausgabegerät des Nutzers ausgegeben werden aber nicht mit den Nutzerauswahlkriterien des Nutzers korrelieren kann auf einen bestimmten Anteil gesetzt werden.

Die Auswahl von Informationen 24d kann durch eine Zufallsfunktion erfolgen. Es ist aber auch möglich, die Auswahl von Informationen 24d auf Korrelationen zu stützen, die aus Nutzungshandlungen anderer Nutzer beruhen.

Im dargestellten Beispiel ruft der Nutzer die angezeigte Information 24d auf, die mit der Kategorie 5"" verbunden ist. Die Anbieterauswahlkriterium 5"" korreliert mit dem Nutzerauswahlkriterium 33". Das Nutzerauswahlkriterium 33" wird daher in das Nutzerprofil 28 aufgenommen.

Bei einer erneuten Durchführung des erfindungsgemäßen Verfahrens wird dann die Auswahl der Informationen 24 auf der Grundlage des modifizierten Nutzerprofils durchgeführt.

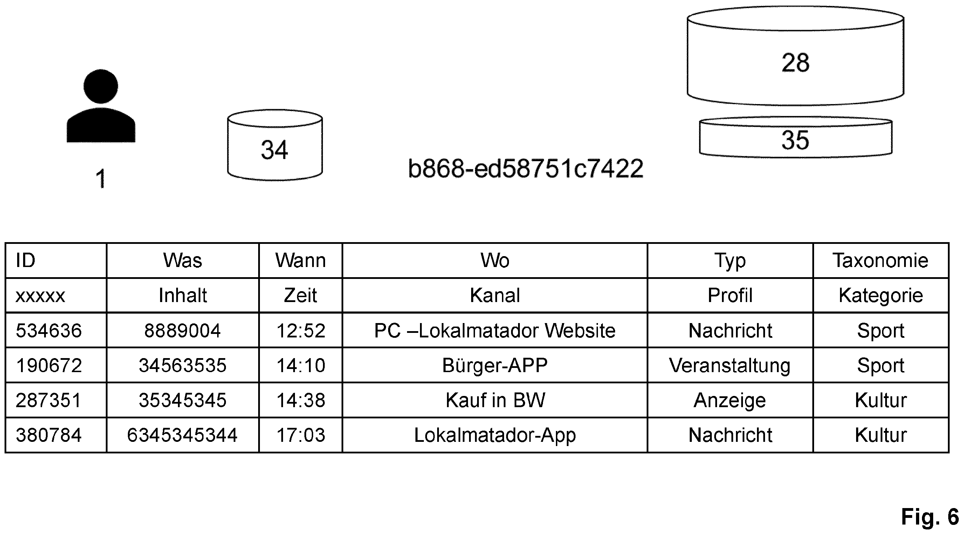

Fig. 6 zeigt eine schematische Darstellung des Nutzerprofils 28 eines Nutzers 1. Dem Nutzer 1 ist eine bestimmte Nutzer-ID 34 zugeordnet. Diese Nutzer-ID 34 kann beispielsweise vergeben werden, wenn sich der Nutzer 1 das erste Mal im System anmeldet und dabei bestimmte Daten über sich hinterlegt. Beim erneuten Anmelden identifiziert sich der Nutzer 1 über seine Nutzer-ID 34, sodass ihm ein bestimmtes Nutzerprofil 28 zugeordnet werden kann. Das Nutzerprofil 28 umfasst ein Nutzerkonto 35, in dem Informationen zu Aktivitäten des Nutzers 1 abgelegt sind, aus welchen sich das Nutzerprofil 28 ergibt. Nutzerprofil 28 und Nutzerkonto 35 entsprechen Datenbanken, die auf einem Server hinterlegt sind. Ferner ist Software vorgesehen, welche ermöglicht, Daten in den Datenbanken abzulegen bzw. Daten aus der Datenbank auszulesen.

In der schematischen Darstellung der Fig. 6 umfasst das Nutzerkonto 35 mehrere Spalten in welchen eine Handlung des Nutzers 1 erfasst wird. Die Anzahl und die Art der Felder kann an sich beliebig gewählt und an die Erfordernisse eines Anbieters des erfindungsgemäßen Verfahrens angepasst werden. In Fig. 6 sind beispielhaft als Spalten vorgesehen:
- ID:: hier wird die Identität des Anbieters abgelegt, auf dessen Datenprofile bzw. Informationen 24 der Nutzer 1 zugegriffen hat;
- Was:: hier wird der Inhalt der Information 24 in codierter Form abgelegt. Unter dem Inhalt der Information wird hier die konkrete Darstellung der Information verstanden, wie sie dem Nutzer auf seinem Ausgabegerät angezeigt wird;
- Wann:: hier wird der Zeitpunkt erfasst, zu welchem der Nutzer 1 die Information 24 abgerufen hat
- Wo:: hier wird der Zugang abgelegt, über welchen der Nutzer 1 die Information 24 abgerufen hat. Das System kann mehrere Portale bereitstellen, über welche Informationen 24 abgerufen werden können. Diese Portale können beispielsweise auf bestimmte Zielgruppen ausgerichtet sein;
- Typ:: hier wird die Art der Information 24 eingetragen. In Fig. 6 sind beispielhaft als Art der Informationen "Nachrichten" und "Veranstaltungen" sowie "Anzeige" eingetragen. Im Beispielfall hat der Nutzer auf einer Homepage innerhalb des Systems eine Nachricht aufgerufen, im Veranstaltungskalender gesucht sowie eine Anzeige angeklickt.
- Taxonomie:: hier wird die Kategorie der Information eingetragen, wie sie mit Hilfe der Taxonomie ermittelt wird. In Fig. 6 ist nur eine Kategorieebene angegeben. Wie bereits erläutert, können zu den einzelnen Kategorien auch eine oder mehrere Ebenen von Unterkategorien aufgestellt werden. Die Kategorien entsprechen durch ihre Auswahl durch den Nutzer jeweils einem kategorisierten Nutzerauswahlkriterium. Fig. 6 sind beispielhaft die Nutzerkategorien "Sport" und "Kultur" eingetragen.

Ein solches Profil ergibt sich beispielsweise, indem der Nutzer 1 sich an seinem PC über das Portal "PC-Lokalmatador Website" in das System eingewählt hat und dort um 12:52 Uhr einen Artikel über ein Regionalligaspiel angeklickt hat. Der Artikel ist mit dem Code "8889004" erfasst. Der Artikel wurde vom Schriftführer des örtlichen Sportvereins, welcher durch den Code "534636" erfasst ist, in das System eingestellt. Da die aufgerufene Information ein Artikel über ein Regionalligaspiel ist, wird er als Typ als "Nachrichten" erfasst. Da der Artikel eine Sportveranstaltung betrifft, ist dem Artikel die Kategorie "Sport" zugeteilt. Da der Nutzer 1 den Artikel aufruft, wird seinem Nutzerprofil die Kategorie "Sport" als kategorisiertes Nutzerauswahlkriterium zugeordnet.

Zu einem späteren Zeitpunkt, hier um 14:10 Uhr, hat Nutzer 1 über eine auf seinem Mobiltelefon installierte App "Bürger App" einen Veranstaltungshinweis zu einer Sportveranstaltung aufgerufen. Anbieter "190672" ist beispielsweise ein Ticketverkäufer. Der Inhalt des Veranstaltungshinweises ist mit "34563535" codiert. Da es sich um einen Veranstaltungshinweis handelt ist die entsprechende Datei vom Typ "Veranstaltung". Es handelt sich um eine Sportveranstaltung. Daher wird dem Profil als kategorisiertes Nutzerauswahlkriterium die Kategorie "Sport" zugewiesen.

Um 14:38 hat der Nutzer 1 das Portal "Kauf in BW" besucht und dort eine Anzeige für eine kulturelle Veranstaltung besucht. Entsprechend wird dem Profil des Nutzers die Kategorie "Kultur" als kategorisiertes Nutzerauswahlkriterium hinzugefügt. Um 17:03 hat der Nutzer 1 schließlich in der App "Lokalmatador App" einen Artikel über eine kulturelle Veranstaltung angeklickt, was zu einem Eintrag der Kategorie "Kultur" als kategorisiertes Nutzerauswahlkriterium führt.

Aus dem beispielhaften Nutzerprofil der Fig. 6 ergibt sich dann, dass der Nutzer 1 ein Interesse auf dem Gebiet des Sports sowie der Kultur aufweist. Er bekommt daher mit dem erfindungsgemäßen Verfahren hyperlokale Informationen angezeigt, denen die Kategorien "Sport" bzw. "Kultur" als kategorisiertes Anbieterauswahlkriterium zugeordnet sind.

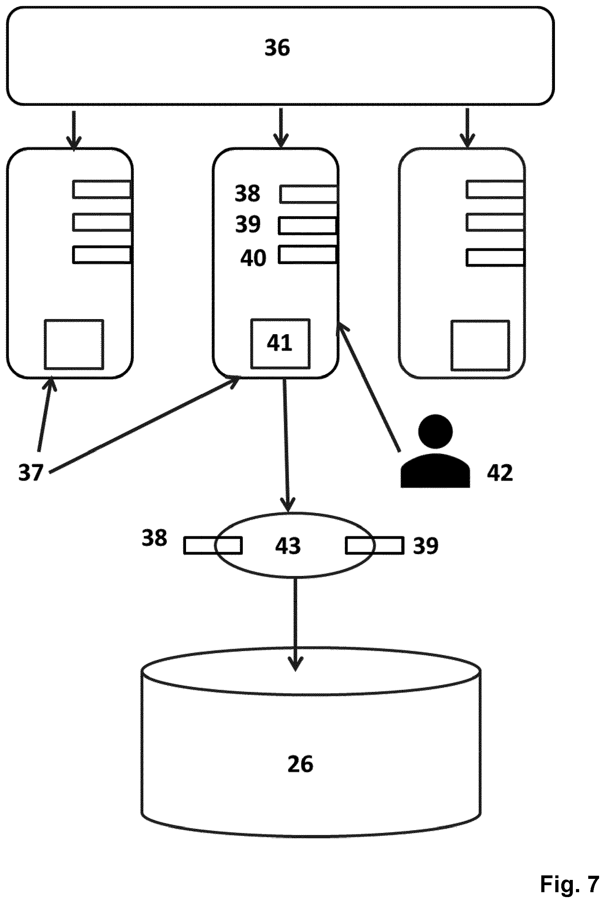

Fig. 7 zeigt schematisch ein Redaktionssystem, wie es in einer Ausführungsform des erfindungsgemäßen Verfahrens vorgesehen sein kann. Das Redaktionssystem 36 bildet einen abgeschlossenen Bereich im abgeschlossenen Datenraum des erfindungsgemäßen Verfahrens, welcher nur mit den entsprechenden Berechtigungen betreten bzw. genutzt werden kann. Das Redaktionssystem umfasst Schnittstellen für die Eingabe von Informationen, wie Artikeln oder Veranstaltungshinweisen, beispielsweise einen gängigen Browser, sowie entsprechende Software zum Verfassen und Verarbeiten der im Redaktionssystem bearbeiteten Informationen.

Im Redaktionssystem 36 sind Subplattformen 37 vorgesehen, die jeweils von einem berechtigten Teilnehmerkreis genutzt bzw. betreten werden können. Die Subplattformen 37 können beispielsweise verschiedenen Vereinen zugeordnet sein, beispielsweise einem Sportverein oder einem Kulturverein.

Mit der Subplattform 37 sind jeweils bestimmte Voreinstellungen verbunden. So sind im in Fig. 7 dargestellten Beispiel die Geolokation 38 des Vereins sowie die dem Verein zugeordneten Kategorien 39 voreingestellt. Ferner sind in der Subplattform beispielsweise Informationen über Zugangsberechtigungen 40 sowie zu weiteren Rechten hinterlegt, die einem Teilnehmer zugeordnet sind. Solche Rechte umfassen beispielsweise das Recht Artikel zu verfassen und in die zentrale Datenbank hochzuladen.

Beim dargestellten Redaktionssystem ist eine Homepage 41 vorgesehen, über welche sich beispielsweise ein Verein präsentieren kann oder auch Informationen für Mitglieder und andere Interessierte bereitstellen kann. Solche Informationen sind beispielsweise Angaben über den Trainingsbetrieb, zu Vorständen, Ansprechpartnern und Trainern, Berichte über Ereignisse im Verein, Hinweise oder links zu Sponsoren etc. Die Homepage kann von einem Berechtigten, beispielsweise dem Schriftführer des betreffenden Vereins, gepflegt werden.

Ein Berechtigter, beispielsweise der Schriftführer 42 des betreffenden Vereins, wählt sich in die Subplattform 37 ein, die seinem Verein zugeordnet ist. Dazu ist eine entsprechende Zulassungsschranke vorgesehen, über welche sich der Schriftführer 42 einwählt und ausweist. Über in der Subplattform 37 hinterlegte Informationen zu Zugangsberechtigungen 40 wird überprüft, ob der Schriftführer 42 berechtigt ist sich in die Subplattform des Vereins einzuwählen und dort Artikel online zu verfassen.

Der Schriftführer verfasst beispielsweise einen Bericht 43 über das letzte Ligaspiel und lädt den Artikel zusammen mit begleitenden Bilder hoch. Durch die entsprechend gewählten Voreinstellungen ist der Bericht 43 automatisch mit einer Information über die Geolokation 38 des Vereins sowie über die dem Verein zugeordneten Kategorien 39 versehen (getaggt). Der getaggte Bericht 43 wird im zentralen Datawarehouse 26 abgelegt.

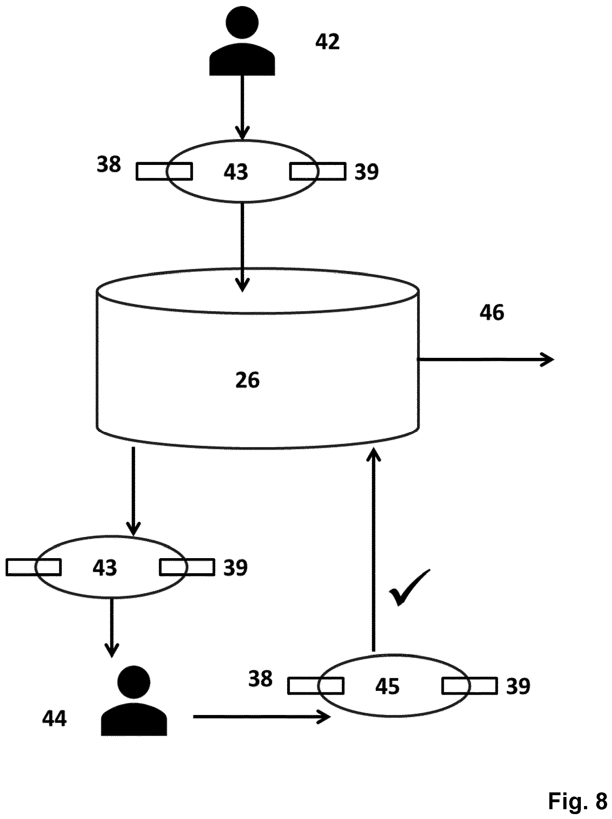

Fig. 8 zeigt schematisch den Freigabeprozess, den ein Artikel oder ein Bericht vor der Veröffentlichung durchläuft.

Wie mit Bezug auf Fig. 7 erläutert, hat ein Schriftführer 42 im Redaktionssystem 36 einen Bericht 43 verfasst, welcher automatisch mit der zugehörigen Geolokation 38 sowie den zugeordneten Kategorien 39 getaggt wurde. Der Bericht 43 wird dann im Redaktionssystem in das Data-Warehouse 26 hochgeladen.

Eine Freigabeinstanz 44 greift anschließend auf den getaggten Bericht 43 zur Durchsicht und Korrektur zu. Als Freigabeinstanz 44 kann beispielsweise die Redaktion des Anzeigenblattes wirken. Sofern das Anzeigenblatt auch die Funktion eines Amtsblatts innehat, kann die Freigabeinstanz 44 auch die zuständige Gemeindeverwaltung sein. Nach der Freigabe wird der freigegebene Bericht 45 wieder im Data-Warehouse 26 hinterlegt. Der freigegebene Bericht 45 ist weiterhin mit Angaben zur Geolokation sowie zu den zugeordneten Kategorien 39 getaggt. Vom Data-Warehouse kann der freigegebene Bericht dann der Veröffentlichung 46 zugeleitet werden.

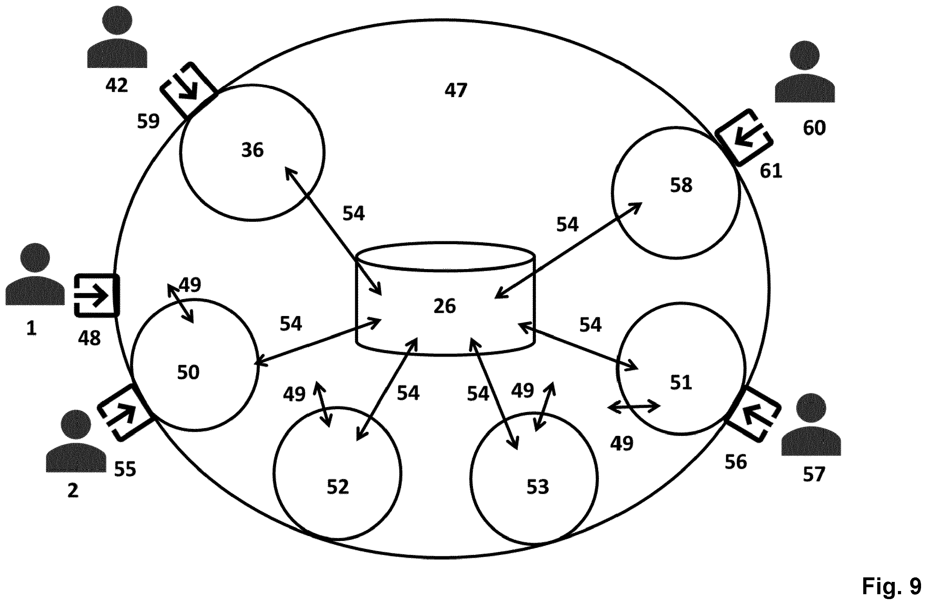

Fig. 9 zeigt ein Ökosystem, wie es für das erfindungsgemäße Verfahren genutzt werden kann. Das Ökosystem umfasst einen abgeschlossenen Datenraum 47, welcher über ein Zugangsportal 48 zugänglich ist. Am Zugangsportal identifiziert sich ein Teilnehmer, beispielsweise ein Nutzer 1, mit einem für ihn spezifischen Zugangscode. Über den Zugangscode kann beispielsweise der Nutzer 1 identifiziert und das ihm zugeordnete Nutzerprofil aufgerufen werden. Die mit dem Nutzer 1 verbundenen Daten, insbesondere das ihm zugeordnete Nutzerprofil, sind im Data-Warehouse 26 hinterlegt. Der Nutzer 1 kann nach dem Betreten des abgeschlossenen Datenraums 47 in diejenigen Subplattformen wechseln, für welche ihm Zugangsberechtigungen erteilt worden sind. Der Übertritt ist in Fig. 9 durch Doppelpfeile 49 symbolisiert. Hier ist keine erneute Anmeldung erforderlich. Beispielsweise können auf der Homepage des Ökosystems aktive Flächen vorgesehen sein. Durch Anklicken der Flächen gelangt der Nutzer dann in die entsprechende Subplattform. Im in Fig. 9 gezeigten Beispiel sind eine Verkaufsplattform 50 sowie eine Nachrichtenplattform 51 vorgesehen. Als weitere beispielhafte Subplattform ist noch ein Vorteilsclub 52 sowie eine Subplattform 53 für spezielle Themen gezeigt. Solche spezielle Themen können beispielsweise eine Spendenplattform oder eine Jobvermittlungsplattform sein. In einem Vorteilsclub können von Anbietern spezielle Aktionen eingestellt werden, beispielsweise Rabattaktionen oder Gewinnspiele.

Die Subplattformen 50 bis 53 werden über das Data-Warehouse zentral mit Daten beschickt und gesteuert. Insbesondere werden die Subplattformen 50 bis 53 mit kategorisierten Informationen beschickt. Dazu können Informationen, die auf den Subplattformen 50 bis 53 veröffentlicht werden, im Data-Warehouse 26 zunächst prozessiert und mit Zusatzinformationen über die Kategorie, in welche die Information eingeordnet wird, sowie ggf. um die Geolokation des Anbieters ergänzt werden. Die kategorisierte Information wird dann in den Subplattformen 50 bis 53 veröffentlicht. Wird die kategorisierte Information dann von einem Nutzer 1 aufgerufen, kann die kategorisierte Information dann zum Aufbau oder einer Modifikation des Nutzerprofils des Nutzers 1 genutzt werden.

Der Datenaustausch zwischen dem zentralen Data-Warehouse 26 und den einzelnen Subplattformen 50 bis 53 ist durch Doppelpfeile 54 dargestellt.

Die einzelnen Subplattformen 50 bis 53 können jeweils nach ihrer Ausrichtung mit bestimmten Funktionen ausgestattet sein. Diese Funktionen werden über eine entsprechende Software gesteuert.

So ist vorgesehen, dass in der Verkaufsplattform 50 von einem Anbieter 2 Anzeigen eingestellt werden können, die beispielsweise ein Warensortiment beschreiben oder auf Verkaufsaktionen hinweisen. Auf der Verkaufsplattform 50 können von den Anbietern auch Online-Shops eingerichtet werden, über welche Waren und Dienstleistungen angeboten bzw. verkauft werden können. Dazu ist entsprechende Software vorgesehen, welche die leichte Einrichtung und Pflege von Online-Shops ermöglicht. Die Anbieter 2 erhalten über entsprechende Portale 55 Zugang zur Verkaufsplattform 50. Der Zugang 55 ist mit bestimmten Rechten versehen, welche beispielsweise das Recht umfassen, Handlungen im Online-Shop auszuführen, wie das Einstellen von Anzeigen oder von Hinweisen auf bestimmte Verkaufsartikel. Ferner sind dem Anbieter 2 bestimmte Kategorien zugeordnet, sodass mit den vom Anbieter eingestellten Anzeigen oder sonstigen Hinweisen automatisch entsprechende kategorisierte Anwenderauswahlkriterien verbunden werden, die wiederum auf Seite der Nutzer für eine Modifikation bzw. einen Aufbau eines Nutzerprofils genutzt werden können. Die Verarbeitung der Daten erfolgt über das zentrale Data-Warehouse 26.

In der Nachrichtensubplattform 51 werden Berichte und Artikel mit bevorzugt lokalen und regionalen Inhalten zu Ausflugszielen und Veranstaltungen, aber beispielsweise auch Ratgeber- und Themenwelten online zur Verfügung gestellt. Es können dabei verschiedene Formate angeboten werden, beispielsweise Amtsblätter und Wochenzeitungen. Die Erstellung der Amtsblätter und der Wochenzeitungen kann dabei auf unterschiedlichen Wegen erfolgen. Insbesondere können sich die Gruppen, welche an der Erstellung von Amtsblättern und Wochenzeitungen beteiligt sind zumindest teilweise unterscheiden.

Die auf der Nachrichtensubplattform 51 verwendeten Berichte und Artikel werden zentral im Data-Warehouse 26 verwaltet und bearbeitet. Die Berichte und Artikel werden dabei jeweils als kategorisierte Information bereitgestellt, sodass sie zur Erstellung bzw. Modifikation von Nutzerprofilen genutzt werden können.

Die Nachrichtensubplattform 51 kann einen Bereich umfassen, in welchem Inhalte kostenfrei bereitgestellt werden. Dazu kann ein Nutzer 1 über das Zugangsportal 48 zur Nachrichtensubplattform 51 gelangen und dort die als Artikel oder Berichte bereitgestellten kategorisierten Informationen lesen. Beim Anklicken der Artikel werden die mit den kategorisierten Informationen verbundenen Kategorien als kategorisierte Nutzerauswahlkriterien in das Nutzerprofil übernommen.

Die Nachrichtenplattform 51 kann auch Inhalte umfassen, welche nur gegen Bezahlung zugänglich sind, beispielsweise in Form eines Abonnements. Für den Zugang zu den kostenpflichtigen Inhalten ist ein Zugangsportal mit Bezahlschranke 56 vorgesehen, an welchem sich ein Abonnent 57 in die Nachrichtenplattform 51 einwählen kann. An der Bezahlschranke identifiziert sich der Abonnent 57. Dazu können übliche Verfahren verwendet werden.

Um weitere Daten über den Nutzer zum Aufbau des ihm zugeordneten Nutzerprofils zu erhalten, können weitere Subplattformen bereitgestellt sein.

In Figur 9 ist beispielhaft ein Vorteilsclub 52 gezeigt. Der Vorteilsclub 52 kann beispielsweise von Nutzern 1 über das Portal 48 und daraufhin einen Wechsel in den Vorteilclub 52 angewählt werden. Im Vorteilsclub wird kategorisierte Information angeboten, beispielsweise in Form digitaler Rabattcoupons oder von Gewinnspielen. Die Rabattcoupons oder Gewinnspiele sind jeweils mit Kategorien getaggt. Die verschiedenen im Vorteilsclub 52 angebotenen Aktionen können auch bestimmten Teilnehmerkreisen zugeordnet werden, d.h. entsprechend getaggt werden. So kann beispielsweise ein Teil der Aktionen für alle Nutzer 1 zugänglich sein sowie ein spezieller Teil der Aktionen nur Abonnenten 57 zugänglich sein. Auch hier werden die Kategorien, mit welchen die einzelnen Aktionen getaggt sind, zum Aufbau bzw. zur Modifikation von Nutzerprofilen genutzt.

An sich können die Subplattformen in großer Vielfalt gestaltet werden. Dabei wird jeweils kategorisierte Information auf der Subplattform bereitgestellt. Die kategorisierte Information kann vom Nutzer beispielsweise über entsprechende Schaltflächen, die in einem geeigneten Browser dargestellt werden, angewählt werden. Wählt ein Nutzer die kategorisierte Information aus, kann dies zum Aufbau bzw. zur Modifikation des Nutzerprofils genutzt werden. Beispielhaft ist in Fig. 9 Subplattform 53 gezeigt. Die Subplattform 53 kann beispielsweise als Spendenplattform ausgestaltet sein, auf welcher Spenden für Projekte mit beispielsweise lokalem Bezug gesammelt werden. Die verschiedenen Aktionen können als kategorisierte Information gestaltet werden. Durch Teilnahme an einer Spendenaktion oder auch indem die entsprechende kategorisierte Information von einem Nutzer angewählt wird, kann die kategorisierte Information zum Aufbau oder einer Modifikation des Nutzerprofils genutzt werden. Der Übersichtlichkeit halber sind in Fig. 9 die Portale über welche kategorisierte Information von den dazu Berechtigten in die Subplattform Vorteilsclub 52 bzw. in die Subplattform Spezialthemen 53 eingestellt werden, nicht dargestellt.

Zur Bereitstellung kategorisierter Information können im abgeschlossenen Datenraum 47 spezielle Subplattformen vorgesehen sein. In Figur 9 sind beispielhaft ein Redaktionssystem 36 und eine Subplattform Gemeindeverwaltung 58 vorgesehen. Auf beiden Subplattformen 36 und 58 wird kategorisierte Information erstellt, die dann beispielsweise in der Subplattform 51 für redaktionelle Beiträge veröffentlicht werden. Dabei können die kategorisierten Informationen in verschiedenen Online-Publikationen veröffentlicht werden, beispielsweise elektronischen Amtsblättern oder elektronischen Wochenzeitungen.

Die kategorisierte Information kann, wie oben beschrieben, im Redaktionssystem 36 von einem Schriftführer 42 erstellt werden, der über ein Portal 59 Zugang zum Redaktionssystem 36 erhält.

Veröffentlichungen der Gemeinden in einem online-Amtsblatt können in einem Subportal 58 erstellt und ggf. mit Kategorien getaggt werden. Dazu erhält ein Mitarbeiter 60 der Gemeinde die entsprechenden Rechte um über das Portal Gemeinde 61 Zugang zur Subplattform Gemeinde zu erhalten um dort Verlautbarungen der Gemeinde zu veröffentlichen.

Werden im Amtsblatt auch redaktionelle Beiträge veröffentlicht, kann der Mitarbeiter 60 auch das Recht ausüben, die entsprechenden Beiträge vor der Veröffentlichung zu kontrollieren und dann freizugeben.

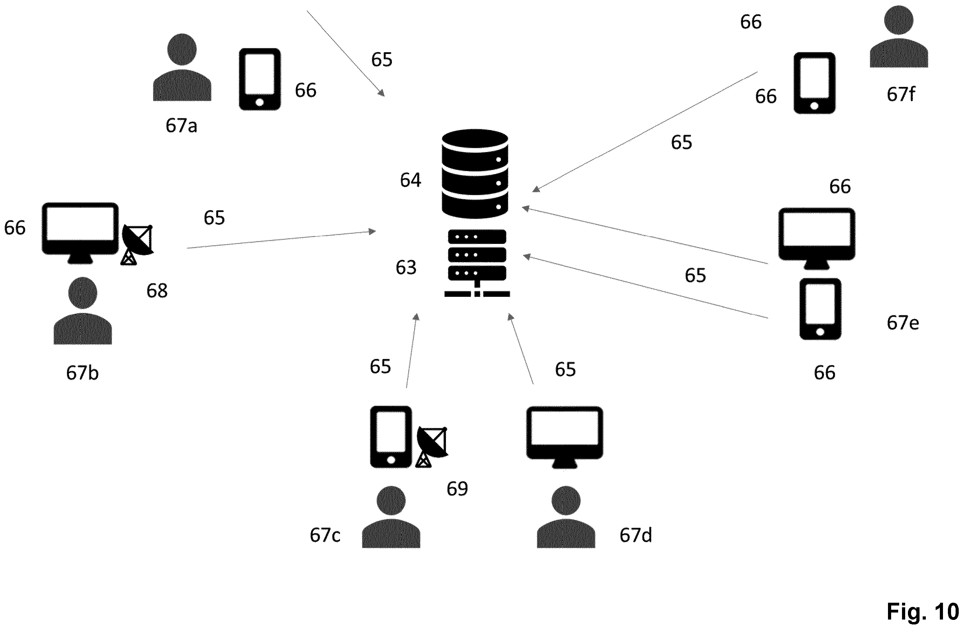

In Figur 10 ist schematisch ein System aus Komponenten dargestellt, mit welchem das erfindungsgemäße Verfahren ausgeübt werden kann. Das System umfasst einen Computer 63 mit welchem die erforderlichen Rechenoperationen durchgeführt werden, um das Verfahren durchzuführen. Als Computer 63 wird ein Webserver verwendet. Dieser wird beispielsweise in Form einer Serverfarm bereitgestellt, wobei die Webserver in Clustern zusammengeschaltet sind. Ferner wird ein Speicher 64 bereitgestellt. Auf dem Speicher 64 wird eine Datenbank abgelegt, insbesondere die Nutzerdaten Bank und die Anbieterdatenbank. Die Komponenten des Speichers sind redundant vorgesehen und jeweils zu Clustern zusammengefasst. Speicher 64 und Webserver 63 werden bevorzugt in Form einer Cloud bereitgestellt. Mit dem Webserver 63 und dem Datenspeicher 64 sind Ein- bzw. Ausgabegeräte über Datenverbindungen 65 verbunden. Die Datenverbindungen 65 können kabelgebunden oder auch drahtlos ausgeführt sein. Die Datenverbindung erfolgt insbesondere über das Internet. Der Datenaustausch erfolgt nach einem üblichen Protokoll, beispielsweise dem TCP-Protokoll. Bevorzugt erfolgt der Datenaustausch verschlüsselt, beispielsweise mittels einer SSL-Verbindung oder einem vergleichbaren Format. Für die Datenein- bzw. -ausgabe sind bei den Teilnehmern internetfähige Schnittstellengeräte 66 als Schnittstellen vorgesehen. Als internetfähige Schnittstellengeräte 66 können beispielsweise PCs, Notebooks, Tablet-Computer oder insbesondere Smartphones vorgesehen sein. Die internetfähigen Schnittstellengeräte sind mit einem Browser für die Datenein- und -ausgabe versehen. Die internetfähigen Schnittstellengeräte 66 sind jeweils bei den Teilnehmern des Verfahrens angeordnet, beispielsweise Vereinen und Institutionen 67a, lokalen Anbietern 67b, wie Einzelhändlern, Konsumenten 67c, Lesern und Abonnenten 67d, in Abteilungen von Rathäusern oder Redaktionen 67e oder auch bei Schriftführern und anderen Autoren 67f, welche Inhalte erstellen. Um den Standort eines Nutzers feststellen zu können, kann bei einem lokalen Anbieter 67b eine Sendeeinheit 68 vorgesehen sein, beispielsweise eine Beacon-Einheit oder ein Bluetooth-Gerät, welche im NFC-Bereich senden (NFC= Near Field Communication). Entsprechend kann auf der Seite der Konsumenten 67c bzw. der Nutzer eine Empfangseinheit 69 vorgesehen sein, welche Signale aus dem NFC-Bereich empfangen kann. Die Kommunikation im NFC-Bereich erfolgt nach gängigen Protokollen. Die Teilnehmer 67 des Verfahrens identifizieren sich nach gängigen Verfahren, beispielsweise gemäß dem OATH2-Protokoll. Die Übermittlung und Ausgabe von Informationen an einen Nutzer kann nach üblichen Verfahren erfolgen, beispielsweise mittels Push-Technologie.

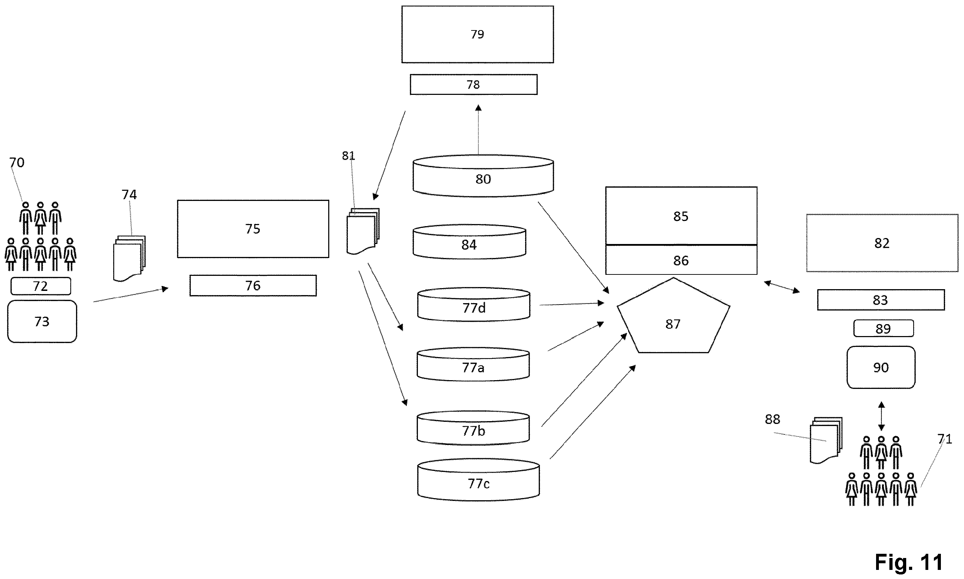

Figur 11 zeigt den Ablauf im erfindungsgemäßen System bei der Erzeugung kategorisierter Information bzw. beim Abrufen kategorisiert Information. Auf der linken Seite der Figur ist dabei der Ablauf gezeigt, wenn von einem Anbieter kategorisierte Informationen eingestellt werden. Auf der rechten Seite der Figur ist der Ablauf dargestellt, wen von einem Nutzer 71 Informationen nachgefragt werden und diese als kategorisierte Informationen ausgegeben werden.

Von den Anbietern 70 wird als Schnittstelle ein internetfähiges Eingabegerät 72 verwendet, das mit einem Browser 73 versehen ist, über welchen Informationen bzw. Daten 74 eingegeben werden können. Als internetfähiges Eingabegerät 72 kann beispielsweise ein Personal-Computer, ein Smartphone oder ein Tablet verwendet werden, das mit einem Bildschirm sowie einer Eingabetastatur ausgestattet ist.

Über ein Content Management System 75 werden die Daten erfasst und weitergeleitet. Das Content Management System 75 (CMS) entspricht einem Computerprogramm, das die vom Anbieter über den Browser 73 auf dem internetfähiges Eingabegerät 72 eingegebene Daten verarbeitet und weiterleitet. Die in elektronischer Form vorliegenden Informationen bzw. Daten 74 entsprechen beispielsweise einer Anzeige, welche Bilder und Text umfasst. Diese Informationen sind zunächst nicht kategorisiert. Diese nicht kategorisierten Informationen 74 werden in Datenbanken 77 abgelegt. Dazu können verschiedene Datenbanken vorgesehen sein, die sich beispielsweise bestimmten Themen oder Bereichen widmen. So ist in Figur 11 beispielhaft eine Artikel-Datenbank 77a vorgesehen, in welcher Zeitungsartikel abgelegt werden. In einer Content-Datenbank 77b in welcher Informationen von beispielsweise Fremdenverkehrsbüros, Veranstaltungshinweise etc. abgelegt sind, Weiter ist eine Produkt-Datenbank 77c vorgesehen, in welcher Produkte bzw. Anzeigen abgelegt sind, die von Anbietern 70, beispielsweise einer Boutique, eingestellt werden. Weiter ist eine Vereinsdatenbank 77d vorgesehen, in welcher Informationen zu bestimmten Vereinen abgelegt sind. Die Information, in welcher Datenbank die Information abgelegt werden soll, kann beispielsweise vom Anwender 70 im Browser 73 eingegeben werden, oder dem Anwender 70 ist eine bestimmte Datenbank zugeordnet, sodass die von ihm eingegebenen Daten/Informationen der Datenbank zugeordnet werden.

Mit Hilfe des CMS 75 werden die eingestellten unstrukturierten Daten in einen Applikationsserver 78 geladen, auf welchem ein Computerprogramm zum Text-Mining 79 läuft. Mit dem Computerprogramm zum Text-Mining 79 wird die eingestellte unstrukturierte Information 74 nach bestimmten Merkmalen, beispielsweise Schlagworten, durchsucht. Das Text-Mining Programm greift dazu auf eine Taxonomie-Datenbank 80 zu in welcher Schlagworte sowie Äquivalente zu diesen Schlagworten abgelegt sind. Werden diese Schlagworte in der eingestellten Information, beispielsweise einem Text, aufgefunden, kann der Information 74 eine bestimmtes Tag zugeordnet werden, sodass kategorisierte Information 81 erhalten wird. Wie oben beschrieben, entspricht ein Tag einem kleinen Datensatz, in welchem die zugehörige Kategorie abgelegt ist. Es wird dann ein strukturierter Datensatz erhalten, welcher wieder in den entsprechenden Datenbanken 77a bis 77c eingeordnet wird. Auch können die eingestellte Datensätze um Kategorien des Anbieterprofils zur Anreicherung der unstrukturierten Daten ergänzt sein.

Zur gezielten Ausgabe der kategorisierten Daten wird ein Nutzer 71 erfasst, indem beispielsweise sein Standort bestimmt wird. Da der Nutzer sich über ein Portal 82 eingewählt hat, welches auf einem Webserver 83 läuft, kann der Nutzer 71 identifiziert werden. Durch Zugriff auf die Nutzer-Datenbank 84 können dann die Kategorien ermittelt werden, die dem Nutzer 71 zugeordnet sind.

Von einem Content-Service 85 werden zur schnelleren Informationsverarbeitung geeignete kategorisierte Informationen 81 aus den Datenbanken 77 in einen Cache-Server 86 geladen. Dort kann beispielsweise eine SQL-Datenbank vorgehalten werden. Dazu werden kategorisierte Informationen 181 von einem API-Builder 87 entsprechend den zum Nutzer 71 vorliegenden Kriterien, beispielsweise seiner Geolokation sowie den ihm zugeordneten Kategorien, ausgewählt. Diese ausgewählten Informationen 88 werden an einen Webserver 83 übertragen, welcher die ausgewählten Informationen dann auf das internetfähige Ausgabegerät 89 übertragen und im Browser 90 angezeigt wird.

**Bezugszeichenliste**

| | | | |
|---|---|---|---|
| 1 | Nutzer | 29 | Übermittlungsweg |
| 2 | Anbieter | 30 | Übermittlungsweg |
| 3 | hyperlokale Information | 31 | Auswahl |
| 4 | Information über Geolokation | 32 | Übermittlungsweg |
| | Anbieter | 33 | Nutzerauswahlkriterium |
| 5 | kategorisiertes Anbieterauswahlkriterium | 34 | Nutzer-ID |
| | | 35 | Nutzerkonto |
| 6 | hyperlokaler Raum | 36 | Redaktionssystem |
| 7 | Radius | 37 | Subplattform |
| 8 | kategorisiertes Nutzerauswahlkriterium | 38 | Geolokation |
| | | 39 | Kategorie |
| 9 | Anbieter | 40 | Berechtigungen |
| 10 | Anbieter | 41 | Homepage |
| 11 | Filter | 42 | Schriftführer |
| 12 | Ausgabegerät | 43 | Bericht |
| 13 | erste Information (Artikel) | 44 | Freigabeinstanz |
| 14 | zweite Information (Angebot) | 45 | freigegebener Bericht |
| 15 | dritte Information (Anzeige) | 46 | Veröffentlichung |
| 16 | Geolokation (Tag) | 47 | abgeschlossener Datenraum |
| 17 | Taxonomie | 48 | Zugangsportal |
| 18 | Kategorie | 49 | Übertritt |
| 19 | erste kategorisierte Information (kategorisierter Artikel) | 50 | Subplattform Verkaufsportal |
| | | 51 | Subplattform redaktionelle Beiträge |
| 20 | zweite kategorisierte Information (kategorisiertes Angebot) | 52 | Subplattform Vorteilsklub |
| | | 53 | Subplattform Spezialthemen |
| 21 | dritte kategorisierte Information (kategorisierte Anzeige) | 54 | Datenaustausch |
| | | 55 | Zugangsportal Anbieter |
| 22 | kategorisiertes Auswahlkriterium | 56 | Zugangsportal Bezahlschranke |
| 23 | Datenquelle | 57 | Abonnent |
| 24 | Datenprofile | 58 | Subplattform Gemeinde |
| 25 | Taxonomie-Software | 59 | Zugangsportal Redaktionssystem |
| 26 | Datawarehouse | 60 | Mitarbeiter Gemeinde |
| 27 | Geolokation Nutzer | 61 | Zugangsportal Gemeinde |
| 28 | Nutzerprofil | 62 | System |
| 63 | Computer | 90 | Browser |
| 64 | Speicher | | |
| 65 | Datenverbindung | | |
| 66 | Internetfähiges Schnittstellengerät | | |
| 67 | Teilnehmer | | |
| 67a | Vereine/Institutionen | | |
| 67b | lokaler Anbieter | | |
| 67c | Konsument | | |
| 67d | Leser/Abonnent | | |
| 67e | Rathaus/Redaktion | | |
| 67f | Schriftführer/Autor | | |
| 68 | Sendeeinheit | | |
| 69 | Empfangseinheit | | |
| 70 | Anbieter | | |
| 71 | Nutzer | | |
| 72 | internetfähiges Eingabegerät | | |
| 73 | Browser | | |
| 74 | Daten/Informationen | | |
| 75 | Content Management System | | |
| 76 | Webserver | | |
| 77a | Artikel-Datenbank | | |
| 77b | Content-Datenbank | | |
| 77c | Produkt-Datenbank | | |
| 78 | Applikations-Server | | |
| 79 | Computerprogramm zum Text-Mining | | |
| 80 | Taxonomie-Datenbank | | |
| 81 | kategorisierte Information | | |
| 82 | Portal | | |
| 83 | Webserver | | |
| 84 | Nutzer-Datenbank | | |
| 85 | Content-Service | | |
| 86 | Cache-Server | | |
| 87 | API-Builder | | |
| 88 | ausgewählte Informationen | | |
| 89 | internetfähiges Ausgabegerät | | |

## Patentansprüche

1. Computerimplementiertes Verfahren zur hyperlokalen Ausgabe von Informationen, wobei
- eine Nutzerprofildatenbank bereitgestellt wird, in welcher zumindest ein Nutzerprofil eines Nutzers hinterlegt ist, wobei das Nutzerprofil zumindest ein kategorisiertes Nutzerauswahlkriterium umfasst;
- eine Anbieterdatenbank bereitgestellt wird, in welcher zumindest ein Anbieterprofil zumindest eines Anbieters hinterlegt ist, wobei das Anbieterprofil zumindest eine Information über die Geolokation des Anbieters sowie zumindest ein kategorisiertes Anbieterauswahlkriterium umfasst;
- dem Anbieterprofil zumindest eine abrufbare hyperlokale Information zugeordnet ist welche mit dem zumindest einen kategorisierten Anbieterkriterium verknüpft ist;
- eine Vorrichtung zur Ermittlung einer Geolokation des Nutzers bereitgestellt wird und die Geolokalisation des Nutzers festgestellt wird;
- das Nutzerprofil des Nutzers aus der Nutzerprofildatenbank ausgewählt wird,
- aus der Anbieterdatenbank eine Menge an zumindest einem geolokalen Anbieter bestimmt wird, wobei der zumindest eine geolokale Anbieter eine Geolokalisation innerhalb eines geolokalen Bereichs aufweist, der durch einen bestimmten Abstand zur Geolokalisation des Nutzers bestimmt ist,
- das Anbieterprofil des zumindest einen bestimmten geolokalen Anbieters mit dem Nutzerprofil des Nutzers verglichen wird,
- in dem Vergleich bestimmt wird, ob in der Menge an Anbieterprofilen ein kategorisiertes Anbieterauswahlkriterium umfasst ist, welches mit einem kategorisierten Nutzerauswahlkriterium des Nutzers korreliert,
- bei Korrelation eines kategorisierten Anbieterauswahlkriterium das kategorisierte Anbieterauswahlkriterium ausgewählt wird, das einem geolokalen Anbieter zugeordnet ist;
- die mit dem ausgewählten Anbieterkriterium verbundene hyperlokale Information an ein Ausgabegerät des Nutzers übermittelt wird, und
- die hyperlokale Information auf dem Ausgabegerät des Nutzers ausgegeben wird.

2. Verfahren nach Anspruch 1, wobei ein abgeschlossener Datenraum vorgegeben ist und Handlungen eines Teilnehmers des Verfahrens innerhalb des Datenraums stattfinden.

3. Verfahren nach Anspruch 2, wobei eine Zulassungsschranke zum abgeschlossenen Datenraum vorgesehen ist, dem Teilnehmer eine Zugangsberechtigung zugeordnet ist und der Teilnehmer mit der Zugangsberechtigung in dem Datenraum eintreten kann.

4. Verfahren nach einem der vorhergehenden Ansprüche, wobei zumindest eine Kategorie vorgesehen ist, eine Information bereitgestellt wird, die Information zumindest einer Kategorie zugeordnet wird, sodass kategorisierte Information erhalten wird.

5. Verfahren nach Anspruch 4, wobei eine Anzahl an Kategorien vorgegeben ist und die Anzahl an Kategorien begrenzt ist.

6. Verfahren nach Anspruch 4 oder 5, wobei eine Hierarchie mit zumindest zwei Ebenen vorgesehen ist und die zumindest eine Kategorie einer Hierarchieebene zugeordnet ist, wobei eine erste Hierarchieebene vorgegeben ist, welche erste Kategorien umfasst, zumindest eine weitere Subhierarchieebene, vorgesehen ist, welche zumindest eine Subkategorie umfasst, und die zumindest eine Subkategorie zumindest einer ersten Kategorien der ersten Hierarchieebene zugeordnet ist.

7. Verfahren nach einem der vorhergehenden Ansprüche, wobei das kategorisierte Anbieterauswahlkriterium erstellt wird, indem einem geolokalen Anbieter zumindest eine Kategorie zugeordnet wird.

8. Verfahren nach einem der Ansprüche 4 bis 7, wobei das Nutzerprofil erstellt wird, indem dem Nutzer eine kategorisierte Information angezeigt wird, der Nutzer die kategorisierte Information auswählt und die mit der kategorisierten Information verbundene Kategorie als kategorisiertes Nutzerauswahlkriterium dem Nutzerprofil zugeordnet wird.

9. Verfahren nach einem der Ansprüche 4 bis 8, wobei die Information ein redaktioneller Beitrag ist.

10. Verfahren nach Anspruch 9, wobei der redaktionelle Beitrag in einem Redaktionssystem erstellt wird, das Teil des abgeschlossenen Datenraums ist und durch das Redaktionssystem dem redaktionellen Beitrag eine Kategorie zugewiesen wird, sodass kategorisierte Information erhalten wird.

11. Verfahren nach Anspruch 10, wobei im Redaktionssystem ein Einwahlsystem vorgesehen ist, mit welchem sich ein Schriftführer in das Redaktionssystem einwählt und dem Schriftführer zumindest eine Kategorie zugewiesen wird.

12. Verfahren nach Anspruch 10 oder 11, wobei das Redaktionssystem zumindest eine Freigabeinstanz umfasst.

13. Verfahren nach einem der vorhergehenden Ansprüche, wobei neben der mit dem ausgewählten Anbieterkriterium verbundenen hyperlokale Information nicht korrelierende Information an das Ausgabegerät des Nutzers übermittelt wird.

14. Verfahren nach Anspruch 13, wobei der Anteil der nicht korrelierenden Information an der Gesamtheit der ausgegebenen Information geringer als 5 % gewählt wird.
